(19) Europäisches Patentamt
European Patent Office
Office européen des brevets

(11) **EP 1 216 537 B1**

(12) **FASCICULE DE BREVET EUROPEEN**

(45) Date de publication et mention de la délivrance du brevet:
**27.07.2011 Bulletin 2011/30**

(21) Numéro de dépôt: **00966248.7**

(22) Date de dépôt: **29.09.2000**

(51) Int Cl.:
**H04L 9/32** (2006.01)

(86) Numéro de dépôt international:
**PCT/FR2000/002717**

(87) Numéro de publication internationale:
**WO 2001/026279 (12.04.2001 Gazette 2001/15)**

(54) **PROCEDE, SYSTEME, DISPOSITIF A PROUVER L'AUTHENTICITE D'UN ENTITE OU L'INTEGRITE D'UN MESSAGE**

VERFAHREN, SYSTEM UND VORRICHTUNG ZUM BEWEIS DER AUTHENTIZITÄT EINER EINHEIT ODER DER INTEGRITÄT EINER NACHRICHT

METHOD, SYSTEM, DEVICE FOR PROVING AUTHENTICITY OF AN ENTITY OR INTEGRITY OF A MESSAGE

(84) Etats contractants désignés:
**AT BE CH CY DE DK ES FI FR GB GR IE IT LI LU MC NL PT SE**

(30) Priorité: **01.10.1999 FR 9912465**
**01.10.1999 FR 9912467**
**01.10.1999 FR 9912468**
**21.07.2000 FR 0009644**

(43) Date de publication de la demande:
**26.06.2002 Bulletin 2002/26**

(60) Demande divisionnaire:
**10183993.4**

(73) Titulaire: **Phentam Dire NV, LLC Dover, DE 19904 (US)**

(72) Inventeurs:
• **GUILLOU, Louis**
**F-35230 Bourgbarre (FR)**
• **QUISQUATER, Jean-Jacques**
**B-1640 Rhode Saint Genese (BE)**

(74) Mandataire: **Kazi, Ilya et al**
**Mathys & Squire LLP**
**120 Holborn**
**London EC1N 2SQ (GB)**

(56) Documents cités:
**EP-A- 0 311 470     EP-A- 0 792 044**
**WO-A-89/11706      WO-A-96/33567**

• **QUISQUATER J -J ET AL: "FAST DECIPHERMENT ALGORITHM FOR RSA PUBLIC-KEY CRYPTOSYSTEM" ELECTRONICS LETTERS, vol. 18, no. 21, 14 octobre 1982 (1982-10-14), pages 905-907, XP000577331 ISSN: 0013-5194**

## Description

La présente invention concerne les procédés, les systèmes ainsi que les dispositifs destinés à prouver l'authenticité d'une entité et/ou l'intégrité et/ou l'authenticité d'un message.

Le brevet EP 0 311 470 B1 dont les inventeurs sont Louis Guillou et Jean-Jacques Quisquater décrit un tel procédé. On y fera ci-après référence en le désignant par les termes : "brevet GQ" ou " procédé GQ". Par la suite on désignera parfois par "GQ2", "invention GQ2" ou "technologie GQ2" la présente invention.

Selon le procédé GQ, une entité appelée " autorité de confiance " attribue une identité à chaque entité appelée " témoin " et en calcule la signature RSA; durant un processus de personnalisation, l'autorité de confiance donne identité et signature au témoin. Par la suite, le témoin proclame : *" Voici mon identité ; j'en connais la signature RSA.* " Le témoin prouve sans la révéler qu'il connaît la signature RSA de son identité. Grâce à la clé publique de vérification RSA distribuée par l'autorité de confiance, une entité appelée " contrôleur " vérifie sans en prendre connaissance que la signature RSA correspond à l'identité proclamée. Les mécanismes utilisant le procédé GQ se déroulent " sans transfert de connaissance ". Selon le procédé GQ, le témoin ne connaît pas la clé privée RSA avec laquelle l'autorité de confiance signe un grand nombre d'identités.

La technologie GQ précédemment décrite fait appel à la technologie RSA. Mais si la technologie RSA dépend bel et bien de la factorisation du module n, cette dépendance n'est pas une équivalence, loin s'en faut, comme le démontrent les attaques dites "multiplicatives" contre les diverses normes de signature numérique mettant en oeuvre la technologie RSA.

L'objectif de la technologie GQ2 est double : d'une part, améliorer les performances par rapport à la technologie RSA ; d'autre part, éviter les problèmes inhérents à la technologie RSA. La connaissance de la clé privée GQ2 est équivalente à la connaissance de la factorisation du module n. Toute attaque au niveau des triplets GQ2 se ramène à la factorisation du module n : il y a cette fois équivalence. Avec la technologie GQ2, la charge de travail est réduite, tant pour l'entité qui signe ou qui s'authentifie que pour celle qui contrôle. Grâce à un meilleur usage du problème de la factorisation, tant en sécurité qu'en performance, la technologie GQ2 évite les inconvénients présentés par la technologie RSA.

Le procédé GQ met en oeuvre des calculs modulo des nombres de 512 bits ou davantage. Ces calculs concernent des nombres ayant sensiblement la même taille élevés à des puissances de l'ordre de $2^{16} + 1$. Or les infrastructures microélectroniques existantes, notamment dans le domaine des cartes bancaires, font usage de microprocesseurs auto-programmables monolithiques dépourvus de coprocesseurs arithmétiques. La charge de travail liée aux multiples opérations arithmétiques impliquées par des procédés tels que le procédé GQ, entraîne des temps de calcul qui dans certains cas s'avèrent pénalisant pour les consommateurs utilisant des cartes bancaires pour acquitter leurs achats. Il est rappelé ici, qu'en cherchant à accroître la sécurité des cartes de paiement, les autorités bancaires posent un problème particulièrement délicat à résoudre. En effet, il faut traiter deux questions apparemment contradictoires : augmenter la sécurité en utilisant des clés de plus en plus longues et distinctes pour chaque carte tout en évitant que la charge de travail n'entraîne des temps de calcul prohibitifs pour les utilisateurs. Ce problème prend un relief particulier dans la mesure où, en outre, il convient de tenir compte de l'infrastructure en place et des composants microprocesseurs existants.

La technologie GQ2 a pour objet d'apporter une solution à ce problème tout en renforçant la sécurité et l'objet de l'invention est défini par le jeu de revendications.

## Procédé

Plus particulièrement, l'invention concerne un procédé destiné à prouver à une entité contrôleur,

- l'authenticité d'une entité et/ou
- l'intégrité d'un message **M** associé à cette entité.

Cette preuve est établie au moyen de tout ou partie des paramètres suivants ou dérivés de ceux-ci:

- **m** couples de valeurs privées $Q_1, Q_2, ... Q_m$ et publiques $G_1, G_2, ... G_m$ (**m** étant supérieur ou égal à 1),
- un module public **n** constitué par le produit de f facteurs premiers $p_1, P_2, ... p_f$ (**f** étant supérieur ou égal à 2),

Ledit module et lesdites valeurs privées et publiques sont liés par des relations du type :

$$G_i . Q_i^v \equiv 1 . \bmod n \text{ ou } G_i \equiv Q_i^v \bmod n$$

**v** désignant un exposant public de la forme :

$$v = 2^k$$

où **k** est un paramètre de sécurité plus grand que 1.

Lesdites **m** valeurs publiques $G_i$ étant les carrés $g_i^2$ de **m** nombres de base $g_1$, $g_2$, ... $g_m$ distincts inférieurs aux **f** facteurs premiers $p_1$, $p_2$, ... $p_f$ ; lesdits **f** facteurs premiers $p_1$, $p_2$, ... $p_f$ et/ou lesdits **m** nombres de base $g_1$, $g_2$, ... $g_m$ étant produits de telle sorte que les conditions suivantes soient satisfaites.

**Première condition :**

Selon la première condition, chacune des équations :

$$x^v \equiv g_i^2 \bmod n \quad (1)$$

a des solutions en x dans l'anneau des entiers modulo n.

**Deuxième condition :**

Selon la deuxième condition, dans le cas où $G_i \equiv Q_i^v \bmod n$, parmi les **m** nombres $q_i$ obtenus en élevant $Q_i$ au carré modulo n, k-1 fois de rang, l'un d'entre eux est différent de $\pm$ $g_i$ (c'est-à-dire est non trivial).

Selon la deuxième condition, dans le cas où $G_i . Q_i^v \equiv 1 \bmod n$, parmi les **m** nombres $q_i$ obtenus en élevant l'inverse de $Q_i$ modulo n au carré modulo n, k-1 fois de rang, l'un d'entre eux est différent de $\pm$ $g_i$ (c'est-à-dire est non trivial).

Il est ici précisé que selon une notation courante $\pm$ $g_i$ représente les nombres $g_i$ et $n-g_i$.

**Troisième condition :**

Selon la troisième condition, parmi les **2m** équations :

$$x^2 \equiv g_i \bmod n \quad (2)$$

$$x^2 \equiv - g_i \bmod n \quad (3)$$

au moins l'une d'entre elles a des solutions en x dans l'anneau des entiers modulo **n.**

Le procédé met en oeuvre selon les étapes suivantes une entité appelée témoin disposant des **f** facteurs premiers $p_i$ et/ou des **m** nombres de base $g_i$ et/ou des paramètres des restes chinois des facteurs premiers et/ou du module public **n** et/ou des **m** valeurs privées $Q_i$ et/ou des **f.m** composantes $Q_{i,j}$ ($Q_{i,j} \equiv Q_i \bmod p_j$) des valeurs privées $Q_i$ et de l'exposant public **v.**

Le témoin calcule des engagements **R** dans l'anneau des entiers modulo **n.** Chaque engagement est calculé :

● soit en effectuant des opérations du type

$$R \equiv r^v \bmod n$$

où **r** est un aléa tel que **0 < r < n,**
● soit

●● en effectuant des opérations du type

$$R_i \equiv r_i^{\ v} \bmod p_i$$

où $r_i$ est un aléa associé au nombre premier $p_i$ tel que $0 < r_i < p_i$, chaque $r_i$ appartenant à une collection d'aléas $\{r_1 , r_2 , ... r_f\}$,
●● puis en appliquant la méthode des restes chinois.

Le témoin reçoit un ou plusieurs défis **d.** Chaque défi **d** comporte **m** entiers $d_i$ ci-après appelés défis élémentaires. Le témoin calcule à partir de chaque défi **d** une réponse **D,**

● soit en effectuant des opérations du type :

$$D \equiv r \cdot Q_1^{\ d1} \cdot Q_2^{\ d2} \cdot \ ... \ Q_m^{\ dm} \bmod n$$

● soit

●● en effectuant des opérations du type :

$$D_i \equiv r_i \cdot Q_{i,1}^{\ d1} \cdot Q_{i,2}^{\ d2} \cdot \ ... \ Q_{i,m}^{\ dm} \bmod p_i$$

●● puis en appliquant la méthode des restes chinois.

Ledit procédé est tel qu'il y a autant de réponses **D** que de défis **d** que d'engagements **R.** Chaque groupe de nombres **R, d, D** constitue un triplet noté **{R, d, D}.**

**Cas de la preuve de l'authenticité d'une entité**

Dans une première variante de réalisation le procédé selon l'invention est destiné à prouver l'authenticité d'une entité appelée démonstrateur à une entité appelée contrôleur. Ladite entité démonstrateur comprend le témoin. Lesdites entités démonstrateur et contrôleur exécutent les étapes suivantes:

● **étape 1 : acte d'engagement R**

A chaque appel, le témoin calcule chaque engagement **R** en appliquant le processus spécifié ci-dessus. Le démonstrateur transmet au contrôleur tout ou partie de chaque engagement **R.**

● **étape 2 : acte de défi d**

Le contrôleur, après avoir reçu tout ou partie de chaque engagement **R,** produit des défis **d** en nombre égal au nombre d'engagements **R** et transmet les défis d au démonstrateur.

● **étape 3 : acte de réponse D**

Le témoin calcule des réponses **D** à partir des défis **d** en appliquant le processus spécifié ci-dessus.

● **étape 4 : acte de contrôle**

Le démonstrateur transmet chaque réponse **D** au contrôleur.

**Premier cas : le démonstrateur a transmis une partie de chaque engagement R**

Dans le cas où le démonstrateur a transmis une partie de chaque engagement **R,** le contrôleur, disposant des **m** valeurs publiques $G_1, G_2,$ ... $G_m,$ calcule à partir de chaque défi **d** et de chaque réponse **D** un engagement reconstruit **R'** satisfaisant à une relation du type :

$$R' \equiv G_1^{\ d1} . G_2^{\ d2} . \ldots G_m^{\ dm} . D^v \bmod n$$

ou a une relation du type,

$$R' \equiv D^v / G_1^{\ d1} . G_2^{\ d2} . \ldots G_m^{\ dm} . \bmod n \ .$$

Le contrôleur vérifie que chaque engagement reconstruit **R'** reproduit tout ou partie de chaque engagement **R** qui lui a été transmis,

**Deuxième cas : le démonstrateur a transmis l'intégralité de chaque engagement R**

Dans le cas où le démonstrateur a transmis l'intégralité de chaque engagement **R,** le contrôleur, disposant des **m** valeurs publiques **G$_1$, G$_2$, ... G$_m$,** vérifie que chaque engagement **R** satisfait à une relation du type :

$$R \equiv G_1^{\ d1} . G_2^{\ d2} . \ldots G_m^{\ dm} . D^v \bmod n$$

ou a une relation du type,

$$R \equiv D^v / G_1^{\ d1} . G_2^{\ d2} . \ldots G_m^{\ dm} . \bmod n \ .$$

**Cas de la preuve de l'intégrité d'un message**

Dans une deuxième variante de réalisation susceptible d'être combinée avec la première, le procédé selon l'invention est destiné à prouver à une entité appelée contrôleur l'intégrité d'un message **M** associé à une entité appelée démonstrateur. Ladite entité démonstrateur comprend le témoin.
Lesdites entités démonstrateur et contrôleur exécutent les étapes suivantes:

● **étape 1 : acte d'engagement R**

A chaque appel, le témoin calcule chaque engagement **R** en appliquant le processus spécifié ci-dessus.

● **étape 2 : acte de défi d**

Le démonstrateur applique une fonction de hachage **h** ayant comme arguments le message **M** et tout ou partie de chaque engagement **R** pour calculer au moins un jeton **T.** Le démonstrateur transmet le jeton **T** au contrôleur. Le contrôleur, après avoir reçu un jeton **T,** produit des défis **d** en nombre égal au nombre d'engagements **R** et transmet les défis **d** a u démonstrateur.

● **étape 3 : acte de réponse D**

Le témoin calcule des réponses **D** à partir des défis **d** en appliquant le processus spécifié ci-dessus.

● **étape 4 : acte de contrôle**

Le démonstrateur transmet chaque réponse **D** au contrôleur. Le contrôleur, disposant des m valeurs publiques **G$_1$, G$_2$, ... G$_m$,** calcule à partir de chaque défi **d** et de chaque réponse **D** un engagement reconstruit **R'** satisfaisant à une relation du type :

$$R' \equiv G_1^{\ d1} . G_2^{\ d2} . \ldots G_m^{\ dm} . D^v \bmod n$$

ou à une relation du type :

$$R' \equiv D^v / G_1^{\ d1} . G_2^{\ d2} . ... G_m^{\ dm} . \bmod n$$

Puis le contrôleur applique la fonction de hachage **h** ayant comme arguments le message **M** et tout ou partie de chaque engagement reconstruit **R'** pour reconstruire le jeton **T'.** Puis le contrôleur vérifie que le jeton **T'** est identique au jeton **T** transmis.

**Signature numérique d'un message et preuve de son authenticité**

Dans une troisième variante de réalisation susceptible d'être combinée aux deux précédentes, le procédé selon l'invention 1 est destiné à produire la signature numérique d'un message **M** par une entité appelée entité signataire. Ladite entité signataire comprend le témoin.

**Opération de signature**

Ladite entité signataire exécute une opération de signature en vue d'obtenir un message signé comprenant :

- le message **M,**
- les défis **d** et/ou les engagements **R,**
- les réponses **D.**

Ladite entité signataire exécute l'opération de signature en mettant en oeuvre les étapes suivantes :

● **étape 1 : acte d'engagement R**

A chaque appel, le témoin calcule chaque engagement **R** en appliquant le processus spécifié ci-dessus.

● **étape 2 : acte de défi d**

Le signataire applique une fonction de hachage **h** ayant comme arguments le message **M** et chaque engagement **R** pour obtenir un train binaire. Le signataire extrait de ce train binaire des défis **d** en nombre égal au nombre d'engagements **R.**

● **étape 3 : acte de réponse D**

Le témoin calcule des réponses **D** à partir des défis **d** en appliquant le processus spécifié ci-dessus.

**Opération de contrôle**

Pour prouver l'authenticité du message **M,** une entité, appelée contrôleur, contrôle le message signé. Ladite entité contrôleur disposant du message signé exécute une opération de contrôle en procédant comme suit.

● **cas où le contrôleur dispose des engagements R, des défis d, des réponses D,**

Dans le cas où le contrôleur dispose des engagements **R,** des défis **d,** des réponses **D** le contrôleur vérifie que les engagements **R,** les défis **d** et les réponses **D** satisfont à des relations du type

$$R \equiv G_1^{\ d1} . G_2^{\ d2} . ... G_m^{\ dm} . D^v \bmod n$$

ou à des relations du type :

$$R \equiv D^v / G_1^{\ d1} . G_2^{\ d2} . ... G_m^{\ dm} . \bmod n$$

Puis le contrôleur vérifie que le message **M,** les défis **d** et les engagements **R** satisfont à la fonction de hachage

$$d = h \ (message, R)$$

● **cas où le contrôleur dispose des défis d et des réponses D**

Dans le cas où le contrôleur dispose des défis **d** et des réponses **D**, le contrôleur reconstruit, à partir de chaque défi **d** et de chaque réponse **D,** des engagements **R'** satisfaisant à des relations du type :

$$R' \equiv G_1^{\ d1} . \ G_2^{\ d2} . \ ... \ G_m^{\ dm} . \ D^v \ mod \ n$$

ou à des relations du type :

$$R' \equiv D^v / G_1^{\ d1} . \ G_2^{\ d2} . \ ... \ G_m^{\ dm} . \ mod \ n$$

Puis le contrôleur vérifie que le message **M** et les défis **d** satisfont à la fonction de hachage

$$d = h \ (message, R')$$

● **cas où le contrôleur dispose des engagements R et des réponses D**

Dans le cas où le contrôleur dispose des engagements **R** et des réponses **D,** le contrôleur applique la fonction de hachage et reconstruit **d'**

$$d' = h \ (message, R)$$

Puis, contrôleur vérifie que les engagements **R,** les défis **d'** et les réponses **D,** satisfont à des relations du type :

$$R \equiv G_1^{\ d'1} . \ G_2^{\ d'2} . \ ... \ G_m^{\ d'm} . \ D^v \ mod \ n$$

ou à des relations du type :

$$R \equiv D^v / G_1^{\ d'1} . \ G_2^{\ d'2} . \ ... \ G_m^{\ d'm} . \ mod \ n$$

Système

La présenté invention concerne également un système destiné à prouver à un serveur contrôleur,

- l'authenticité d'une entité et/ou

- l'intégrité d'un message **M** associé à cette entité.

Cette preuve est établie au moyen de tout ou partie des paramètres suivants ou dérivés de ceux-ci:

- **m** couples de valeurs privées $Q_1, Q_2, ... Q_m$ et publiques $G_1, G_2, ... G_m$ (**m** étant supérieur ou égal à 1),
- un module public **n** constitué par le produit de **f** facteurs premiers $p_1, p_2, ... p_f$ (**f** étant supérieur ou égal à 2),

Ledit module et lesdites valeurs privées et publiques sont liés par des relations du type :

$$G_i . Q_i^v \equiv 1 . \bmod n \text{ ou } G_i \equiv Q_i^v \bmod n$$

**v** désignant un exposant public de la forme :

$$v = 2^k$$

où **k** est un paramètre de sécurité plus grand que 1.

Lesdites **m** valeurs publiques $G_i$ étant les carrés $g_i^2$ de **m** nombres de base $g_1, g_2, \dots g_m$ distincts inférieurs aux **f** facteurs premiers $p_1, p_2, \dots p_f$ ; lesdits **f** facteurs premiers $p_1, p_2, \dots p_f$ et/ou lesdits **m** nombres de base $g_1, g_2, \dots g_m$ étant produits de telle sorte que les conditions suivantes soient satisfaites.

**Première condition :**

Selon la première condition, chacune des équations :

$$x^v \equiv g_i^2 \bmod n \quad (1)$$

a des solutions en x dans l'anneau des entiers modulo **n**.

**Deuxième condition :**

Selon la deuxième condition, dans le cas où $G_i \equiv Q_i^v \bmod n$, parmi les **m** nombres $q_i$ obtenus en élevant $Q_i$ au carré modulo n, k-1 fois de rang, l'un d'entre eux est différent de $\pm g_i$ (c'est-à-dire est non trivial).

Selon la deuxième condition, dans le cas où $G_i . Q_i^v \equiv 1 \bmod n$, parmi les **m** nombres $q_i$ obtenus en élevant l'inverse de $Q_i$ modulo n au carré modulo n, k-1 fois de rang, l'un d'entre eux est différent de $\pm g_i$ (c'est-à-dire est non trivial).

Il est ici précisé que selon une notation courante $\pm g_i$ représente les nombres $g_i$ et $n\text{-}g_i$.

**Troisième condition :**

Selon la troisième condition, parmi les **2m** équations :

$$x^2 \equiv g_i \bmod n \quad (2)$$

$$x^2 \equiv - g_i \bmod n \quad (3)$$

au moins l'une d'entre elles a des solutions en x dans l'anneau des entiers modulo **n.**

Ledit système comprend un dispositif témoin, notamment contenu dans un objet nomade se présentant par exemple sous la forme d'une carte bancaire à microprocesseur. Le dispositif témoin comporte une zone mémoire contenant les **f** facteurs premiers $p_i$ et/ou les paramètres des restes chinois des facteurs premiers et/ou le module public **n** et/ou les **m** valeurs privées $Q_i$ et/ou les **f.m** composantes $Q_{i,j}$ ($Q_{i,j} \equiv Q_i \bmod p_j$) des valeurs privées $Q_i$ et l'exposant public **v**. Ledit dispositif témoin comporte aussi :

- des moyens de production d'aléas, ci-après désignés les moyens de production d'aléas du dispositif témoin,
- des moyens de calcul, ci-après désignés les moyens de calcul des engagements **R** du dispositif témoin.

Les moyens de calcul permettent de calculer des engagements **R** dans l'anneau des entiers modulo **n** . Chaque engagement est calculé :

● soit en effectuant des opérations du type

$$\mathbf{R} \equiv \mathbf{r}^{\mathbf{v}} \bmod \mathbf{n}$$

où r est un aléa produit par les moyens de production d'aléas, **r** étant tel que **0 < r < n,**

● soit en effectuant des opérations du type

$$\mathbf{R}_i \equiv \mathbf{r}_i{}^{\mathbf{v}} \bmod \mathbf{p}_i$$

où $\mathbf{r}_i$ est un aléa associé au nombre premier $\mathbf{p}_i$ tel que $\mathbf{0 < r_i < p_i}$, chaque $\mathbf{r}_i$ appartenant à une collection d'aléas $\{\mathbf{r}_1, \mathbf{r}_2, ... \mathbf{r}_f\}$ produits par les moyens de production d'aléas, puis en appliquant la méthode des restes chinois. Ledit dispositif témoin comporte aussi :

- des moyens de réception, ci-après désignés les moyens de réception des défis **d** du dispositif témoin, pour recevoir un ou plusieurs défis **d ;** chaque défi **d** comportant **m** entiers $\mathbf{d}_i$ ci-après appelés défis élémentaires ;
- des moyens de calcul, ci après désignés les moyens de calcul des réponses **D** du dispositif témoin, pour calculer à partir de chaque défi **d** une réponse **D,**

● soit en effectuant des opérations du type :

$$\mathbf{D} \equiv \mathbf{r} . \mathbf{Q}_1{}^{\mathbf{d1}} . \mathbf{Q}_2{}^{\mathbf{d2}} . ... \mathbf{Q}_m{}^{\mathbf{dm}} \bmod \mathbf{n}$$

● soit en effectuant des opérations du type :

$$\mathbf{D}_i \equiv \mathbf{r}_i . \mathbf{Q}_{i,1}{}^{\mathbf{d1}} . \mathbf{Q}_{i,2}{}^{\mathbf{d2}} . ... \mathbf{Q}_{i,m}{}^{\mathbf{dm}} \bmod \mathbf{p}_{i,}$$

puis en appliquant la méthode des restes chinois,

Ledit dispositif témoin comporte aussi des moyens de transmission pour transmettre un ou plusieurs engagements **R** et une ou plusieurs réponses **D.** Il y a autant de réponses **D** que de défis **d** que d'engagements **R.** Chaque groupe de nombres **R, d, D** constitue un triplet noté **{R, d, D}.**

**Cas de la preuve de l'authenticité d'une entité**

Dans une première variante de réalisation le système selon l'invention est destiné à prouver l'authenticité d'une entité appelée démonstrateur à une entité appelée contrôleur,

Ledit système est tel qu'il comporte un dispositif démonstrateur associé à l'entité démonstrateur. Ledit dispositif démonstrateur est interconnecté au dispositif témoin par des moyens d'interconnexion. Il peut se présenter notamment sous la forme de microcircuits logiques dans un objet nomade, par exemple sous la forme d'un microprocesseur dans une carte bancaire à microprocesseur.

Ledit système comporte aussi un dispositif contrôleur associé à l'entité contrôleur. Ledit dispositif contrôleur se présente notamment sous la forme d'un terminal ou d'un serveur distant. Ledit dispositif contrôleur comporte des moyens de connexion pour le connecter électriquement; électromagnétiquement, optiquement ou de manière acoustique, notamment via un réseau de communication informatique, au dispositif démonstrateur ; Ledit système permet d'exécuter les étapes suivantes :

● **étape 1 : acte d'engagement R**

A chaque appel, les moyens de calcul des engagements **R** du dispositif témoin calculent chaque engagement **R** en appliquant le processus spécifié ci-dessus. Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion. Le dispositif démonstrateur comporte aussi des moyens de transmission, ci-après désignés les moyens de transmission du démonstrateur, pour transmettre tout ou partie de chaque engagement **R** au dispositif contrôleur, via les moyens de connexion.

● **étape 2 : acte de défi d**

Le dispositif contrôleur comporte des moyens de production de défis pour produire, après avoir reçu tout ou partie de chaque engagement **R,** des défis **d** en nombre égal au nombre d'engagements **R.** Le dispositif contrôleur comporte aussi des moyens de transmission, ci-après désignés les moyens de transmission du contrôleur, pour transmettre les défis **d** au démonstrateur, via les moyens de connexion.

● **étape 3 : acte de réponse D**

Les moyens de réception des défis **d** du dispositif témoin, reçoivent chaque défi **d** provenant du dispositif démonstrateur, via les moyens d'interconnexion. Les moyens de calcul des réponses **D** du dispositif témoin, calculent les réponses **D** à partir des défis **d** en appliquant le processus spécifié ci-dessus.

● **étape 4 : acte de contrôle**

Les moyens de transmission du démonstrateur transmettent chaque réponse **D** au contrôleur. Le dispositif contrôleur comporte aussi :

- des moyens de calcul, ci-après désignés les moyens de calcul du dispositif contrôleur,
- des moyens de comparaison, ci-après désignés les moyens de comparaison du dispositif contrôleur.

**Premier cas : le démonstrateur a transmis une partie de chaque engagement R**

Dans le cas où les moyens de transmission du démonstrateur ont transmis une partie de chaque engagement **R,** les moyens de calcul du dispositif contrôleur, disposant des **m** valeurs publiques $G_1, G_2, ... G_m$, calculent à partir de chaque défi **d** et de chaque réponse **D** un engagement reconstruit **R'** satisfaisant à une relation du type :

$$\mathbf{R'} \equiv \mathbf{G_1}^{\,d1} \cdot \mathbf{G_2}^{\,d2} \cdot \ ... \ \mathbf{G_m}^{\,dm} \cdot \mathbf{D}^{v} \bmod \mathbf{n}$$

ou à une relation du type,

$$\mathbf{R'} \equiv \mathbf{D}^{v} / \mathbf{G_1}^{\,d1} \cdot \mathbf{G_2}^{\,d2} \cdot \ ... \ \mathbf{G_m}^{\,dm} \cdot \bmod \mathbf{n} \ .$$

Les moyens de comparaison du dispositif contrôleur comparent chaque engagement reconstruit **R'** à tout ou partie de chaque engagement **R** reçu.

**Deuxième cas : le démonstrateur a transmis l'intégralité de chaque engagement R**

Dans le cas où les moyens de transmission du démonstrateur ont transmis l'intégralité de chaque engagement **R,** les moyens de calcul et les moyens de comparaison du dispositif contrôleur, disposant des **m** valeurs publiques $G_1$, $G_2, ... G_m$, vérifient que chaque engagement **R** satisfait à une relation du type :

$$\mathbf{R} \equiv \mathbf{G_1}^{\,d1} \cdot \mathbf{G_2}^{\,d2} \cdot \ ... \ \mathbf{G_m}^{\,dm} \cdot \mathbf{D}^{v} \bmod \mathbf{n}$$

ou à une relation du type,

$$\mathbf{R} \equiv \mathbf{D}^{v} / \mathbf{G_1}^{\,d1} \cdot \mathbf{G_2}^{\,d2} \cdot \ ... \ \mathbf{G_m}^{\,dm} \cdot \bmod \mathbf{n} \ .$$

**Cas de la preuve de l'intégrité d'un message.**

Dans une deuxième variante de réalisation susceptible d'être combinée avec la première, le système selon l'invention est destiné à prouver à une entité appelée contrôleur l'intégrité d'un message **M** associé à une entité appelée démonstrateur. Ledit système est tel qu'il comporte un dispositif démonstrateur associé à l'entité démonstrateur. Ledit dispositif démonstrateur est interconnecté au dispositif témoin par des moyens d'interconnexion. Ledit dispositif démonstrateur peut se présenter notamment sous la forme de microcircuits logiques dans un objet nomade par exemple sous la forme d'un microprocesseur dans une carte bancaire à microprocesseur. Ledit système comporte aussi dispositif contrôleur associé à l'entité contrôleur. Ledit dispositif contrôleur se présente notamment sous la forme d'un terminal ou d'un serveur distant. Ledit dispositif contrôleur comporte des moyens de connexion pour le connecter électriquement; électromagnétiquement, optiquement ou de manière acoustique, notamment via un réseau de communication informatique, au dispositif démonstrateur.

Ledit système exécute les étapes suivantes :

● **étape 1 : acte d'engagement R**

A chaque appel, les moyens de calcul des engagements **R** du dispositif témoin calculent chaque engagement **R** en appliquant le processus spécifié ci-dessus. Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion.

● **étape 2 : acte de défi d**

Le dispositif démonstrateur comporte des moyens de calcul, ci-après désignés les moyens de calcul du démonstrateur, appliquant une fonction de hachage **h** ayant comme arguments le message **M** et tout ou partie de chaque engagement **R,** pour calculer au moins un jeton **T.** Le dispositif démonstrateur comporte aussi des moyens de transmission, ci-après désignés les moyens de transmission du dispositif démonstrateur, pour transmettre chaque jeton **T,** via les moyens de connexion, au dispositif contrôleur. Le dispositif contrôleur comporte aussi des moyens de production de défis pour produire, après avoir reçu le jeton **T,** des défis **d** en nombre égal au nombre d'engagements **R.** Le dispositif contrôleur comporte aussi des moyens de transmission, ci-après désignés les moyens de transmission du contrôleur, pour transmettre les défis **d** au démonstrateur, via les moyens de connexion.

● **étape 3 : acte de réponse D**

Les moyens de réception des défis d du dispositif témoin, reçoivent chaque défi **d** provenant du dispositif démonstrateur, via les moyens d'interconnexion. Les moyens de calcul des réponses **D** du dispositif témoin, calculent les réponses **D** à partir des défis **d** en appliquant le processus spécifié ci-dessus.

● **étape 4 : acte de contrôle**

Les moyens de transmission du démonstrateur transmettent chaque réponse **D** au contrôleur. Le dispositif contrôleur comporte aussi des moyens de calcul, ci-après désignés les moyens de calcul du dispositif contrôleur, disposant des **m** valeurs publiques **G₁, G₂,** ... **Gₘ,** pour d'une part, calculer à partir de chaque défi **d** et de chaque réponse **D** un engagement reconstruit **R'** satisfaisant à une relation du type :

$$\mathbf{R'} \equiv \mathbf{G_1}^{\ d1} \cdot \mathbf{G_2}^{\ d2} \cdot \ \ldots \ \mathbf{G_m}^{\ dm} \cdot \mathbf{D}^v \bmod \mathbf{n}$$

ou à une relation du type :

$$\mathbf{R'} \equiv \mathbf{D}^v / \mathbf{G_1}^{\ d1} \cdot \mathbf{G_2}^{\ d2} \cdot \ \ldots \ \mathbf{G_m}^{\ dm} \cdot \ \bmod \mathbf{n}$$

puis d'autre part, calculer en appliquant la fonction de hachage **h** ayant comme arguments le message **M** et tout ou partie de chaque engagement reconstruit **R',** un jeton **T'.**

Le dispositif contrôleur comporte aussi des moyens de comparaison, ci-après désignés les moyens de comparaison du dispositif contrôleur, pour comparer le jeton calculé **T' au** jeton **T** reçu.

**Signature numérique d'un message et preuve de son authenticité**

Dans une troisième variante de réalisation susceptible d'être combinée avec l'une et/ou l'autre des deux premières, le système selon l'invention est destiné à prouver la signature numérique d'un message **M,** ci-après désigné le message signé, par une entité appelée entité signataire.

Le message signé comprend :

- le message **M,**
- les défis **d** et/ou les engagements **R,**
- les réponses **D** ;

**Opération de signature**

Ledit système est tel qu'il comporte un dispositif signataire associé à l'entité signataire. Ledit dispositif signataire est interconnecté au dispositif témoin par des moyens d'interconnexion et peut se présenter notamment sous la forme de microcircuits logiques dans un objet nomade par exemple sous la forme d'un microprocesseur dans une carte bancaire à microprocesseur.

Ledit système permet d'exécuter les étapes suivantes :

● **étape 1 : acte d'engagement R**

A chaque appel, les moyens de calcul des engagements **R** du dispositif témoin calculent chaque engagement **R** en appliquant le processus spécifié ci-dessus. Le dispositif témoin comporte des moyens de transmission, ci-après désignés les moyens de transmission du dispositif témoin, pour transmettre tout ou partie de chaque engagement **R** au dispositif signataire, via les moyens d'interconnexion.

● **étape 2 : acte de défi d**

Le dispositif signataire comporte des moyens de calcul, ci-après désignés les moyens de calcul du dispositif signataire, appliquant une fonction de hachage **h** ayant comme arguments le message **M** et tout ou partie de chaque engagement **R,** pour calculer un train binaire et extraire de ce train binaire des défis **d** en nombre égal au nombre d'engagements **R.**

● **étape 3 : acte de réponse D**

Les moyens de réception des défis **d** du dispositif témoin, reçoivent chaque défi **d** provenant du dispositif signataire, via les moyens d'interconnexion. Les moyens de calcul des réponses **D** du dispositif témoin, calculent les réponses **D** à partir des défis **d** en appliquant le processus spécifié ci-dessus. Le dispositif témoin comporte des moyens de transmission, ci-après désignés les moyens de transmission du dispositif témoin, pour transmettre les réponses **D** au dispositif signataire, via les moyens d'interconnexion.

**Opération de contrôle**

Pour prouver l'authenticité du message **M,** une entité appelée contrôleur, contrôle le message signé.

Ledit système comporte un dispositif contrôleur associé à l'entité contrôleur. Ledit dispositif contrôleur se présente notamment sous la forme d'un terminal ou d'un serveur distant. Ledit dispositif contrôleur comporte des moyens de connexion pour le connecter électriquement, électromagnétiquement, optiquement ou de manière acoustique, notamment via un réseau de communication informatique, au dispositif signataire.

Le dispositif signataire associé à l'entité signataire comporte des moyens de transmission, ci-après désignés les moyens de transmission du dispositif signataire, pour transmettre au dispositif contrôleur, le message signé, via les moyens de connexion. Ainsi, le dispositif contrôleur dispose d'un message signé comprenant :

- le message **M,**
- les défis **d** et/ou les engagements **R,**
- les réponses **D** ;

Le dispositif contrôleur comporte :

- des moyens de calcul, ci-après désignés les moyens de calcul du dispositif contrôleur,
- des moyens de comparaison, ci-après désignés les moyens de comparaison du dispositif contrôleur.

● **cas où le dispositif contrôleur dispose des engagements R, des défis d, des réponses D,**

Dans le cas où le dispositif contrôleur dispose des engagements **R,** des défis **d,** des réponses **D,** les moyens de calcul et de comparaison du dispositif contrôleur vérifient que les engagements **R,** les défis **d** et les réponses **D** satisfont à des relations du type

$$R \equiv G_1^{\ d1} \cdot G_2^{\ d2} \cdot \ldots G_m^{\ dm} \cdot D^v \bmod n$$

ou à des relations du type :

$$R \equiv D^v / G_1^{\ d1} \cdot G_2^{\ d2} \cdot \ldots G_m^{\ dm} \cdot \bmod n$$

Puis, les moyens de calcul et de comparaison du dispositif contrôleur vérifient que le message **M,** les défis **d** et les engagements **R** satisfont à la fonction de hachage

$$d = h \ (message, R)$$

● **cas où le dispositif contrôleur dispose des défis d et des réponses D**

Dans le cas où le dispositif contrôleur dispose des défis **d** et des réponses **D,** les moyens de calcul du dispositif contrôleur calculent, à partir de chaque défi **d** et de chaque réponse **D,** des engagements **R'** satisfaisant à des relations du type :

$$R' \equiv G_1^{\ d1} \cdot G_2^{\ d2} \cdot \ldots G_m^{\ dm} \cdot D^v \bmod n$$

ou à des relations du type :

$$R' \equiv D^v / G_1^{\ d1} \cdot G_2^{\ d2} \cdot \ldots G_m^{\ dm} \cdot \bmod n$$

Puis, les moyens de calcul et de comparaison du dispositif contrôleur vérifient que le message **M** et les défis **d** satisfont à la fonction de hachage
d = h (message, R')

● **cas où le dispositif contrôleur dispose des engagements R et des réponses D**

Dans le cas où le dispositif contrôleur dispose des engagements **R** et des réponses **D,** les moyens de calcul du dispositif contrôleur appliquent la fonction de hachage et calculent **d'** tel que

$$d' = h \ (message, R)$$

Puis, les moyens de calcul et de comparaison du dispositif contrôleur vérifient que les engagements **R,** les défis **d'** et les réponses **D,** satisfont à des relations du type :

$$R \equiv G_1^{\ d'1} \cdot G_2^{\ d'2} \cdot \ldots G_m^{\ d'm} \cdot D^v \bmod n$$

ou à des relations du type :

$$R \equiv D^v / G_1^{\ d'1} \cdot G_2^{\ d'2} \cdot \ldots G_m^{\ d'm} \cdot \bmod n$$

**Dispositif Terminal**

L'invention concerne aussi un dispositif terminal associé à une entité. Le dispositif terminal se présente notamment sous la forme d'un objet nomade par exemple sous la forme d'une carte bancaire à microprocesseur. Le dispositif terminal est destiné à prouver à un dispositif contrôleur :

- l'authenticité de l'entité et/ou
- l'intégrité d'un message **M** associé à cette entité.

Cette preuve est établie au moyen de tout ou partie des paramètres suivants ou dérivés de ceux-ci:

- **m** couples de valeurs privées $Q_1$, $Q_2$, ... $Q_m$ et publiques $G_1$, $G_2$, ... $G_m$ (**m** étant supérieur ou égal à 1),
- un module public **n** constitué par le produit de **f** facteurs premiers $p_1$, $p_2$, ... $p_f$ (**f** étant supérieur ou égal à 2),

Ledit module et lesdites valeurs privées et publiques sont liés par des relations du type :

$$G_i \cdot Q_i^v \equiv 1 \cdot \bmod n \ \text{ou} \ G_i \equiv Q_i^v \bmod n$$

**v** désignant un exposant public de la forme :

$$v = 2^k$$

où **k** est un paramètre de sécurité plus grand que 1.

Lesdites **m** valeurs publiques $G_i$ étant les carrés $g_i^2$ de **m** nombres de base $g_1$, $g_2$, ... $g_m$ distincts inférieurs aux **f** facteurs premiers $p_1$, $p_2$, ... $p_f$ ; lesdits **f** facteurs premiers $p_1$, $p_2$, ... $p_f$ et/ou lesdits **m** nombres de base $g_1$, $g_2$, ... $g_m$ étant produits de telle sorte que les conditions suivantes soient satisfaites.

**Première condition :**

Selon la première condition, chacune des équations :

$$x^v \equiv g_i^2 \bmod n \quad (1)$$

a des solutions en x dans l'anneau des entiers modulo n.

**Deuxième condition :**

Selon la deuxième condition, dans le cas où $G_i \equiv Q_i^v \bmod n$, parmi les **m** nombres $q_i$ obtenus en élevant $Q_i$ au carré modulo n, k-1 fois de rang, l'un d'entre eux est différent de $\pm g_i$ (c'est-à-dire est non trivial).

Selon la deuxième condition, dans le cas où $G_i \cdot Q_i^v \equiv 1 \bmod n$, parmi les **m** nombres $q_i$ obtenus en élevant l'inverse de $Q_i$ modulo n au carré modulo n, k-1 fois de rang, l'un d'entre eux est différent de $\pm g_i$ (c'est-à-dire est non trivial).

Il est ici précisé que selon une notation courante $\pm g_i$ représente les nombres $g_i$ et $n-g_i$.

**Troisième condition :**

Selon la troisième condition, parmi les **2m** équations :

$$x^2 \equiv g_i \bmod n \quad (2)$$

$$x^2 \equiv -g_i \bmod n \quad (3)$$

au moins l'une d'entre elles a des solutions en x dans l'anneau des entiers modulo **n**.

Ledit dispositif terminal comprend un dispositif témoin comportant une zone mémoire contenant les **f** facteurs premiers $p_i$ et/ou les paramètres des restes chinois des facteurs premiers et/ou le module public **n** et/ou les **m** valeurs privées $Q_i$ et/ou les **f.m** composantes $Q_{i,j}$ ($Q_{i,j} \equiv Q_i$ **mod** $p_j$) des valeurs privées $Q_i$ et l'exposant public **v.**

Ledit dispositif témoin comporte aussi :

- des moyens de production d'aléas, ci-après désignés les moyens de production d'aléas du dispositif témoin,
- des moyens de calcul, ci-après désignés les moyens de calcul des engagements **R** du dispositif témoin, pour calculer des engagements **R** dans l'anneau des entiers modulo **n.**

Chaque engagement est calculé :

● soit en effectuant des opérations du type

$$R \equiv r^{v} \bmod n$$

ou r est un aléa produit par les moyens de production d'aléas, **r** étant tel que **0<r<n,**
● soit en effectuant des opérations du type

$$R_i \equiv r_i^{v} \bmod p_i$$

ou $r_i$ est un aléa associé au nombre premier $p_i$ tel que **0 < $r_i$ < $p_i$** , chaque $r_i$ appartenant à une collection d'aléas **{$r_1$ , $r_2$ , ... $r_f$}** produits par les moyens de production d'aléas, puis en appliquant la méthode des restes chinois.

Le dispositif témoin comporte aussi :

- des moyens de réception, ci-après désignés les moyens de réception des défis **d** du dispositif témoin, pour recevoir un ou plusieurs défis **d ;** chaque défi **d** comportant **m** entiers $d_i$ ci-après appelés défis élémentaires ;
- des moyens de calcul, ci après désignés les moyens de calcul des réponses **D** du dispositif témoin, pour calculer à partir de chaque défi **d** une réponse **D,**

● soit en effectuant des opérations du type :

$$D \equiv r \cdot Q_1^{d1} \cdot Q_2^{d2} \cdot \ldots Q_m^{dm} \bmod n$$

● soit en effectuant des opérations du type :

$$D_i \equiv r_i \cdot Q_{i,1}^{d1} \cdot Q_{i,2}^{d2} \cdot \ldots Q_{i,m}^{dm} \bmod p_i$$

puis en appliquant la méthode des restes chinois.

Ledit dispositif témoin comporte aussi des moyens de transmission pour transmettre un ou plusieurs engagements **R** et une ou plusieurs réponses **D.** Il y a autant de réponses **D** que de défis **d** que d'engagements **R.** Chaque groupe de nombres **R, d, D** constituant un triplet noté **{R, d, D}.**

**Cas de la preuve de l'authenticité d'une entité**

Dans une première variante de réalisation le dispositif terminal selon l'invention est destiné à prouver l'authenticité d'une entité appelée démonstrateur à une entité appelée contrôleur.

Ledit dispositif terminal est tel qu'il comporte un dispositif démonstrateur associé à l'entité démonstrateur. Ledit dispositif démonstrateur est interconnecté au dispositif témoin par des moyens d'interconnexion. Il peut se présenter notamment sous la forme de microcircuits logiques dans un objet nomade par exemple sous la forme d'un microprocesseur dans une carte bancaire à microprocesseur.

Ledit dispositif démonstrateur comporte aussi des moyens de connexion pour le connecter électriquement, électromagnétiquement, optiquement ou de manière acoustique, notamment via un réseau de communication informatique, au dispositif contrôleur associé à l'entité contrôleur. Ledit dispositif contrôleur se présente notamment sous la forme d'un terminal ou d'un serveur distant.

Ledit dispositif terminal permet d'exécuter les étapes suivantes :

● **étape 1 : acte d'engagement R**

A chaque appel, les moyens de calcul des engagements **R** du dispositif témoin calculent chaque engagement **R** en appliquant le processus spécifié ci-dessus.

Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion. Le dispositif démonstrateur comporte aussi des moyens de transmission, ci-après désignés les moyens de transmission du démonstrateur, pour transmettre tout ou partie de chaque engagement **R** au dispositif contrôleur, via les moyens de connexion.

● **étapes 2 et 3 : acte de défi d, acte de réponse D**

Les moyens de réception des défis **d** du dispositif témoin, reçoivent chaque défi **d** provenant du dispositif contrôleur via les moyens de connexion entre le dispositif contrôleur et le dispositif démonstrateur et via les moyens d'interconnexion entre le dispositif démonstrateur et le dispositif témoin. Les moyens de calcul des réponses **D** du dispositif témoin, calculent les réponses **D** à partir des défis **d** en appliquant le processus spécifié ci-dessus.

● **étape 4 : acte de contrôle**

Les moyens de transmission du démonstrateur transmettent chaque réponse **D** au dispositif contrôleur qui procède au contrôle.

**Cas de la preuve de l'intégrité d'un message**

Dans une deuxième variante de réalisation susceptible d'être combinée à la première, le dispositif terminal selon l'invention est destiné à prouver à une entité appelée contrôleur l'intégrité d'un message **M** associé à une entité appelée démonstrateur. Ledit dispositif terminal est tel qu'il comporte un dispositif démonstrateur associé à l'entité démonstrateur, ledit dispositif démonstrateur est interconnecté au dispositif témoin par des moyens d'interconnexion. Il peut se présenter notamment sous la forme de microcircuits logiques dans un objet nomade par exemple sous la forme d'un microprocesseur dans une carte bancaire à microprocesseur. Ledit dispositif démonstrateur comporte des moyens de connexion pour le connecter électriquement, électromagnétiquement, optiquement ou de manière acoustique, notamment via un réseau de communication informatique, au dispositif contrôleur associé à l'entité contrôleur. Ledit dispositif contrôleur se présente notamment sous la forme d'un terminal ou d'un serveur distant.

Ledit dispositif terminal permet d'exécuter les étapes suivantes :

● **étape 1 : acte d'engagement R**

A chaque appel, les moyens de calcul des engagements **R** du dispositif témoin calculent chaque engagement **R** en appliquant le processus spécifié ci-dessus Le dispositif témoin comporte des moyens de transmission, ci-après désignés les moyens de transmission du dispositif témoin, pour transmettre tout ou partie de chaque engagement **R** au dispositif démonstrateur, via les moyens d'interconnexion.

● **étapes 2 et 3 : acte de défi d, acte de réponse D**

Le dispositif démonstrateur comporte des moyens de calcul, ci-après désignés les moyens de calcul du démonstrateur, appliquant une fonction de hachage **h** ayant comme arguments le message **M** et tout ou partie de chaque engagement **R**; pour calculer au moins un jeton **T**. Le dispositif démonstrateur comporte aussi des moyens de transmission, ci-après désignés les moyens de transmission du dispositif démonstrateur, pour transmettre chaque jeton **T,** via les moyens de connexion, au dispositif contrôleur.

Ledit dispositif contrôleur produit, après avoir reçu le jeton **T,** des défis **d** en nombre égal au nombre d'engagements **R.**

Les moyens de réception des défis **d** du dispositif témoin, reçoivent chaque défi **d** provenant du dispositif contrôleur via les moyens de connexion entre le dispositif contrôleur et le dispositif démonstrateur et via les moyens d'interconnexion entre le dispositif démonstrateur et le dispositif témoin. Les moyens de calcul des réponses **D** du dispositif témoin calculent les réponses **D** à partir des défis **d** en appliquant le processus spécifié ci-dessus.

● **étape 4 : acte de contrôle**

Les moyens de transmission du démonstrateur transmettent chaque réponse **D** au dispositif contrôleur qui procède au contrôle.

**Signature numérique d'un message et preuve de son authenticité**

Dans une troisième variante de réalisation susceptible d'être combinée avec l'une ou l'autre des deux premières, le dispositif terminal selon l'invention est destiné à produire la signature numérique d'un message **M,** ci-après désigné le message signé, par une entité appelée entité signataire.
Le message signé comprend :

- le message **M,**
- les défis **d** et/ou les engagements **R,**
- les réponses **D.**

Ledit dispositif terminal est tel qu'il comporte un dispositif signataire associé à l'entité signataire. Ledit dispositif signataire est interconnecté au dispositif témoin par des moyens d'interconnexion. Il peut se présenter notamment sous la forme de microcircuits logiques dans un objet nomade par exemple sous la forme d'un microprocesseur dans une carte bancaire à microprocesseur. Ledit dispositif signataire comporte des moyens de connexion pour le connecter électriquement, électromagnétiquement, optiquement ou de manière acoustique, notamment via un réseau de communication informatique, au dispositif contrôleur associé à l'entité contrôleur. Ledit dispositif contrôleur se présente notamment sous la forme d'un terminal ou d'un serveur distant.

**Opération de signature**

Ledit dispositif terminal permet d'exécuter les étapes suivantes :

● **étape 1 : acte d'engagement R**

A chaque appel, les moyens de calcul des engagements **R** du dispositif témoin calculent chaque engagement **R** en appliquant le processus spécifié ci-dessus. Le dispositif témoin comporte des moyens de transmission, ci-après désignés les moyens de transmission du dispositif témoin, pour transmettre tout ou partie de chaque engagement **R** au dispositif signataire, via les moyens d'interconnexion.

● **étape 2 : acte de défi d**

Le dispositif signataire comporte des moyens de calcul, ci-après désignés les moyens de calcul du dispositif signataire, appliquant une fonction de hachage **h** ayant comme arguments le message **M** et tout ou partie de chaque engagement **R,** pour calculer un train binaire et extraire de ce train binaire des défis **d** en nombre égal au nombre d'engagements **R.**

● **étape 3 : acte de réponse D**

Les moyens de réception des défis **d** du dispositif témoin reçoivent chaque défi **d** provenant du dispositif signataire, via les moyens d'interconnexion. Les moyens de calcul des réponses **D** du dispositif témoin, calculent les réponses **D** à partir des défis **d** en appliquant le processus spécifié ci-dessus. Le dispositif témoin comporte des moyens de transmission, ci-après désignés les moyens de transmission du dispositif témoin, pour transmettre les réponses **D** au dispositif signataire, via les moyens d'interconnexion.

**Dispositif contrôleur**

L'invention concerne aussi un dispositif contrôleur. Le dispositif contrôleur peut se présenter notamment sous la forme d'un terminal ou d'un serveur distant associé à une entité contrôleur. Le dispositif contrôleur est destiné à contrôler :

- l'authenticité d'une entité et/ou
- l'intégrité d'un message **M** associé à cette entité,

Cette preuve est établie au moyen de tout ou partie des paramètres suivants ou dérivés de ceux-ci:

- **m** couples de valeurs publiques $G_1, G_2, ... G_m$ (**m** étant supérieur ou égal à 1),
- un module public **n** constitué par le produit de **f** facteurs premiers $p_1, p_2, ... p_f$ (**f** étant supérieur ou égal à 2) inconnus du dispositif contrôleur et de l'entité contrôleur associé.

Ledit module et lesdites valeurs privées et publiques sont liés par des relations du type :

$$G_i . Q_i^v \equiv 1 . \mathbf{mod\ n} \ \text{ou}\ G_i \equiv Q_i^v \mathbf{mod\ n}$$

**v** désignant un exposant public de la forme :

$$v = 2^k$$

Lesdites **m** valeurs publiques $G_i$ étant les carrés $g_i^2$ de **m** nombres de base $g_1, g_2, ... g_m$ distincts inférieurs aux **f** facteurs premiers $p_1, p_2, ... p_f$ ; lesdits **f** facteurs premiers $p_1, p_2, ... p_f$ et/ou lesdits **m** nombres de base $g_1, g_2, ... g_m$ étant produits de telle sorte que les conditions suivantes soient satisfaites.

**Première condition :**

Selon la première condition, chacune des équations :

$$x^v \equiv g_i^2 \mathbf{mod\ n} \quad (1)$$

a des solutions en x dans l'anneau des entiers modulo **n**.

**Deuxième condition :**

Selon la deuxième condition, dans le cas où $G_i \equiv Q_i^v$ **mod n**, parmi les **m** nombres $q_i$ obtenus en élevant $Q_i$ au carré modulo n, k-1 fois de rang, l'un d'entre eux est différent de $\pm g_i$ (c'est-à-dire est non trivial).
Selon la deuxième condition, dans le cas où $G_i . Q_i^v \equiv 1$ **mod n**, parmi les **m** nombres $q_i$ obtenus en élevant l'inverse de $Q_i$ modulo n au carré modulo n, k-1 fois de rang, l'un d'entre eux est différent de $\pm g_i$ (c'est-à-dire est non trivial).
Il est ici précisé que selon une notation courante $\pm g_i$ représente les nombres $g_i$ et $n\text{-}g_i$.

**Troisième condition :**

Selon la troisième condition, parmi les **2m** équations :

$$x^2 \equiv g_i \mathbf{mod\ n} \quad (2)$$

$$x^2 \equiv - g_i \mathbf{mod\ n} \quad (3)$$

au moins l'une d'entre elles a des solutions en x dans l'anneau des entiers modulo **n.**

**Cas de la preuve de l'authenticité d'une entité**

Dans une première variante de réalisation le dispositif contrôleur selon l'invention est destiné à prouver l'authenticité d'une entité appelée démonstrateur à une entité appelée contrôleur.

Ledit dispositif contrôleur comporte des moyens de connexion pour le connecter électriquement, électromagnétiquement, optiquement ou de manière acoustique, notamment via un réseau de communication informatique, à un dispositif démonstrateur associée à l'entité démonstrateur.

Ledit dispositif contrôleur permet d'exécuter les étapes suivantes :

● **étapes 1 et 2 : acte d'engagement R, acte de défi d**

Ledit dispositif contrôleur comporte aussi des moyens de réception de tout ou partie des engagements **R** provenant du dispositif démonstrateur, via les moyens de connexion.

Le dispositif contrôleur comporte des moyens de production de défis pour produire, après avoir reçu tout ou partie de chaque engagement **R,** des défis **d** en nombre égal au nombre d'engagements **R,** chaque défi **d** comportant **m** entiers **d$_i$** ci-après appelés défis élémentaires.

Le dispositif contrôleur comporte aussi des moyens de transmission, ci-après désignés les moyens de transmission du contrôleur, pour transmettre les défis **d** au démonstrateur, via les moyens de connexion.

● **étapes 3 et 4 : acte de réponse D, acte de contrôle**

Ledit dispositif contrôleur comporte aussi :

- des moyens de réception des réponses **D** provenant du dispositif démonstrateur, via les moyens de connexion
- des moyens de calcul, ci-après désignés les moyens de calcul du dispositif contrôleur,
- des moyens de comparaison, ci-après désignés les moyens de comparaison du dispositif contrôleur.

**Premier cas : le démonstrateur a transmis une partie de chaque engagement R**

Dans le cas où les moyens de réception du dispositif contrôleur ont reçus une partie de chaque engagement **R,** les moyens de calcul du dispositif contrôleur, disposant des **m** valeurs publiques **G$_1$, G$_2$, ... G$_m$**, calculent à partir de chaque défi **d** et de chaque réponse **D** un engagement reconstruit **R'** satisfaisant à une relation du type :

$$R' \equiv G_1^{\,d1} \cdot G_2^{\,d2} \cdot \ldots G_m^{\,dm} \cdot D^v \bmod n$$

ou à une relation du type,

$$R' \equiv D^v / G_1^{\,d1} \cdot G_2^{\,d2} \cdot \ldots G_m^{\,dm} \cdot \bmod n \;,$$

Les moyens de comparaison du dispositif contrôleur comparent chaque engagement reconstruit **R'** à tout ou partie de chaque engagement **R** reçu.

**Deuxième cas : le démonstrateur a transmis l'intégralité de chaque engagement R**

Dans le cas où les moyens de réception du dispositif contrôleur ont reçus l'intégralité de chaque engagement **R,** les moyens de calcul et les moyens de comparaison du dispositif contrôleur, disposant des **m** valeurs publiques **G$_1$, G$_2$, ... G$_m$**, vérifient que chaque engagement **R** satisfait à une relation du type :

$$R \equiv G_1^{\,d1} \cdot G_2^{\,d2} \cdot \ldots G_m^{\,dm} \cdot D^v \bmod n$$

ou à une relation du type,

$$R \equiv D^{v} / G_1{}^{d1} . G_2{}^{d2} . ... G_m{}^{dm} . \bmod n .$$

### Cas de la preuve de l'intégrité d'un message

Dans une deuxième variante de réalisation susceptible d'être combinée avec la première, le dispositif contrôleur selon l'invention est destiné à prouver l'intégrité d'un message **M** associé à une entité appelée démonstrateur. Ledit dispositif contrôleur comporte des moyens de connexion pour le connecter électriquement, électromagnétiquement, optiquement ou de manière acoustique, notamment via un réseau de communication informatique, à un dispositif démonstrateur associée à l'entité démonstrateur.

Ledit dispositif contrôleur permet d'exécuter les étapes suivantes :

● **étapes 1 et 2 : acte d'engagement R, acte de défi d**

Ledit dispositif contrôleur comporte aussi des moyens de réception de jetons **T** provenant du dispositif démonstrateur, via les moyens de connexion. Le dispositif contrôleur comporte des moyens de production de défis pour produire, après avoir reçu le jeton **T,** des défis d en nombre égal au nombre d'engagements **R,** chaque défi **d** comportant **m** entiers **d$_i$** ci-après appelés défis élémentaires. Le dispositif contrôleur comporte aussi des moyens de transmission, ci-après désignés les moyens de transmission du contrôleur, pour transmettre les défis **d** au démonstrateur, via les moyens de connexion.

● **étapes 3 et 4 : acte de réponse D, acte de contrôle**

Ledit dispositif contrôleur comporte des moyens de réception des réponses **D** provenant du dispositif démonstrateur, via les moyens de connexion. Ledit dispositif contrôleur comporte aussi des moyens de calcul, ci-après désignés les moyens de calcul du dispositif contrôleur, disposant des **m** valeurs publiques **G$_1$, G$_2$, ... G$_m$**, pour d'une part, calculer à partir de chaque défi **d** et de chaque réponse **D** un engagement reconstruit **R'** satisfaisant à une relation du type :

$$R' \equiv G_1{}^{d1} . G_2{}^{d2} . ... G_m{}^{dm} . D^{v} \bmod n$$

ou à une relation du type :

$$R' \equiv D^{v} / G_1{}^{d1} . G_2{}^{d2} . ... G_m{}^{dm} . \bmod n$$

puis d'autre part, calculer en appliquant une fonction de hachage **h** ayant comme arguments le message **M** et tout ou partie de chaque engagement reconstruit **R',** un jeton **T'.**

Le dispositif contrôleur comporte aussi des moyens de comparaison, ci-après désignés les moyens de comparaison du dispositif contrôleur, pour comparer le jeton calculé **T'** au jeton **T** reçu.

### Signature numérique d'un message et preuve de son authenticité

Dans une troisième variante de réalisation susceptible d'être combinée avec l'une et/ou l'autre des deux premières, le dispositif contrôleur selon l'invention est destiné à prouver l'authenticité du message **M** en contrôlant, par une entité appelée contrôleur, un message signé.

Le message signé, émis par un dispositif signataire associé à une entité signataire disposant d'une fonction de hachage **h (message, R),** comprend:

- le message **M,**
- des défis **d** et/ou des engagements **R,**
- des réponses **D ;**

### Opération de contrôle

Ledit dispositif contrôleur comporte des moyens de connexion pour le connecter électriquement, électromagnétiquement, optiquement ou de manière acoustique, notamment via un réseau de communication informatique, à un dispositif signataire associée à l'entité signataire. Ledit dispositif contrôleur reçoit le message signé du dispositif signataire, via les moyens de connexion.

Le dispositif contrôleur comporte :

- des moyens de calcul, ci-après désignés les moyens de calcul du dispositif contrôleur,
- des moyens de comparaison, ci-après désignés les moyens de comparaison du dispositif contrôleur.

● **cas où le dispositif contrôleur dispose des engagements R, des défis d, des réponses D,**

Dans le cas où le dispositif contrôleur dispose des engagements **R,** des défis **d,** des réponses **D,** les moyens de calcul et de comparaison du dispositif contrôleur vérifient que les engagements **R,** les défis **d** et les réponses **D** satisfont à des relations du type

$$R \equiv G_1{}^{d1} . G_2{}^{d2} . \ldots G_m{}^{dm} . D^v \bmod n$$

ou à des relations du type :

$$R \equiv D^v / G_1{}^{d1} . G_2{}^{d2} . \ldots G_m{}^{dm} . \bmod n$$

Puis, les moyens de calcul et de comparaison du dispositif contrôleur vérifient que le message **M**, les défis **d** et les engagements **R** satisfont à la fonction de hachage :

$$d = h \, (\text{message}, R)$$

● **cas où le dispositif contrôleur dispose des défis d et des réponses D**

Dans le cas où le dispositif contrôleur dispose des défis **d** et des réponses **D,** les moyens de calcul du dispositif contrôleur calculent, à partir de chaque défi **d** et de chaque réponse **D,** des engagements **R'** satisfaisant à des relations du type :

$$R' \equiv \acute{G}_1{}^{d1} . G_2{}^{d2} . \ldots G_m{}^{dm} . D^v \bmod n$$

ou à des relations du type :

$$R' \equiv D^v / G_1{}^{d1} . G_2{}^{d2} . \ldots G_m{}^{dm} . \bmod n$$

puis, les moyens de calcul et de comparaison du dispositif contrôleur vérifient que le message **M** et les défis **d** satisfont à la fonction de hachage

$$d = h \, (\text{message}, R')$$

● **cas où le dispositif contrôleur dispose des engagements R et des réponses D**

Dans le cas où le dispositif contrôleur dispose des engagements **R** et des réponses **D,** les moyens de calcul du dispositif contrôleur appliquent la fonction de hachage et calculent **d'** tel que

$$d' = h \, (\text{message}, R)$$

Puis, les moyens de calcul et de comparaison du dispositif contrôleur vérifient que les engagements **R,** les défis **d**' et les réponses **D,** satisfont à des relations du type :

$$R \equiv G_1^{\ d'1} \cdot G_2^{\ d'2} \cdot \ldots G_m^{\ d'm} \cdot D^v \bmod n$$

ou à des relations du type :

$$R \equiv D^v / G_1^{\ d'1} \cdot G_2^{\ d'2} \cdot \ldots G_m^{\ d'm} \cdot \bmod n$$

**Description**

Les objectifs des schémas GQ sont l'authentification dynamique d'entités et de messages ainsi que la signature numérique de messages. Ce sont des schémas « sans transfert de connaissance ». Une entité prouve : elle connaît un ou plusieurs nombres privés. Une autre entité contrôle : elle connaît le ou les nombres publics correspondants. L'entité qui prouve veut convaincre l'entité qui contrôle sans révéler le ou les nombres privés, de façon à pouvoir les utiliser autant de fois que de besoin.

Chaque schéma GQ repose sur un module public composé de grands nombres premiers secrets. Un exposant public $v$ et un module public $n$ forment ensemble une clé de vérification $\langle v, n \rangle$ signifiant «élever à la puissance $v$ modulo $n$ » et mise en oeuvre au moyen d'une ou plusieurs équations génériques, toutes du même type, direct : $G \equiv Q^v$ (mod $n$) ou inverse : $G \times Q^v \equiv 1$ (mod $n$). Le type a un effet sur le déroulement des calculs au sein de l'entité qui contrôle, pas au sein de l'entité qui prouve ; en fait, les analyses de sécurité confondent les deux types. Chaque équation générique lie un nombre public $G$ et un nombre privé $Q$ formant ensemble un couple de nombres $\{G, Q\}$. En résumé, chaque schéma GQ met en oeuvre un ou plusieurs couples de nombres $\{G, Q\}$ pour la même clé $\langle v, n \rangle$. Une version classique de schémas GQ, appelée ici GQ1, fait appel à un schéma RSA de signature numérique. La clé de vérification $\langle v, n \rangle$ est alors une clé publique RSA où l'exposant $v$ impair est de préférence un nombre premier. Chaque schéma GQ1 utilise en général un seul couple de nombres $\{G, Q\}$ : le nombre public $G$ est déduit de données d'identification selon un mécanisme de format qui fait partie intégrante du schéma RSA de signature numérique. Le nombre privé $Q$ ou bien son inverse modulo $n$ est une signature RSA des données d'identification. L'entité qui prouve démontre la connaissance d'une signature RSA de ses propres données d'identification et cette preuve ne révèle pas la signature qui reste donc secrète pour être utilisée autant de fois que de besoin.

Les schémas GQ1 mettent généralement en oeuvre deux niveaux de clés : la clé privée de signature RSA est réservée à une autorité accréditant des entités se distinguant les unes des autres par des données d'identification. On dit qu'un tel schéma est « basé sur l'identité ». Ainsi, un émetteur de cartes à puce utilise sa clé privée RSA à l'émission de chaque carte pour calculer un nombre privé $Q$ qu'il inscrit comme clé privée diversifiée dans la carte ; ou encore, un client sur un réseau d'ordinateurs utilise sa clé privée RSA à chaque entrée en session pour calculer un nombre privé Q qui sera la clé privée éphémère du client durant la session. Les entités qui prouvent, cartes à puce ou clients en session, connaissent une signature RSA de leurs données d'identification; elles ne connaissent pas la clé privée RSA qui, dans la hiérarchie des clés, se trouve au niveau immédiatement supérieur. Cependant, une authentification dynamique d'entités par GQ1 avec un module de 768 bits au niveau d'une autorité demande à peu près la même charge de travail qu'une authentification dynamique d'entités par RSA avec un module de 512 bits à trois facteurs premiers au niveau de chaque entité, ce qui permet à l'entité qui prouve d'utiliser la technique des restes chinois en calculant un résultat modulo chacun des facteurs premiers avant de calculer un résultat modulo leur produit.

Toutefois, la hiérarchie de clés entre une autorité et les entités accréditées n'est pas obligatoire. On peut utiliser GQ1 avec un module propre à l'entité qui prouve, ce qui permet d'utiliser la technique des restes chinois pour réduire les charges de travail de l'entité qui prouve, ce qui ne change pas fondamentalement la charge de travail de l'entité qui contrôle, mis à part le fait qu'un module au niveau de l'entité qui prouve peut être plus court qu'un module au niveau de l'autorité, par exemple 512 bits comparés à 768 bits.

Lorsque l'entité connaît les facteurs premiers de son propre module, pourquoi faire appel à un schéma RSA de signature numérique ??

Une autre version de schémas GQ, appelée ici GQ2 élémentaire, fait appel directement au problème de la factorisation d'un module $n$. Dans ce contexte, « directement » signifie « sans faire appel à la signature RSA ». L'objectif de GQ2 est bien de réduire les charges de travail, non seulement de l'entité qui prouve mais aussi de l'entité qui contrôle. L'entité qui prouve démontre la connaissance d'une décomposition de son propre module et cette preuve ne révèle pas la décomposition qui reste donc secrète pour être utilisée autant de fois que de besoin. La sécurité du protocole GQ2 est équivalente à la factorisation du module.

Chaque entité qui prouve dispose de son propre module $n$. Chaque schéma GQ2 met en oeuvre un paramètre

$k$, petit nombre plus grand que 1 fixant un exposant public $v=2^k$, et un ou plusieurs couples de nombres $\{G_1, Q_1\}$ à $\{G_m, Q_m\}$. Chaque nombre public $G_i$ est le carré d'un petit nombre $g_i$ plus grand que 1 et appelé « nombre de base ». Toutes les entités qui prouvent peuvent utiliser le ou les mêmes nombres publics $G_1$ à $G_m$. La factorisation du module $n$ et le ou les nombres privés $Q_1$ à $Q_m$ sont alors au même niveau dans la hiérarchie des clés. <u>Chaque jeu de clés GQ2 élémentaires</u> est défini par deux conditions nécessaires et suffisantes.

- Pour chaque nombre de base, aucune des deux équations $x^2 \equiv \pm g_i$ (mod $n$) n'a de solution en $x$ dans l'anneau des entiers modulo $n$, c'est-à-dire que les nombres $\pm g_i$ sont deux résidus non quadratiques modulo $n$.
- Pour chaque nombre de base, l'équation $x^v \equiv g_i^2$ (mod $n$) où $v = 2^k$ a des solutions en $x$ dans l'anneau des entiers modulo $n$. Le nombre privé $Q_i$ ou son inverse modulo $n$ est n'importe laquelle de ces solutions.

Compte tenu de la deuxième condition, pour que les nombres $\pm g_i$ soient deux résidus non quadratiques modulo $n$, le module $n$ doit comporter au moins deux facteurs premiers congrus à 3 (mod 4) par rapport auxquels le symbole de Legendre de $g_i$ diffère. Par conséquent, tout module composé de facteurs premiers dont aucun ou un seul est congru à 3 (mod 4) ne permet pas d'établir un jeu de clés GQ2 élémentaires, ce qui privilégie les facteurs premiers congrus à 3 (mod 4). Or en prenant au hasard des grands nombres premiers, il s'avère qu'ils sont environ pour moitié congrus à 3 (mod 4) et pour moitié à 1 (mod 4). De ce fait, beaucoup de modules RSA en usage ne permettent pas d'établir des jeux de clés GQ2 élémentaires.

<u>Nous introduisons ici les jeux de clés GQ2 généralisées</u> pour surmonter cette limitation afin de pouvoir utiliser des techniques GQ2 avec n'importe quel module, en particulier, n'importe quel module RSA ; ils reposent sur deux principes nécessaires et suffisants.

<u>Le premier principe</u> reproduit la deuxième condition de GQ2 élémentaire. - Pour chaque nombre de base $g_1$ à $g_m$, l'équation $x^v \equiv g_i^2$ (mod $n$) où $v=2^k$ a des solutions en $x$ dans l'anneau des entiers modulo $n$.

Parce que le nombre privé $Q_i$ ou bien son inverse modulo $n$ est une solution à l'équation, $k$-1 carrés successifs modulo $n$ le transforment en un nombre $q_i$ qui est une racine carrée de $G_i$ dans l'anneau des entiers modulo $n$. Selon que le nombre $q_i$ est égal à l'un des deux nombres $g_i$ ou $n$-$g_i$, ou différent des deux nombres $g_i$ et $n$-$g_i$, nous disons qu'il est trivial ou non. Lorsqu'un nombre $q_i$ est non trivial, $n$ qui divise $q_i^2-g_i^2$ ne divise ni $q_i$-$g_i$ ni $q_i$+$g_i$. Tout nombre $q_i$ non trivial révèle donc une décomposition du module $n$.

$$n = \mathrm{pgcd}(n, q_i-g_i) \times \mathrm{pgcd}(n, q_i+g_i)$$

<u>Le deuxième principe</u> élargit la première condition de GQ2 élémentaire. - Parmi les nombres $q_1$ à $q_m$, au moins un nombre $q_i$ est non trivial.

Observons que si un nombre $q_i$ existe alors que les nombres $\pm g_i$ sont deux résidus non quadratiques dans l'anneau des entiers modulo $n$, le nombre $q_i$ est manifestement non trivial. Ainsi, les jeux de clés GQ2 élémentaires font bien partie des jeux de clés GQ2 généralisées qui permettent d'utiliser n'importe quel module, c'est-à-dire toute composition de grands nombres premiers congrus indifféremment à 3 ou à 1 (mod 4) dont au moins deux sont distincts. Par contre, beaucoup de jeux de clés GQ2 généralisées ne sont pas des jeux de clés GQ2 élémentaires. Chaque jeu de clés GQ2 généralisées est dans l'un des deux cas suivants.

- Lorsque les $2 \times m$ nombres $\pm g_1$ à $\pm g_m$ sont tous des résidus non quadratiques, c'est un jeu de clés GQ2 élémentaires.
- Lorsque parmi les $2 \times m$ nombres $\pm g_1$ à $\pm g_m$, il y a au moins un résidu quadratique, ce n'est pas un jeu de clés GQ2 élémentaires; c'est ce que nous appelons ici un jeu de clés GQ2 complémentaires.

<u>La présente invention porte sur les jeux de clés GQ2 complémentaires,</u> par définition, ces jeux de clés GQ2 généralisées qui ne sont pas élémentaires. Outre les deux principes précédents, un tel jeu doit satisfaire un troisième principe.

**[0177]** - Parmi les $2 \times m$ nombres $\pm g_1$ à $\pm g_m$, il y a au moins un résidu quadratique. Pour appréhender le problème et comprendre la solution que nous en donnons, c'est-à-dire l'invention, analysons d'abord la décomposition du module $n$ révélée par un nombre $q$ non trivial, puis rappelons la technique des restes chinois, puis, la notion de rang dans un corps de Galois CG($p$) ; puis, étudions les fonctions « élever au carré » dans CG($p$) et « prendre une racine carrée » d'un résidu quadratique dans CG($p$) ; enfin, analysons l'applicabilité des trois principes énoncés ci-dessus.

**Analyse des décompositions du module** - De même que le module $n$ se décompose en $f$ facteurs premiers $p_1$ à $p_f$, l'anneau des entiers modulo $n$ se décompose en $f$ corps de Galois CG($p_1$) à CG($p_f$). Dans chaque corps, il y a deux racines carrées de l'unité, à savoir $\pm 1$. Dans l'anneau, il y a donc $2^f$ racines carrées de l'unité. Chaque nombre privé $Q_I$ à $Q_m$ définit un nombre $\Delta_i = q_i / g_i \pmod{n}$ qui est une de ces $2^f$ racines carrées de l'unité dans l'anneau ; en d'autres termes, $n$ divise $\Delta_i^2 - 1$.

- Lorsque $q_i$ est trivial, c'est-à-dire $\Delta_i = \pm 1$, $n$ divise $\Delta_i - 1$ ou bien $\Delta_i + 1$ et donc $\Delta_i$ ne révèle pas de décomposition du module $n$.
- Lorsque $q_i$ est non trivial, c'est-à-dire $\Delta_i \neq \pm 1$, $n$ ne divise ni $\Delta_i - 1$ ni $\Delta_i + 1$ et donc $\Delta_i$ révèle une décomposition, $n = \mathrm{pgcd}(n, \Delta_i - 1) \times \mathrm{pgcd}(n, \Delta_i + 1)$, résultant de la valeur de $\Delta_i$ dans chaque corps : le ou les facteurs premiers divisant $\Delta_i - 1$ d'un côté, celui ou ceux divisant $\Delta_i + 1$ de l'autre.

Examinons les règles de composition multiplicative des nombres $q$. Deux nombres $\{q_1, q_2\}$ donnent un nombre composé $q_1 \times q_2 \pmod{n}$.

- Lorsque $q_1$ est non trivial et $q_2$ trivial, le nombre composé $q_1 \times q_2 \pmod{n}$ est non trivial ; il révèle la même décomposition que $q_1$.
- Lorsque $q_1$ et $q_2$ sont non triviaux et $\Delta_1 = \pm \Delta_2$, le nombre composé $q_1 \times q_2 \pmod{n}$ est trivial ; il ne révèle pas de décomposition.
- Lorsque $q_1$ et $q_2$ sont non triviaux et $\Delta_1 \neq \pm \Delta_2$, le nombre composé $q_1 \times q_2 \pmod{n}$ est non trivial ; il révèle une troisième décomposition.

Trois nombres $\{q_1, q_2, q_3\}$ donnent quatre nombres composés $\{q_1 \times q_2, q_1 \times q_3, q_2 \times q_3, q_1 \times q_2 \times q_3 \pmod{n}\}$, soit un total de sept nombres ; $m$ nombres donnent ainsi $2^m - m - 1$ nombres composés, soit un total de $2^m - 1$ nombres. Considérons un jeu de clés GQ2 généralisées comportant $i$ nombres de base $g_1$ à $g_i$ et $i$ nombres privés $Q_1$ à $Q_i$ donnant $i$ nombres $q_1$ à $q_i$ et donc $i$ nombres $\Delta_1$ à $\Delta_i$ qui sont des racines de l'unité. Cherchons à prendre en compte un autre nombre de base $g_{i+1}$ par un nombre privé $Q_{i+1}$ donnant un nombre $q_{i+1}$ et donc une racine $\Delta_{i+1}$.

- Le total des $2^{i+1} - 1$ nombres comporte autant de nombres non triviaux dans chacun des deux cas suivants.

  - La racine $\Delta_{i+1}$ est triviale et au moins une racine $\Delta_1$ à $\Delta_i$ est non triviale.
  - La racine $\Delta_{i+1}$ est non triviale et figure parmi les $2 \times i$ racines $\pm \Delta_1$ à $\pm \Delta_i$.

- Dans le cas où la racine $\Delta_{i+1}$ est non triviale et ne figure pas parmi les $2 \times i$ racines $\pm \Delta_1$ à $\pm \Delta_i$, chaque nombre composé où figure $q_{i+1}$ est non trivial. Par conséquent, lorsque parmi $m$ nombres $q_1$ à $q_m$, au moins un est non trivial, plus de la moitié du total des $2^m - 1$ nombres sont non triviaux.

Par définition, nous disons que $I < f$ nombres non triviaux $\{q_1, q_2, \ldots q_1\}$ sont <u>indépendants</u> par rapport au module $n$ lorsque chacun des $2^I - I - 1$ nombres composés correspondants est non trivial, c'est-à-dire que, au total, les $2^I - 1$ nombres sont tous non triviaux. Chacun de ces $2^I - 1$ nombres révèle alors une décomposition différente du module $n$.

**[0182]** - Lorsque les $f$ facteurs premiers sont distincts, il y a $2^{f-1} - 1$ décompositions du module $n$. Alors, si $f-1$ nombres $q$ sont indépendants, il y a une correspondance biunivoque entre les $2^{f-1} - 1$ décompositions et un total de $2^{f-1} - 1$ nombres comprenant les $f-1$ nombres indépendants et les $2^{f-1} - f$ nombres composés correspondants.

**Restes chinois** - Soient deux nombres $a$ et $b$ premiers entre eux tels que $0 < a < b$, et deux nombres $X_a$ de 0 à $a-1$ et $X_b$ de 0 à $b-1$ ; il s'agit de déterminer le nombre unique $X$ de 0 à $a \times b - 1$ tel que $X_a \equiv X \pmod{a}$ et $X_b \equiv X \pmod{b}$. Le nombre $\alpha \equiv \{b \pmod{a}\}^{-1} \pmod{a}$ est le paramètre des restes chinois. Voici l'opération élémentaire des restes chinois.

$$x \equiv X_b \pmod{a}$$

$$y = X_a - x \text{ ; si } y \text{ est négatif, remplacer } y \text{ par } y + a$$

$$z \equiv \alpha \times y \pmod{a}$$

$$X = z \times b + X_b$$

En résumé, nous écrivons : $X$ = Restes Chinois $(X_a, X_b)$.

Lorsque $f$ facteurs premiers sont rangés dans l'ordre croissant, du plus petit $p_1$ au plus grand $p_f$, les paramètres des restes chinois peuvent être les suivants (il y en a un de moins que de facteurs premiers, c'est-à-dire $f$-1).

- Le premier paramètre est $\alpha \equiv (p_2 \ (\text{mod } p_1))^{-1} \ (\text{mod } p_1)$.
- Le second paramètre est $\beta \equiv (p_1 \times p_2 \ (\text{mod } p_3))^{-1} \ (\text{mod } p_3)$.
- Le $i$-ième paramètre est $\lambda \equiv (p_1 \times ... \ p_{i-1} \ (\text{mod } p_i))^{-1} \ (\text{mod } p_i)$.
- Et ainsi de suite.

En $f$-1 opérations élémentaires, on établit un nombre $X$ de 0 à $n$-1 à partir de tout jeu de $f$ composantes de $X_1$ à $X_f$ avec $X_j$ de 0 à $p_j$-1 :

- un premier résultat (mod $p_1 \times p_2$) avec le premier paramètre,
- puis, un second résultat (mod $p_1 \times p_2 \times p_3$) avec le second paramètre,
- jusqu'au résultat final (mod $n = p_1 \times p_2 \times ... \ p_f$) avec le dernier paramètre. En résumé, étant donnés les facteurs premiers $p_1$ à $p_f$, chaque élément de l'anneau des entiers modulo $n$ a deux représentations équivalentes :
- $f$ nombres $X_1$ à $X_f$, une composante par facteur premier : $X_j \equiv X \ (\text{mod } p_j)$,
- un nombre $X$ de 0 à $n$-1, $X$ = Restes Chinois $(X_1, X_2, ... \ X_f)$.

**Rang des nombres dans CG($p$)** - Soit un nombre premier impair $p$ et un nombre $a$ plus petit que $p$, c'est-à-dire $0 < a < p$. Par définition, le rang de $a$ par rapport à $p$ est la période de la suite $\{X\}$ définie par $\{x_1 = a$ ; puis, pour $i \geq 1$, $x_{i+1} \equiv a \times x_i \ (\text{mod } p)\}$. Grâce au théorème de Fermat, nous obtenons : $x_{i+p} \equiv a^p \times x_i \equiv a \times x_i \equiv x_{i+1} \ (\text{mod } p)$. Par conséquent, le rang d'un nombre a par rapport à un nombre premier $p$ est $p$-1 ou un diviseur de $p$-1.

Par exemple, lorsque ($p$-1)/2 est un nombre premier impair $p$', le corps de Galois CG($p$) comporte un nombre de rang 1 : c'est 1, un nombre de rang 2 : c'est -1, $p$'-1 nombres de rang $p$' et $p$'-1 nombres de rang $2 \times p$'=$p$-1.

Dans CG($p$), tout nombre de rang $p$-1 est un « générateur ». La dénomination est due au fait que les puissances successives d'un générateur dans CG($p$), c'est-à-dire les termes de la suite $\{X\}$ pour les indices de 1 à $p$-1, forment une permutation de tous les éléments non nuls de CG($p$).

Soit un générateur $y$ de CG($p$). Evaluons le rang du nombre $y^i$ (mod $p$) en fonction de $i$ et de $p$-1. Lorsque $i$ est premier avec $p$-1, c'est $p$-1. Lorsque $i$ divise $p$-1, c'est ($p$-1)/$i$. Dans tous les cas, c'est ($p$-1)/pgcd($p$-1, $i$).

Par définition, la fonction d'Euler $\varphi(n)$ est le nombre de nombres plus petits que n et premiers avec $n$. Dans CG($p$), il y a $\varphi(p$-1) générateurs.

A titre d'illustration, le rang fait bien comprendre les bases du RSA. Le module n est le produit de $f$ facteurs premiers $p_1$ à $p_f$ avec $f \geq 2$. Pour chaque facteur premier $p_j$ de $p_1$ à $p_f$, l'exposant public e doit être premier avec $p_j$-1. Alors, la clé $\langle e, p_j \rangle$ respecte le rang des éléments de CG($p_j$) : elle permute les éléments de $CG(p_j)$ ; il existe un nombre $d_j$, généralement le plus petit possible, tel que $p_j$-1 divise $e \times d_j$-1. La clé $\langle d_j, p_j \rangle$ inverse la permutation des éléments de $CG(p_j)$. Ces f permutations, une dans chaque corps CG($p_1$) à $CG(p_f)$, se traduisent dans l'anneau des entiers modulo $n$ par la permutation RSA résumée par la clé publique $\langle e, n \rangle$. Il existe un nombre d, généralement le plus petit possible, tel que ppcm($p_1$-1, $p_2$-1, ... $p_f$-1) divise $d \times e$-1. Pour chaque facteur premier $p_j$ de $p_1$ à $p_f$, on a $d_j \equiv d \ (\text{mod } p_j$-1). La permutation RSA résumée par la clé publique $\langle e, n \rangle$ est inversée par la clé privée $\langle d, n \rangle$. **Carrés dans CG(p)** - Définissons un nombre $t$ tel que $p$-1 est divisible par $2^t$, mais pas par $2^{t+1}$. Chaque grand nombre premier figure dans une et une seule catégorie : $t = 1$, $t = 2$, $t = 3$, $t = 4$, et ainsi de suite. Si l'on considère un assez grand nombre de nombres premiers successifs, environ un sur deux figure dans la première catégorie où p est congru à 3 (mod 4), un sur quatre dans la deuxième où p est congru à 5 (mod 8), un sur huit dans la troisième où p est congru à 9 (mod 16), un sur seize dans la quatrième où $p$ est congru à 17 (mod 32), et ainsi de suite ; en moyenne, un sur $2^t$ figure dans la $t$-ième catégorie où $p$ est congru à $2^t$+1 (mod $2^{t+1}$). Parce que les nombres x et p-x ont le même carré dans CG($p$), la clé $\langle 2, p \rangle$ ne permute pas CG($p$). La fonction « élever au carré » dans CG($p$) peut se représenter par un graphe orienté où chaque élément non nul du corps trouve sa place. Analysons la structure du graphe en branches et en cycles selon la parité du rang de chaque élément.

- <u>L'élément nul est fixe.</u> C'est 0. Le rang n'est pas défini pour l'élément nul auquel aucun autre élément ne se rattache ; l'élément nul est isolé.
- <u>L'élément unité est fixe.</u> C'est 1, le seul élément de rang 1. Toutes les racines de l'unité dans CG($p$) se trouvent dans la branche se rattachant à 1. Soit $y$ un résidu non quadratique de CG($p$), n'importe lequel ; la clé $\langle (p$-1)/$2^t$, $p \rangle$

transforme y en une racine $2^{t-1}$-ième primitive de -1 notée par $b$ ; en effet, on a $y^{(p-1)/2} \equiv -1$ (mod $p$). Par conséquent, dans CG($p$), les puissances de $b$ pour les exposants de 1 à $2^{t-1}$ sont les $2^{t-1}$ racines de l'unité autres que 1 : elles composent la branche se rattachant à 1.

- <u>Le carré de tout élément de rang pair est un autre élément dont le rang est divisé par deux.</u> Par conséquent, chaque élément de rang pair se place dans une branche ; chaque branche comporte un nombre de rang divisible par deux mais pas par quatre, puis, si $t \geq 2$, deux nombres de rang divisible par quatre mais pas par huit, puis, si $t \geq 3$, quatre nombres de rang divisible par huit mais pas par seize, puis, si $t \geq 4$, huit nombres de rang divisible par seize mais pas par 32, et ainsi de suite. Toutes les branches sont semblables à la branche rattachée à 1 ; les $2^{t-1}$ feuilles de chaque branche sont des résidus non quadratiques ; chaque branche comporte $2^{t-1}$ éléments et se rattache à un élément de rang impair ; il y a $(p-1)/2^t$ branches qui ont toutes la même longueur $t$.

- <u>Le carré de tout élément de rang impair autre que l'élément unité est un autre élément ayant le même rang.</u> La clé $\langle 2, p \rangle$ permute l'ensemble des $(p-1)/2'$ éléments de rang impair. La permutation se décompose en cycles de permutation. Le nombre de cycles dépend de la factorisation de $(p-1)/2'$. Pour chaque diviseur $p'$ de $(p-1)/2'$, il y a un cycle comportant les $\varphi(p')$ éléments de rang $p'$. Rappelons que par définition, la fonction d'Euler $\varphi(p')$ est le nombre de nombres plus petits que $p'$ et premiers avec $p'$. Par exemple lorsque $p'=(p-1)/2'$ est premier, les $p'-1$ nombres de rang $p'$ forment un grand cycle de permutation.

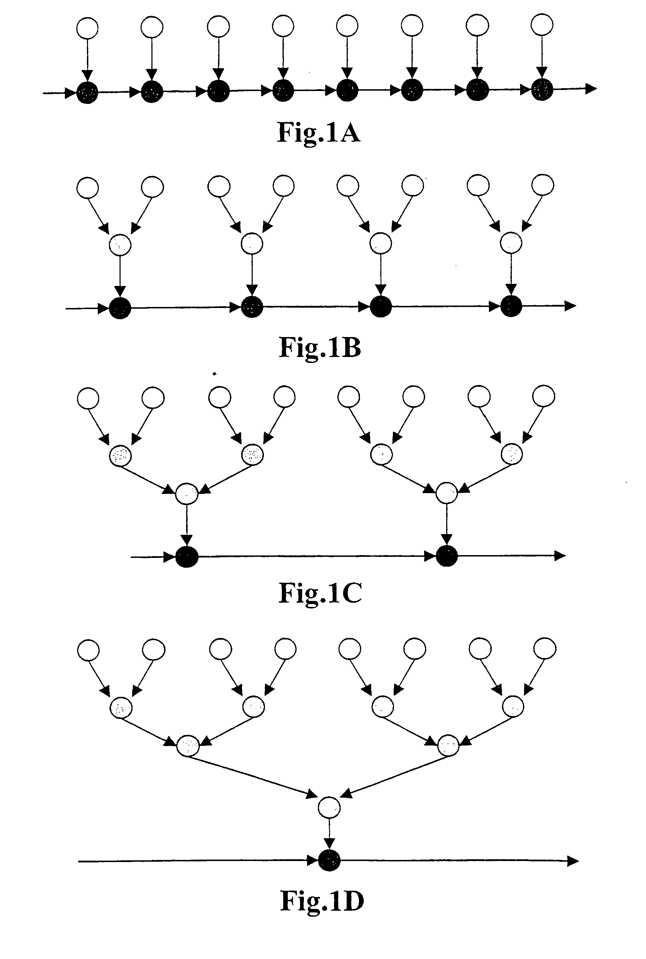

Les figures 1A à 1D illustrent chacune un fragment de graphe pour p congru respectivement à 3 (mod 4), 5 (mod 8), 9 (mod 16) et 17 (mod 32).

- Les feuilles sur les branches sont représentées par des ronds blancs ; ce sont des résidus non quadratiques.
- Les noeuds dans les branches sont représentés par des ronds gris ; ce sont des éléments quadratiques de rang pair.
- Les noeuds dans les cycles sont représentés par des ronds noirs ; ce sont des éléments quadratiques de rang impair.

Racines carrées dans CG($p$) - Sachant que $a$ est un résidu quadratique de CG($p$), voyons comment calculer une solution à l'équation $x^2 \equiv a$ (mod $p$), c'est-à-dire « prendre une racine carrée » dans CG(p). Il y a bien sûr plusieurs façons d'obtenir le même résultat : on pourra consulter les pages 31 à 36 du livre de Henri Cohen, a Course in Computational Algebraic Number Theosy, publié en 1993 par Springer à Berlin comme volume 138 de la série Graduate Texts in Mathematics (GTM 138).

Le nombre s = $(p-1+2')/2^{t+1}$ donne une clé $\langle s, p \rangle$ qui vaut :

$\langle (p+1)/4, p \rangle$ lorsque $p$ est congru à 3 (mod 4),
$\langle (p+3)/8, p \rangle$ lorsque $p$ est congru à 5 (mod 8),
$\langle (p+7)/16, p \rangle$ lorsque $p$ est congru à 9 (mod 16),
$\langle (p+15)/32, p \rangle$ lôrsque $p$ est congru à 17 (mod 32),

et ainsi de suite.

- La clé $\langle s, p \rangle$ transforme tout élément d'un cycle en l'élément précédent dans le cycle. Lorsque a est de rang impair, c'est la solution de rang impair ; nous la nommons w. En effet, dans CG(p), $w^2/a$ vaut $a$ élevé à la puissance $(2 \times (p-1+2')/2^{t+1})-1 = (p-1)/2'$. L'autre solution est de rang pair ; c'est p-w.
- D'une manière générale, la clé $\langle s, p \rangle$ transforme tout résidu quadratique a en une première approximation de solution que nous nommons r. Puisque a est un résidu quadratique, la clé $\langle 2^{t-1}, p \rangle$ transforme certainement $r^2/a$ en 1. Pour se rapprocher d'une racine carrée de $a$, élevons $r^2/a$ à la puissance $2^{t-2}$ (mod $p$) pour obtenir +1 ou -1. La nouvelle approximation reste $r$ si le résultat est +1 ou bien devient $b \times r$ (mod $p$) si le résultat est -1, sachant que $b$ désigne n'importe quelle racine 2'-ième primitive de 1 dans le corps CG($p$). Par conséquent, la clé $\langle 2^{t-2}, p \rangle$ transforme la nouvelle approximation en 1. On peut encore se rapprocher en utilisant la clé $\langle 2^{t-3}, p \rangle$ et en multipliant $par\ b^2$ (mod $p$) s'il le faut, et ainsi de suite.

L'algorithme suivant résout l'équation. Il utilise les nombres $a, b, p, r$ et $t$ définis ci-dessus et deux variables : c représente les corrections successives et w les approximations successives. Au début de l'algorithme, $c = b$ et w= r. A l'issue du calcul, les deux solutions sont w et p-w.

Pour i allant de $t$-2 à 1, répéter la séquence suivante :

- Appliquer la clé $\langle 2^i, p \rangle$ au nombre $w^2/a$ (mod $p$) pour obtenir +1 ou -1 .
- Lorsque l'on obtient -1, remplacer $w$ par $w \times c$ (mod $p$).
- Remplacer c par $c^2$ (mod $p$).

EP 1 216 537 B1

**Applicabilité des principes** - Par définition, nous disons qu'un paramètre k, un nombre de base g et un facteur premier p sont <u>compatibles</u> lorsque l'équation $x^v \equiv g^2$ (mod $p$) où l'exposant $v$ vaut $2^k$ a des solutions en $x$ dans le corps CG($p$). Les nombres $k$ et $g$ sont petits et plus grands que 1. Le nombre p est un grand nombre premier.

- Lorsque $t$ = 1, c'est-à-dire $p \equiv 3$ (mod 4), l'équation a deux solutions.
- Lorsque $t$ = 2, c'est-à-dire $p \equiv 5$ (mod 8), selon le symbole de Legendre de g par rapport à $p$, l'équation a quatre solutions si (g|$p$) = + 1 ; elle n'a pas de solution si (g|p) =-1.
- Lorsque $t$ > 2, c'est-à-dire $p \equiv 1$ (mod 8), soit u le nombre tel que 2" divise le rang du nombre public G = $g^2$ par rapport à p, mais que $2^{u+1}$ ne le divise pas ; par conséquent, u est égal à l'un des nombres de 0 à t-1. L'équation n'a aucune solution *si $u$ > 0 et $k+u$ > t ;* elle a $2^k$ solutions si $k+u \le t$ ; elle a $2^t$ solutions si $u$ = 0 et $k$ > $t$.

Il y a donc deux types de compatibilité selon que $G$ est dans un cycle ou bien en position appropriée dans une branche.

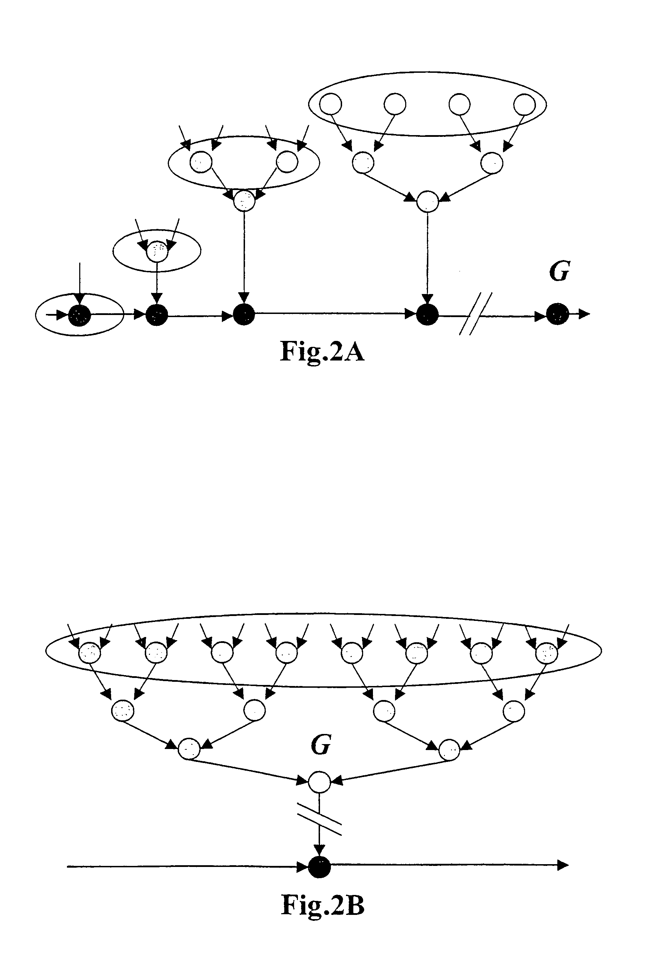

- Lorsque $G$ est dans un cycle, c'est-à-dire $u$ = 0 quelle que soit la valeur de k, il y a une solution de rang impair dans le cycle et des solutions de rang pair disséminées dans $\alpha$ = min($k$, $t$) branches consécutives rattachées au cycle, soit $2^\alpha$ solutions en tout. La figure 2A illustre ce cas avec $k \ge t$ = 3, c'est-à-dire un facteur premier congru à 9 (mod 16), ce qui impose $u$ = 0.
- Lorsque $G$ est en position appropriée dans une branche, c'est-à-dire $u$ > 0 et $u+k \le$ t, il y a $2^k$ solutions, toutes de rang pair et dans la branche. La figure 2B illustre ce cas.

Etant donné un paramètre $k$, il y a donc deux types de facteurs premiers selon que la valeur de $t$ est inférieure à ou bien supérieure ou égale à k.

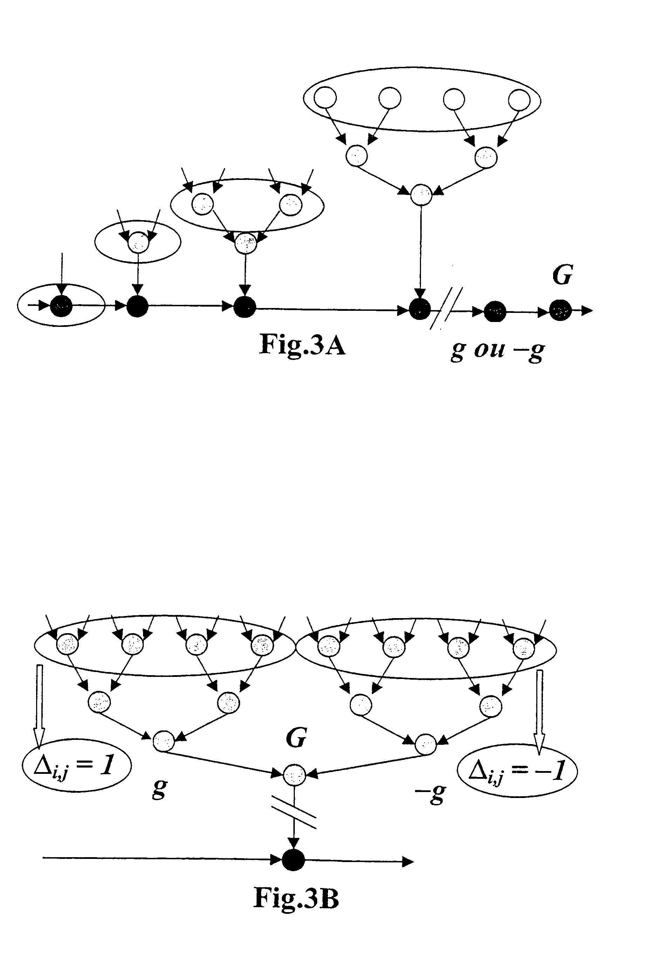

- Pour tout facteur premier p, tel que $t$ < $k$, chaque G$_i$ doit être dans un cycle et il n'y a pas de solution dans la branche rattachée à $G_i$. Définissons un nombre $\Delta_{i,j}$ qui vaut +1 ou -1 selon que g$_i$ ou -g$_i$ est dans le cycle. Il n'y a pas de choix pour aucun des mnombres $\Delta_{l,j}$ à $\Delta_{m,j}$. La figure 3A illustre un cas $t$ < $k$ : $G_i$ est dans un cycle avec un facteur premier $p_j$ congru à 9 (mod 16), c'est-à-dire, $u$ = 0, $t$ = 3 avec $k$ > 3.
- Pour tout facteur premier $p_j$ tel que $t \ge k$, chaque $G_i$ doit être tel que $u+k \le t$, c'est-à-dire; ou bien dans un cycle avec $u$ = 0 ou bien en position appropriée dans une branche avec $1 \le u \le$ t-k. Définissons un nombre $\Delta_{i,j}$ qui vaut +1 ou -1 selon que Q$_{i,j}$ se trouve dans la partie de graphe rattachée à $g_i$ ou à -$g_i$. Il y a le choix pour chacun des $m$ nombres $\Delta_{l,j}$ à $\Delta_{m,j}$ ; chaque nombre $\Delta_{i,j}$ peut être individuellement basculé d'une valeur à l'autre. La figure 3B illustre un cas $t \ge k$ : $G_i$ est dans une branche avec un facteur premier $p_j$ congru à 17 (mod 32), c'est-à-dire, $u$ = 1, $t$ = 4 avec = 3.

Chaque jeu de f composantes {$\Delta_{i,l}$ ... $\Delta_{i,f}$} est une racine carrée de l'unité dans CG($p_j$). Cette racine est triviale ou pas selon que les $f$ composantes sont égales ou pas ; nous disons alors que le jeu de $f$ composantes est constant ou variable, ce qui traduit le fait que le nombre $q_i$ est trivial ou pas. Par conséquent, lorsqu'un nombre $q_i$ est non trivial, le jeu de $f$ composantes {$\Delta_{i,l}$ ... $\Delta_{i,f}$} résume une décomposition du module. Il est donc possible de tester les principes avant de calculer les composantes privées $Q_{i,j}$.

- Lorsqu'un nombre public $G_i$ est dans un cycle pour un facteur premier $p_j$, le nombre $\Delta_{i,j}$ vaut +1 ou -1 selon que $g_i$ ou -$g_i$ est dans le cycle. Lorsque $p_j \equiv 3$ (mod 4), c'est le symbole de Legendre : $\Delta_{i,j} = (g_i|p_j)$.
- Lorsqu'un nombre public $G_i$ est en position appropriée dans une branche pour un facteur premier $p_j$, on peut déterminer la valeur à donner à $\Delta_{i,j}$ avant de calculer la composante privée $Q_{i,j}$.

**Production de jeux de clés** - Etant donné un paramètre $k$, il y a deux stratégies.

- Ou bien le générateur demande f facteurs premiers afin de déterminer m nombres de base. Les premiers nombres premiers : 2, 3, 5, 7, ... sont examinés pour évaluer leur compatibilité avec chacun des f grands facteurs premiers $p_l$ à $p_f$ Bien que g = 2 ne soit pas compatible avec $p \equiv 5$ (mod 8), 2 peut entrer dans la composition d'un nombre de base. En effet, lorsque deux nombres sont en position similaire dans une branche, leur produit est plus près du cycle, tout comme un carré rapproche du cycle. On peut ainsi obtenir un nombre de base en composant des nombres qui individuellement ne conviennent pas.
- Ou bien le générateur demande m nombres de base et des caractéristiques du module telle qu'une taille en bits (par exemple, 512, 768, 1024, 1536, 2048) et un nombre de bits successifs à 1 en poids forts (par exemple, 1, 8, 16, 24, 32) afin de déterminer f ≥ 2 facteurs premiers. Notés par $g_1$ $g_2$ ... $g_m$, les nombres de base figurent généralement parmi les premiers nombres premiers : 2, 3, 5, 7, 11, ... ou bien ce sont des combinaisons des premiers nombres premiers. Faute d'indication contraire, ce sont les $m$ premiers nombres premiers : $g_1$ = 2, $g_2$ = 3, $g_3$ = 5, $g_4$ = 7, ... Notons que $p \equiv 5$ (mod 8) n'est pas compatible avec $g$ = 2. Le module n sera le produit de $f$ facteurs premiers de tailles voisines, à savoir la taille assignée au module divisée par $f$.

*Premier principe* - Le paramètre $k$, chaque facteur premier p allant de $p_1$ à $p_f$ et chaque nombre de base $g$ allant de $g_l$ à $g_m$ doivent être compatibles. Définissons un nombre h tel que 2'' divise le rang de g par rapport à $p$, alors que $2^{h+1}$ ne le divise pas. Pour calculer le nombre $h$, la procédure suivante utilise le symbole de Legendre (g|p) et un nombre b, racine $2^t$-ième primitive de l'unité dans CG(p).

- Si $(g|p)$ = +1 avec $t$ = 1, retourner « $h$ = 0 ».
- Si $(g|p)$ = +1 avec $t$ > 1, appliquer la clé $\langle (p-1 + 2')/2^{t+1}, p)$ à $G$ pour obtenir un résultat appelé *w*.
- Si $w$ = +$g$, retourner « $h$ = 0 ».
- Si $w$ = $p-g$, retourner « $h$ = 1 ».
- Sinon, mettre $c$ à $b$ et pour $i$ allant de t-1 à 2,

  - appliquer la clé $\langle 2', p)$ à w/g *(mod p)* pour obtenir $\pm 1$,
  - si -1, mettre $h$ à $i$ et remplacer w par w$\times$c (mod *p),*
  - remplacer c par $c^2$ (mod $p$).

- Retourner « valeur de $h$ de 2 à $t$-1 ».
- Si (g|p) = -1, retourner « $h = t$ ».

Rappelons que $k,$ g et p sont incompatibles lorsque $u$ > 0 avec k+u > $t$ ; ils sont compatibles lorsque $h$ = 0 ou 1, quelle que soit la valeur de $k,$ et également lorsque k+h $\leq$ $t$+1.

*Second principe* - Les trois procédures suivantes correspondent à différentes implémentations du second principe. Dans certaines implémentations, le second principe peut être renforcé au point d'exiger que chaque nombre $q_1$ à $q_m$ soit non trivial. Le rôle des nombres de base est alors équilibré ; le fait d'équilibrer ou pas le second principe a un effet sur certains aspects de démonstration de la sécurité du schéma. Enfin, lorsqu'il y a $f$ > 2 facteurs premiers distincts, parmi les $m$ nombres {$q_1$ ... $q_m$}, on peut exiger qu'il y ait au moins un sous ensemble de $f$-1 nombres indépendants.

Les trois procédures utilisent $m\times f$ nombres $\delta_{i,j}$ définis comme suit.

- Lorsque $p_j$ est tel que $t < k,$ pour i allant de 1 à m, $\delta_{i,j} = \Delta_{i,j}$, c'est-à-dire +1 si $h_{i,j}$ = 0 et -1 si $h_{i,j}$ 1.
- Lorsque $p_j$ est tel que $t \geq k,$ pour $i$ allant de 1 à m, $\delta_{i,j}$ = 0, ce qui indique que $\Delta_{l,j}$ à $\Delta_{m,j}$ peuvent être choisis en fonction du deuxième principe.

<u>Une première procédure</u> vérifie qu'au moins un jeu {$\delta_{t,l}$ ... $\delta_{t,f}$} est variable ou nul, c'est-à-dire qu'au moins un nombre $q_1$ à $q_m$ est non trivial ou peut être choisi non trivial.

- Pour $i$ allant de 1 à $m$ et $j$ allant de 1 à $f,$

  - si $\delta_{i,j}$ = 0 ou $\neq \delta_{i,l}$, retourner « succès ».

- Retourner « échec ».

<u>Une deuxième procédure</u> vérifie que chaque jeu {$\delta_{i,l}$ ... $\delta_{i,f}$} est variable ou nul, c'est-à-dire que chaque nombre $q_l$ à $q_m$ est non trivial ou peut être choisi non trivial.

- Pour $i$ allant de 1 à $m$,

  - pour $j$ allant de 1 à, $f,$

    - si $\delta_{i,j}$ = 0 ou $\neq \delta_{i,l}$, passer à la valeur suivante de *i*.

  - Retourner « échec ».

- Retourner « succès ».

Une troisième procédure vérifie que pour chaque paire de facteurs premiers $p_{j1}$ et $p_{j2}$ avec $1 \leq j_1 \, J_2 \leq f$, il y a au moins un jeu $\{\delta_{i,1} \dots \delta_{i,f}\}$ où $\delta_{i,j1}$ est nul ou différent de $\delta_{i,j2}$. Elle échoue manifestement lorsque m est plus petit que $f$-1. Lorsqu'elle réussit, parmi les m nombres $q_l$ à $q_m$, il y a au moins un ensemble de $f$-1 nombres indépendants par rapport aux f facteurs premiers.

- Pour $j_1$ allant de 1 à $f$-1 et pour $j_2$ allant de $j_l$+1 à $f$,

  - pour i allant de 1 à m,

    - si $\delta_{i,j1}$ = 0 ou $\neq \delta_{i,j2}$ passer aux valeurs suivantes de $j_1$ et $j_2$.

  - Retourner « échec ».

- Retourner « succès ».

Lorsqu'une procédure échoue, le générateur de jeux de clés GQ2 suit sa stratégie parmi les deux stratégies possibles :

- changer l'un des m nombres de base en gardant les $f$ facteurs premiers,
- changer l'un des $f$ facteurs premiers en gardant les m nombres de base. *Troisième principe* - La procédure suivante détermine si le jeu de clés GQ2 généralisées en cours de production ou déjà produit est
- un jeu de clés GQ2 élémentaires, c'est-à-dire que les 2×m nombres $\pm g_l$ à $\pm g_m$ sont tous des résidus non quadratiques,
- ou bien, un jeu de clés GQ2 complémentaires, c'est-à-dire que parmi les 2×$m$ nombres $\pm g_l$ à $\pm g_m$, il y a au moins un résidu quadratique.

La procédure utilise les deux symboles de Legendre $(g_i|p_j)$ et $(-g_i|p_j)$ pour $i$ allant de 1 à $m$ et pour $j$ allant de 1 à $f$.

- Pour $i$ allant de 1 à $m$,

  - pour $j$ allant de 1 à $f$,

    - si $(g_i \mid p_j)$ = -1, passer à la valeur suivante de $i$.

- Retourner « jeu de clés GQ2 complémentaires ».
- pour $j$ allant de 1 à $f$,

  - si $(-g_i|p_j)$ =-1, passer à la valeur suivante de $i$.

- Retourner « jeu de clés GQ2 complémentaires ».

- Retourner «jeu de clés GQ2 élémentaires ».

*Composantes privées* - Pour une équation de type direct : $x^{v} \equiv g_i^2 \pmod{p_j}$, les calculs suivants établissent toutes les valeurs possibles de la composante privée $Q_{i,j}$. Les deux cas les plus simples et les plus courants, c'est-à-dire $t = 1$ et $t = 2$, sont suivis par le cas plus complexe, c'est-à-dire $t > 2$.

**Pour $t = 1$, c'est-à-dire $p_j \equiv 3 \pmod{4}$,** la clé $\langle(p_j+1)/4, p_j\rangle$ donne la racine carrée quadratique de n'importe quel résidu quadratique dans CG(p). On en déduit un nombre $s_j \equiv ((p_j+1)/4)^k \pmod{(p_j-1)/2}$, ce qui donne une clé $\langle s_j, p_j\rangle$ transformant $G_i$ en $w \equiv G_i^{sj} \pmod{p_j}$. $Q_{i,j}$ est égal à $w$ ou bien à $p_j-w$.

**Pour $t = 2$, c'est-à-dire $p_j \equiv 5 \pmod{8}$,** la clé $\langle(p_j+3)/8, p_j\rangle$ donne la racine carrée de rang impair de n'importe quel élément de rang impair dans CG($p_j$). On en déduit un nombre $s_j \equiv ((p+3)/8)^k \pmod{(p_j-1)/4}$, ce qui donne une clé $\langle s_j, p_j\rangle$ transformant $G_i$ en $w \equiv G_i^{sj} \pmod{p_j}$. Remarquons que $z \equiv 2^{(p_j-1)/4} \pmod{p_j}$ est une racine carrée de -1 parce que 2 est un résidu non quadratique dans CG $(p_j)$. $Q_{i,j}$ est égal à $w$ ou bien à $p_j-w$ ou bien encore à $w' \equiv w \times z \pmod{p_j}$

ou bien à $p_j$-w'.

**Pour $p_j \equiv 2'+1 \pmod{2^{t+1}}$ avec $t > 2$,** la clé $\langle (p_j\text{-}1+2^t)/2^{t+1}, p_j \rangle$ donne la racine carrée de rang impair de n'importe quel élément de rang impair. Le test de compatibilité entre $k$, $g$ et $p$ a donné la valeur de $h$, puis celle de $u$.

- Lorsque $G_i$ est dans un cycle ($u = 0$, quelle que soit la valeur de $k$), on établit un nombre $s_j \equiv ((p_j\text{-}1+2^t)/2^{t+1})^k \pmod{(p_j\text{-}1)/2'}$. La clé $\langle s_j, p_j \rangle$ transforme $G_i$ en la solution de rang impair w $\equiv G_i^{s_j} \pmod{p_j}$. Il y des solutions de rang pair réparties dans min($k$, $t$) branches consécutives rattachées au cycle, disons dans $\alpha$ branches. $Q_{i,j}$ est égal au produit de w par n'importe laquelle des racines $2^\alpha$-ièmes de l'unité dans CG($p_j$).

- Lorsque $G_i$ est en position appropriée dans une branche ($u > 0$, $u+k \le t$), toutes les solutions sont dans la même branche que $G_i$, branche rattachée à un cycle par la puissance $2^u$-ième du nombre $G_i$. On établit un nombre $s_j \equiv ((p_j\text{-}1+2^t)/2^{t+1})^{k+u} \pmod{(p_j\text{-}1)/2^t}$. La clé $\langle s_j, p_j \rangle$ transforme la puissance $2^u$-ième de $G_i$ en un nombre de rang impair w. L'ensemble des produits de $w$ par les racines $2^{k+u}$-ièmes <u>primitives</u> de l'unité dans $CG(p_j)$ comprend les $2^k$ valeurs de $Q_{i,j}$.

Lorsque $p_j$ est tel que $t \ge k$, le nombre $b_j$ étant une racine $2^t$-ième primitive de l'unité dans CG($p_j$), la puissance $2^{t-u}$-ième de $b_j$ dans CG($p_j$) existe ; c'est une racine $2^k$-ième primitive de l'unité. Multiplier $Q_{i,j}$ par une racine $2^k$-ième primitive de l'unité permet de basculer la valeur du nombre $\Delta_{i,j}$.

Pour une équation de type inverse: $1 \equiv x^{v} \times g_i^2 \pmod{p_j}$, il suffit de remplacer le nombre $s_j$ par $((p_j\text{-}1)/2')\text{-}s_j$ dans la clé $\langle s_j, p_j \rangle$, ce qui revient à inverser la valeur de $Q_{i,j}$ dans CG($p_j$).

**Exemple de jeu de clés à deux facteurs premiers congrus à 5 (mod 8)**

$p_1$ = E6C83BF428689AF8C35E07EDD06F9B39A659829A58B79CD894C 435C95F32BF25

$p_2$ = 11BF8A68A0817BFCC00F15731C8B70CEF9204A34133A0DEF862 829B2EEA74873D

$n = p_1 \times p_2$ = FFFF8263434F173D0F2E76B32D904F56F4A5A6A50008C43 D32B650E9AB9AAD2EB713CD4F9 A97C4DBDA3828A3954F296458D5 F42C0126F5BD6B05478BE0A80ED1

Voici les symboles de Legendre des tout premiers nombres premiers.

$$(2 \mid p_1) = -1; (3 \mid p_1) = -1; (5 \mid p_1) = +1; (7 \mid p_1) = -1;$$

$$(11 \mid p_1) = +1; (13 \mid p_1) = -1; (17 \mid p_1) = +1;$$

Dans CG($p_1$), le rang est impair pour -5, -11 et 17.

$$(2 \mid p_2) = -1; (3 \mid p_2) = +1; (5 \mid p_2) = +1; (7 \mid p_2) = +1;$$

$$(11 \mid p_2) = +1; (13 \mid p_2) = -1; (17 \mid p_2) = -1;$$

Dans CG($p_2$), le rang est impair pour 3, -5, 7 et 11.
La fonction de Carmichael est $\lambda(n)$ = ppcm(($p_1$-1)/4, ($p_2$-1)/4).
$\lambda(n)$ = 33331A13DA4304A5CFD617BD6F834311642121543334F40C3D5 7A9C8558555D5BDAA2EF6AED 17B9E3794F51A65A1B37239B 18FA9 B0F618627D8C7E1D8499C1B
Avec $k = 9$, on utilise le nombre $\sigma \equiv \lambda(n)$ - $((1+\lambda(n))/2)^9 \pmod{\lambda(n)}$ comme exposant privé, de façon à utiliser des équations génériques de type inverse. $\sigma$ = 01E66577BC997CAC273671E187A35EFD25373ABC9FE6770E7446

C0CCEF2C72AF6E89D0BE277CC6165F1007187AC58028BD2416D4CC 1121 E7A7A8B6AE 186BB4B0

Les nombres 2, 3, 7, 13 et 17 ne conviennent pas comme nombre de base. La clé ⟨σ, n⟩ transforme $g_1 = 5$ en un nombre privé $Q_1$ qui ne révèle pas de décomposition. En effet, dans les deux corps, -5 est sur un cycle.

$Q_1$ = 818C23AF3DE333FAECE88A71C4591A70553F91D6C0DD5538EC 0F2AAF909B5BDAD491FD8BF13 F18E3DA3774CCE19D0097BC4BD4 7C5D6EOE7EBF6D89FE3DC5176C

La clé ⟨σ, *n*⟩ transforme $g_2 = 11$ en un nombre privé $Q_2$ qui révèle une décomposition. En effet, 11 n'est pas en même position dans les deux corps.

$Q_2$ = 25F9AFDF177993BE8652CE6E2C728AF31B6D66154D3935AC535 196B07C19080DC962E4E86ACF 40D01FDC454F2565454F290050DA05 2089EEC96A1B7DEB92CCA7

La clé ⟨σ, n⟩ transforme $g_3 = 21 = 3 \times 7$ en un nombre privé $Q_3$ qui révèle une décomposition.

$Q_3$ = 78A8A2F30FEB4A5233BC05541AF7B684C2406415EA1DD67D18 A0459A 1254121E95D5CAD8A1 FE3ECFE0685C96CC7EE86167D99532 B3A96B6BF9D93CAF8D4F6AF0

La clé ⟨σ, *n*⟩ transforme $g_4 = 26 = 2 \times 13$ en un nombre privé $Q_4$ qui révèle une décomposition.

$Q_4$ = 6F1748A6280A200C38824CA34C939F97DD2941DAD300030E481 B738C62BF8C673731514D1978 AF5655FE493D659514A6CE897AB76C 01E50B5488C5DAD12332E5

La clé privée peut encore se représenter par les deux facteurs premiers, le paramètre des restes chinois et huit composantes privées.

$\alpha \equiv (p_2 (\mathrm{mod}\, p_1))^{-1} (\mathrm{mod}\, p_1)$ = ADE4E77B703F5FDEAC5B9AAE825D649 E06692D 15FBFODF737B115DC4-D012FD1D

$Q_{1,1} \equiv Q_1 (\mathrm{mod}\, p_1)$ = 7751A9EE18A8F5CE44AD73D613A4F465E06C6F9 AF4D229949C74DD6C 18D76FAF

$Q_{1,2} \equiv Q_1 (\mathrm{mod}\, p_2)$ = A9EB5FA1B2A981AA64CF88C382923DB64376F5F D48152C08EEB6114F31B7665F

$Q_{2,1} \equiv Q_2 (\mathrm{mod}\, p_1)$ = D5A7D33C5FB75A033F2F0E8B20274B957FA3400 4ABB2C2AC1CA3F5320C5A9049

$Q_{2,2} \equiv Q_2 (\mathrm{mod}\, p_2)$ = 76C9F5EFD066C73A2BSCE9758DB512DFC011F5B 5AF7DA8D39A961 CC876F2D-D8F

$Q_{3,1} \equiv Q_3 (\mathrm{mod}\, p_1)$ = 2FEC0DC2DCA5BA7290B27BC8CC85C938A514B 8F5CFD55820A 174FB5E6DF-7B883

$Q_{3,2} \equiv Q_3 (\mathrm{mod}\, p_2)$ = 010D488E6B0A38A1CC406CEE0D55DE59013389D 8549DE493413F34604A 160C-1369

$Q_{4,1} \equiv Q_4 (\mathrm{mod}\, p_1)$ = A2B32026B6F82B6959566FADD9517DB8ED85246 52145EE159DF3DC0C61FE3617

$Q_{4,2} \equiv Q_4 (\mathrm{mod}\, p_2)$ = 011A3BB9B607F0BD71BBE25F52B305C224899E5 F1F8CDC2FEOD8F9FF62B3-C9860F

**Polymorphisme de la clé privée GQ2 -** Les diverses représentations possibles de la clé privée GQ2 s'avèrent équivalentes : elles se ramènent toutes à la connaissance de la factorisation du module *n* qui est la véritable clé privée GQ2. La représentation de la clé privée GQ2 a un effet sur le déroulement des calculs au sein de l'entité qui prouve, pas au sein de l'entité qui contrôle. Voici les trois principales représentations possibles de la clé privée GQ2. 1) La représentation classique des clés privées GQ consiste à stocker *m* nombres privés $Q_i$ et la clé publique de vérification ⟨*v*, *n*⟩ ; pour les schémas GQ2, cette représentation est concurrencée par les deux suivantes. 2) La représentation optimale en termes de charges de travail consiste à stocker le paramètre *k*, les *f* facteurs premiers $p_j$, $m \times f$ composantes privées $Q_{i,j}$ et *f*-1 paramètres des restes chinois. 3) La représentation optimale en termes de taille de clé privée consiste à stocker le paramètre *k*, les m nombres de base $g_i$ et les *f* facteurs premiers $p_j$, puis, à commencer chaque utilisation en établissant ou bien *m* nombres privés $Q_i$ et le module n pour se ramener à la première représentation, ou bien $m \times f$ composantes privées $Q_{i,j}$ et *f*-1 paramètres des restes chinois pour se ramener à la seconde.

Parce que la sécurité du mécanisme d'authentification dynamique ou de signature numérique équivaut à la connaissance d'une décomposition du module, les schémas GQ2 ne permettent pas de distinguer simplement deux entités utilisant le même module. Généralement, chaque entité qui prouve dispose de son propre module GQ2. Toutefois, on peut spécifier des modules GQ2 à quatre facteurs premiers dont deux sont connus d'une entité et les deux autres d'une autre.

**Authentification dynamique** - Le mécanisme d'authentification dynamique est destiné à prouver à une entité appelée **contrôleur** l'authenticité d'une autre entité appelée **démonstrateur** ainsi que l'authenticité d'un éventuel message associé *M*, de sorte que le contrôleur s'assure qu'il s'agit bien du démonstrateur et éventuellement que lui et le démonstrateur parlent bien du même message *M.* Le message associé *M* est optionnel, ce qui signifie qu'il peut être vide.

Le mécanisme d'authentification dynamique est une séquence de quatre actes : un acte d'engagement, un acte de défi, un acte de réponse et un acte de contrôle. Le démonstrateur joue les actes d'engagement et de réponse. Le contrôleur joue les actes de défi et de contrôle.

**Au sein du démonstrateur, on peut isoler un témoin,** de manière à isoler les paramètres et les fonctions les plus sensibles du démonstrateur, c'est-à-dire, la production des engagements et des réponses. Le témoin dispose du paramètre *k* et de la clé privée GQ2, c'est-à-dire, de la factorisation du module n selon l'une des trois représentations évoquées ci-dessus : ● les *f* facteurs premiers et les *m* nombres de base, ● les $m \times f$ composantes privées, les *f* facteurs premiers et *f*-1 paramètres des restes chinois, ● les m nombres privés et le module *n*.

Le témoin peut correspondre à une réalisation particulière, par exemple,

● une carte à puce reliée à un PC formant ensemble le démonstrateur, ou encore, ● des programmes particulièrement protégés au sein d'un PC, ou encore, ● des programmes particulièrement protégés au sein d'une carte à puce. Le témoin ainsi isolé est semblable au témoin défini ci-après au sein du signataire. A chaque exécution du mécanisme, le témoin produit un ou plusieurs engagements R, puis, autant de réponses D à autant de défis *d*. Chaque ensemble {*R, d, D*} constitue un **triplet GQ2.**

Outre qu'il comprend le témoin, le démonstrateur dispose également, le cas échéant, d'une fonction de hachage et d'un message *M*.

Le contrôleur dispose du module *n*, par exemple, à partir d'un annuaire de clés publiques ou encore à partir d'un certificat de clés publique ; le cas échéant, il dispose également de la même fonction de hachage et d'un message *M'*. Les paramètres publics GQ2, à savoir les nombres *k, m* et $g_1$ à $g_m$ peuvent être donnés au contrôleur par le démonstrateur. Le contrôleur est apte à reconstituer un engagement R' à partir de n'importe quel défi d et de n'importe quelle réponse *D*. Les paramètres k et m renseignent le contrôleur. Faute d'indication contraire, les m nombres de base de $g_l$ à $g_m$ sont les m premiers nombres premiers. Chaque défi d doit comporter *m* défis élémentaires notés de $d_1$ à $d_m$ : un par nombre de base. Chaque défi élémentaire de $d_1$ à $d_m$ est un nombre de 0 à $2^{k-1}$-1 (les nombres de v/2 à v-1 ne sont pas utilisés). Typiquement, chaque défi est codé par m fois *k*-1 bits (et non pas m fois *k* bits). Par exemple, avec *k* = 5 et *m* = 4 nombres de base 5, 11, 21 et 26, chaque défi comporte 16 bits transmis sur quatre quartets. Lorsque les (*k*-1)×*m* défis possibles sont également probables, le nombre (k-1)×m détermine la sécurité apportée par chaque triplet GQ2 : un imposteur qui, par définition, ne connaît pas la factorisation du module n a exactement une chance de succès sur $2^{(k-1) \times m}$. Lorsque (*k*-l)×*m* vaut de 15 à 20, un triplet suffit à assurer raisonnablement l'authentification dynamique. Pour atteindre n'importe quel niveau de sécurité, on peut produire des triplets en parallèle ; on peut également en produire en séquence, c'est-à-dire, répéter l'exécution du mécanisme.

**1) L'acte d'engagement** comprend les opérations suivantes.

Lorsque le témoin n'utilise pas les restes chinois, il dispose du paramètre *k*, des m nombres privés de $Q_l$ à $Q_m$ et du module *n* ; il tire au hasard et en privé un ou plusieurs aléas *r* (0 < *r* < *n*) ; puis, par *k* élévations successives au carré (mod n), il transforme chaque aléa *r* en un engagement *R*.

$$R \equiv r^{v} \pmod{n}$$

Voici un exemple avec le jeu de clés précédent sans les restes chinois.

*r* = 5E94B894AC24AF843131F437C1B1797EF562CFA53AB8AD426C1 AC016F1C89CFDA13120719477-C3E2FB4B4566088E10EF9C010E8F09 C60D981512198126091996

R = 6BBF9FFASD509778D0F93AE074D36A07D95FFC38F70C8D7E330 OEBF234FAOBC20A95152A8-FB73DE81FAEE5BF4FD3EB7F5EE3E36D 7068D083EF7C93F6FDDF673A

Lorsque le témoin utilise les restes chinois, il dispose du paramètre *k*, des f facteurs premiers de $p_1$ à $p_f$, de f-1 paramètres des restes chinois et des *m×f* composantes privées $Q_{i,j}$; il tire au hasard et en privé une ou plusieurs collections de f aléas : chaque collection comporte un aléa $r_i$ par facteur premier $p_i$ (0 < $r_i$ < $p_i$) ; puis, par *k* élévations successives au carré (mod $p_i$), il transforme chaque aléa $r_i$ en une composante d'engagement $R_i$.

$$R_i \equiv r_i^{v} \pmod{p_i}$$

Pour chaque collection de f composantes d'engagement, le témoin établit un engagement selon la technique des restes chinois. Il y a autant d'engagements que de collections d'aléas.

$$R = \text{Restes Chinois}(R_1, R_2, \dots R_f)$$

Voici un exemple avec le jeu de clés précédent et avec les restes chinois.

$r_1$ = 5C6D37FOE97083C8D120719475E080BBBF9F7392F11F3E244FDF0 204E84D8CAE

$R_1$ = 3DDF516EE3945CB86D20D9C49E0DA4D42281D07A76074DD4FE C5C7C5E205DF66

$r_2$ = AC8F85034AC78112071947C457225E908E83A2621B0154ED15DB FCB9A4915AC3

$R_2$ = 01168CEC0F661EAA15157C2C287C6A5B34EE28F8EB4D8D34085 8079BCAE4ECB016

$R$ = Restes Chinois($R_1$, $R_2$) = 0AE51D90CB4FDC3DC757C56E063C9ED8 6BE153B71FC65F47C123C27F082-BC3DD15273D4A923804718573F2F0 5E991487D17DAE0AAB7DF0D0FFA23E0FE59F95F0

Dans les deux cas, le démonstrateur transmet au contrôleur tout ou partie de chaque engagement **R,** ou bien, un code de hachage **H** obtenu en hachant chaque engagement **R** et un message **M.**

**2) L'acte de défi** consiste à tirer au hasard un ou plusieurs défis *d* composés chacun de *m* défis élémentaires $d_1 d_2 ... d_m$ ; chaque défi élémentaire $d_i$ est l'un des nombres de 0 à v/2-1.

$$d = d_1 \ d_2 \ ... \ d_m$$

Voici un défi pour les deux exemples, c'est-à-dire avec *k* = 5 et *m* = 4.

$d_1$ = 1011 = 11 = 'B' ; $d_2$ = 0011 = 3 ; $d_3$ = 0110 = 6 *;* $d_4$ = 1001 = 9,
$d = d_1 \parallel d_2 \parallel d_3 \parallel d_4$ = 10110011 01101001 = B3 69

Le contrôleur transmet au démonstrateur chaque défi *d*.

**3) L'acte de réponse** comporte les opérations suivantes.

Lorsque le témoin n'utilise pas les restes chinois, il dispose du paramètre *k*, des *m* nombres privés de $Q_1$ à $Q_m$ et du module *n* ; il calcule une ou plusieurs réponses *D* en utilisant chaque aléa r de l'acte d'engagement et les nombres privés selon les défis élémentaires.

$$D \equiv r \times Q_1^{d_1} \times Q_2^{d_2} \times ... Q_m^{d_m} \pmod{n}$$

Voici la suite de l'exemple sans les restes chinois.

*D* = 027E6E808425BF2B401 FD00B15864281A84538E8070D86C0A787 0E6 1940F7A6996C2D871EBE-611812532AC5875E0E116CC8BA648FD 8E86BE0B2ABCC3CCBBBE4

Lorsque le témoin utilise les restes chinois, il dispose du paramètre *k*, des *f* facteurs premiers *de* $p_1$ *à* $P_p$ de *f*-1 paramètres des restes chinois et des *m*×*f* composantes privées $Q_{i,j}$ ; il calcule une ou plusieurs collections *de f* composantes de réponse en utilisant chaque collection d'aléas de l'acte d'engagement : chaque collection de composantes de réponse comporte une composante par facteur premier.

$$D_i \equiv r_i \times Q_{1,i}^{d_1} \times Q_{2,i}^{d_2} \times ... Q_{m,i}^{d_m} \pmod{p_i}$$

Pour chaque collection de composantes de réponse, le témoin établit une réponse selon la technique des restes chinois. Il y a autant de réponses que de défis.

$$D = \text{Restes.Chinois}(D_1, D_2, ... D_f)$$

Voici la suite de l'exemple avec les restes chinois.

$$D_1 = r_1 \times Q_{1,1}^{d1} \times Q_{2,1}^{d2} \times Q_{3,1}^{d3} \times Q_{4,1}^{d4} \pmod{p_1} =$$

C71F86F6FD8F955E2EE434BFA7706E38E5E715375BC2CD2029A4BD

572A9EDEE6

$$D_2 = r_2 \times Q_{1,2}^{d1} \times Q_{2,2}^{d2} \times Q_{3,2}^{d3} \times Q_{4,2}^{d4} \pmod{p_2} =$$

0BE022F4A20523F98E9F5DBEC0E10887902F3AA48C864A6C354693A

D0B59D85E

$$D = 90CE7EA43CB8EA89ABDD0C814FB72ADE74F02FE6F098ABB98$$

C8577A660B9CFCEAECB93BE1BCC356811BF12DD667E2270134C907

3B9418CA5EBF519121 8D3FDB3

Dans les deux cas, le démonstrateur transmet chaque réponse D au contrôleur.

**4) L'acte de contrôle** consiste à contrôler que chaque triplet {R, d, D} vérifie une équation du type suivant pour une valeur non nulle,

$$R \times \prod_{i=1}^{m} G_i^{d_i} \equiv D^{2^k} \pmod{n} \quad \text{ou bien} \quad R \equiv D^{2^k} \times \prod_{i=1}^{m} G_i^{d_i} \pmod{n}$$

ou bien, à rétablir chaque engagement : aucun ne doit être nul.

$$R' \equiv D^{2^k} / \prod_{i=1}^{m} G_i^{d_i} \pmod{n} \quad \text{ou bien} \quad R' \equiv D^{2^k} \times \prod_{i=1}^{m} G_i^{d_i} \pmod{n}$$

Eventuellement, le contrôleur calcule ensuite un code de hachage H' en hachant chaque engagement rétabli R' et un message M'. L'authentification dynamique est réussie lorsque le contrôleur retrouve ainsi ce qu'il a reçu à l'issue de l'acte d'engagement, c'est-à-dire, tout ou partie de chaque engagement R, ou bien, le code de hachage H.

Par exemple, une séquence d'opérations élémentaires transforme la réponse D en un engagement R'. La séquence comprend k carrés (mod n) séparés par k-1 divisions ou multiplications (mod n) par des nombres de base. Pour la i ième division ou multiplication, qui s'effectue entre le i ième carré et le i+1 ième carré, le i ième bit du défi élémentaire $d_1$ indique s'il faut utiliser $g_1$, le i ième bit du défi élémentaire $d_2$ indique s'il faut utiliser $g_2$, ... jusqu'au i ième bit du défi élémentaire $d_m$ qui indique s'il faut utiliser $g_m$. Voici la fin de l'exemple sans les restes chinois.

D = 027E6E808425BF2B401 FD00B 15B642B 1 A8453BE8070D86C0A787 0E6C1940F7A6996C2D871EBE-611812532AC5875E0E116CC8BA648FD 8E86BEOB2ABCC3CCBBBE4

Elever au carré modulo n :

88BA681DD641D37D7A7D9818DODBEA82174073997C6C32F7FCAB3 0380C4C6229BO706D 1AF6EBD84617771 C31B4243C2F0376CAF5DCE B644F098FAF3B 1 EB49B39

Multiplier par 5 fois 26 = 130, soit '82' module n :

6ECABA65A91C22431C413E4EC7C7B39FDE14C9782C94FD6FA3CA AD7AFE192B9440C 1113CB8DBC4561959-5D263C1067D3D0A840FDE0 08B415028AB3520A6AD49D

Elever au carré modulo n :

0236D25049A5217B 13818B39AFB009E4D7D52B 17486EBF844D64CF7 5C4F652031041328B29EBF0829D54-E3BD 17DAD218174A01E6E3AA65 0C6FD62CC274426607

Multiplier par 21, soit '15' modulo n :

2E7F40960A8BBF 899A06BBB6970CFC5B47C88E8F115B5DA594504 A92834BA405559256A705ABAB6E7F6-AE82F4F33BF9E91227FOACFA 4A052C91ABF389725E93

Elever au carré modulo $n$ :
B802171179648AD687E672D3A32640E2493BA2E82D5DC87DBA2B2C C0325E7A71 C50E8AE02E299EF868-DD3FB916EBCBC0C5569B53D42 DAD49C956D8572E1285B0

Multiplier par 5 fois 11 fois 21 = 1155, soit '483' modulo $n$ :
33055602763 10DEFEC 1337EB5BB5810336FDB28E91B350D485B09188 E0C4F1D67E68E9590DB7F9F39C22-BDB4533013625011248A8DC417C 667B419D27CB 11 F72

Elever au carré modulo n :
8871 C494081ABD1AEB8656C38B9BAAB57DBA72A4BD4EF9029ECB FFF540E55138C9F22923963151 FD0753-145DF70CE22E9D019990E41 D B6104005EEB7B 1170559

Multiplier par 5 fois 11 fois 26 = 1430, soit '596' module $n$ :
2CF5F76EEBF128A0701B56F837FF68F81 A6A5D175D0AD67A 14DAE C6FB68C362B 1DC0ADD6CFC004FF5-EEACDF794563BB09A 17045EC FFF88F5136C7FBC825BC50C

Elever au carré modulo $n$ :
6BBF9FFA5D509778D0F93AE074D36A07D95FFC38F70C8D7E3300EB
F234FA08C20A95152A8FB73DE81FAEE5BF4FD3EB7F5EE3E36D706 8D083EF7C93F6FDDF673A

On retrouve bien l'engagement $R$. L'authentification est réussie. Voici la fin de l'exemple avec les restes chinois.
$D$ = 90CE7EA43CB8EA89ABDDOC814FB72ADE74F02FE6F098ABB98 C8577A660B9CFCEAECB93BE1BCC3-56811BF12DD667E2270134C907 3B9418CA5EBF5191218D3FDB3

Elever au carré modulo $n$ :
770192532E9CED554A8690B88F16D013010C903172B266C1133B136E
BE3EB5F13B170DD41F4ABE14736ADD3A70DFA43121B6FC5560CD D4B4845395763C792A68

Multiplier par 5 fois 26 = 130, soit'82' modulo $n$ :
6EE9BEF9E52713004971ABB9FBC31145318E2A703C8A2FB3E144E77
86397CD8D1910E70FA86262DB771AD1565303AD6E4CC6E90AE3646 B461D3521420E240FD4

Elever au carré module $n$ :
D9840D9A8E80002C4D0329FF97D7AD163D8FA98F6AF8FE2B2160B2
126CBBDFC734E39F2C9A39983A426486BC477F20ED2CA59E664C23 CA0E04E84F2F0AD65340

Multiplier par 21, soit ' 15' modulo $n$ :
D7DD7516383F78944F2C90116E 1 BEEOCCDC8D7CEC5D7D 1795ED33 BFE8623DB3D2E5B6C5F62A56A2-DF4845A94F32BF3CAC360C7782B 5941924BB4BE91 F86BD85F

Elever au carré modulo $n$ :
DD34020DD0804C0757F29A0CBBD7B46A 1BAF949214F74FDFE021 B 626ADAFBAB5C3F1602095DA39D7027-0938AE362F2DAE0B91485531 0C7BCA328A4B2643DCCDF

Multiplier par 5 fois 11 fois 21 = 1155, soit'483' modulo $n$ :
038EF55B4C826D189C6A48EFDD9DADBD2B63A7D675A0587C85596
18EA2D83DF552D24EAF6BE983FB4AFB3DE7D4D2545190F 1B 1F946 D327A4E9CA258C73A98F57

Elever au carré modulo $n$ :
D1232F850E30BC6B7365CC2712E5CAE079E47B971DA03185B33E918E
E6E99252DB3573CC87C604B327E5B20C7 AB920FDF 142A8909DBBA 1 C04A6227FF18241C9FE

Multiplier par 5 fois 11 fois 26 = 1430, soit '596' module $n$ :
3CC768F12AEDFCD4662892B9174A21D1F0DD9127A54AB63C984019 BED9BF88247EF4CCB56D71 E0FA30-CFB0FF28B7CE45556F744C 1FD7 51 BFBCA040DC9CBAB744

Elever au carré modulo $n$ :
0AE51D90CB4FDC3DC757C56E063C9ED86BE 153B71FC65F47C123C 27F082BC3DD15273D4A9238047185-73F2F05E991487D17DAEOAAB7 DF0D0FFA23E0FE59F95F0

On retrouve bien l'engagement $R$. L'authentification est réussie.

## Signature numérique

Le mécanisme de signature numérique permet à une entité appelée **signataire** de produire des messages signés et à une entité appelée **contrôleur** de vérifier des messages signés. Le message $M$ est une séquence binaire quelconque : il peut être vide. Le message $M$ est signé en lui adjoignant un appendice de signature qui comprend un ou plusieurs engagements et / ou défis, ainsi que les réponses correspondantes.

Le contrôleur dispose du module $n$, par exemple, à partir d'un annuaire de clés publiques ou encore à partir d'un certificat de clés publique ; il dispose également de la même fonction de hachage. Les paramètres publics GQ2, à savoir les nombres $k, m$ et g, à $g_m$ peuvent être donnés au contrôleur par le démonstrateur, par exemple, en les mettant dans l'appendice de signature. Les nombres *k* et *m* renseignent le contrôleur. D'une part, chaque défi élémentaire, de $d_1$ à $d_m$, est un nombre de 0 à $2^{k-1}$-1 (les nombres *v*/2 à *v*-1 ne sont pas utilisés). D'autre part, chaque défi *d* doit comporter *m* défis élémentaires notés de $d_1$ à $d_m$, autant que de nombres de base. En outre, faute d'indication contraire, les *m* nombres de base, de $g_1$ à $g_m$, sont les *m* premiers nombres premiers. Avec (*k*-1)×*m* valant de 15 à 20, on peut signer avec quatre triplets GQ2 produits en parallèle ; avec *(k-1)*×*m* valant 60 ou plus, on peut signer avec un seul triplet GQ2. Par exemple, avec *k* = 9 et *m* = 8, un seul triplet GQ2 suffit ; chaque défi comporte huit octets et les nombres de base sont 2, 3, S, 7, 11, 13, 17 et 19.

**L'opération de signature** est une séquence de trois actes : un acte d'engagement, un acte de défi et un acte de réponse. Chaque acte produit un ou plusieurs triplets GQ2 comprenant chacun : un engagement *R* (≠ 0), un défi *d* composé de *m* défis élémentaires notés par $d_1$, $d_2$, ... $d_m$ et une réponse *D* (≠ 0).

Le signataire dispose d'une fonction de hachage, du paramètre *k* et de la clé privée GQ2, c'est-à-dire, de la factorisation du module *n* selon l'une des trois représentations évoquées ci-dessus. **Au sein du signataire, on peut isoler un témoin qui exécute les actes d'engagement et de réponse,** de manière à isoler les fonctions et les paramètres les plus sensibles du démonstrateur. Pour calculer engagements et réponses, le témoin dispose du paramètre *k* et de la clé privée GQ2, c'est-à-dire, de la factorisation du module *n* selon l'une des trois représentations évoquées ci-dessus. Le témoin ainsi isolé est semblable au témoin défini au sein du démonstrateur. Il peut correspondre à une réalisation particulière, par exemple, • une carte à puce reliée à un PC formant ensemble le signataire, ou encore, • des programmes particulièrement protégés au sein d'un PC, ou encore, • des programmes particulièrement protégés au sein d'une carte à puce. **1) L'acte d'engagement** comprend les opérations suivantes.

Lorsque le témoin dispose des *m* nombres privés $Q_1$ à $Q_m$ et du module *n*, il tire au hasard et en privé un ou plusieurs aléas *r* (0 < *r* < *n*) ; puis, par *k* élévations successives au carré (mod *n*), il transforme chaque aléa *r* en un engagement *R*.

$$R \equiv r^{v} \pmod{n}$$

Lorsque le témoin dispose des *f* facteurs premiers de $p_1$ à $p_f$ et des *m*×*f* composantes privées $Q_{i,j}$, il tire au hasard et en privé une ou plusieurs collections de *f* aléas : chaque collection comporte un aléa $r_i$ par facteur premier $p_i$ (0 < $r_i$ < $p_i$) ; puis, par *k* élévations successives au carré (mod $p_i$), il transforme chaque aléa $r_i$ en une composante d'engagement $R_i$.

$$R_i \equiv r_i^{v} \pmod{p_i}$$

Pour chaque collection de *f* composantes d'engagement, le témoin établit un engagement selon la technique des restes chinois. Il y a autant d'engagements que de collections d'aléas.

$$R = \text{Restes Chinois}(R_1, R_2, \ldots R_f)$$

**2) L'acte de défi** consiste à hacher tous les engagements *R* et le message à signer *M* pour obtenir un code de hachage à partir duquel le signataire forme un ou plusieurs défis comprenant chacun *m* défis élémentaires ; chaque défi élémentaire est un nombre de 0 à *v*/2-1 ; par exemple, avec *k* = 9 et *m* = 8, chaque défi comporte huit octets. Il y a autant de défis que d'engagements.

$$d = d_1 \ d_2 \ \ldots \ d_m, \text{extraits du résultat Hash}(M, R)$$

**3) L'acte de réponse** comporte les opérations suivantes.

Lorsque la témoin dispose des *m* nombres privés $Q_1$ à $Q_m$ et du module *n*, il calcule une ou plusieurs réponses *D* en utilisant chaque aléa *r* de l'acte d'engagement et les nombres privés selon les défis élémentaires.

$$X \equiv Q_1^{d_1} \times Q_2^{d_2} \times ... Q_m^{d_m} \pmod{n}$$
$$D \equiv r \times X \pmod{n}$$

Lorsque le témoin dispose des $f$ facteurs premiers de $p_1$ à $p_f$ et des $m \times f$ composantes privées $Q_{i,j}$, il calcule une ou plusieurs collections de $f$ composantes de réponse en utilisant chaque collection d'aléas de l'acte d'engagement : chaque collection de composantes de réponse comporte une composante par facteur premier.

$$X_i \equiv Q_{1,i}^{d_1} \times Q_{2,i}^{d_2} \times ... Q_{m,i}^{d_m} \pmod{p_i}$$
$$D_i \equiv r_i \times X_i \pmod{p_i}$$

Pour chaque collection de composantes de réponse, le témoin établit une réponse selon la technique des restes chinois. Il y a autant de réponses que de défis.

$$D = \text{Restes Chinois}(D_1, D_2, ... D_j)$$

**Le signataire signe le message *M*** en lui adjoignant un appendice de signature comprenant :

- ou bien, chaque triplet GQ2, c'est-à-dire, chaque engagement *R*, chaque défi *d* et chaque réponse *D*,
- ou bien, chaque engagement *R* et chaque réponse *D* correspondante,
- ou bien, chaque défi *d* et chaque réponse *D* correspondante.

**Le déroulement de l'opération de vérification** dépend du contenu de l'appendice de signature. On distingue les trois cas.

**Au cas où l'appendice comprend un ou plusieurs triplets,** l'opération de contrôle comporte deux processus indépendants dont la chronologie est indifférente. Le contrôleur accepte le message signé si et seulement si les deux conditions suivantes sont remplies.

D'une part, chaque triplet doit être cohérent (une relation appropriée du type suivant doit être vérifiée) et recevable (la comparaison doit se faire sur une valeur non nulle).

$$R \times \prod_{i=1}^{m} G_i^{d_i} \equiv D^{2^k} \pmod{n} \quad \text{ou bien} \quad R \equiv D^{2^k} \times \prod_{i=1}^{m} G_i^{d_i} \pmod{n}$$

Par exemple, on transforme la réponse *D* par une séquence d'opérations élémentaires : $k$ carrés (mod $n$) séparés par $k$-1 multiplications ou divisions (mod $n$) par des nombre de base. Pour la $i$ ième multiplication ou division, qui s'effectue entre le $i$ ième carré et le $i$+1 ième carré, le $i$ ième bit du défi élémentaire $d_1$ indique s'il faut utiliser $g_1$, le $i$ ième bit du défi élémentaire $d_2$ indique s'il faut utiliser $g_2$, ... jusqu'au $i$ ième bit du défi élémentaire $d_m$ qui indique s'il faut utiliser $g_m$. On doit ainsi retrouver chaque engagement *R* présent dans l'appendice de signature.

D'autre part, le ou les triplets doivent être liés au message *M*. En hachant tous les engagements *R* et le message *M*, on obtient un code de hachage à partir duquel on doit retrouver chaque défi *d*.
$d = d_1\, d_2\, ...\, d_m$, identiques à ceux extraits du résultat Hash(*M, R*)

**Au cas où l'appendice ne comprend pas de défi,** l'opération de contrôle commence par la reconstitution de un ou plusieurs défis *d'* en hachant tous les engagements *R* et le message *M*.
$d' = d'_1\, d'_2\, ...\, d'_m$, extraits du résultat Hash(*M, R*)

Ensuite, le contrôleur accepte le message signé si et seulement si chaque triplet est cohérent (une relation appropriée du type suivant est vérifiée) et recevable (la comparaison se fait sur une valeur non nulle).

$$R \times \prod_{i=1}^{m} G_i^{d'_i} \equiv D^{2^k} \pmod{n} \quad \text{ou bien} \quad R \equiv D^{2^k} \times \prod_{i=1}^{m} G_i^{d'_i} \pmod{n}$$

**Au cas où l'appendice ne comprend pas d'engagement,** l'opération de contrôle commence par la reconstitution de un ou plusieurs engagements R' selon une des deux formules suivantes, celle qui est appropriée. Aucun engagement rétabli ne doit être nul.

$$R' \equiv D^{2^k} / \prod_{i=1}^{m} G_i^{d_i} \pmod{n} \quad \text{ou bien} \quad R' \equiv D^{2^k} \times \prod_{i=1}^{m} G_i^{d_i} \pmod{n}$$

Ensuite, le contrôleur doit hacher tous les engagements R' et le message M de façon à reconstituer chaque défis d.

$d = d_1 \, d_2 \ldots d_m$, identiques à ceux extraits du résultat Hash(M, R')

Le contrôleur accepte le message signé si et seulement si chaque défi reconstitué est identique au défi correspondant figurant en appendice.

**Revendications**

1. Procédé pour permettre l'authentification d'une entité comprenant :

   l'obtention d'un ensemble d'une ou de plusieurs valeurs privées $Q_1, Q_2, \ldots, Q_m$ et de valeurs publiques respectives

   $G_1 G_2, \ldots G_m$, chaque paire de clés $(Q_1, G_i)$ vérifiant soit l'équation $G_i \cdot Q_i^v \equiv 1$ mod n, soit l'équation $G_i \equiv Q_i^v$ mod n, où m est un nombre entier supérieur ou égal à 1, i est un nombre entier entre 1 et m, et n est un nombre entier public égal au produit de f facteurs premiers privés désignés par $p_i, \ldots, p_f$ où f est supérieur ou égal à 2, et v est un exposant public tel que $v = 2^k$, où k est un paramètre de sécurité ayant une valeur entière supérieure à 1, et où chaque valeur publique $G_i$, pour $i = 1, \ldots, m$, est telle que $G_i = g_i^2$ mod n, où $g_i$ est un nombre de base ayant une valeur entière supérieure à 1 et inférieure à chacun des facteurs premiers $p_r, \ldots P_f$, et où, pour au moins une valeur entière 1 entre 1 et m, $g_l$ ou $(-g_i)$ est un résidu quadratique de l'anneau des entiers modulo n, et où, dans le cas où $G_i \equiv Q_i^v$ mod n, parmi les m nombres $q_i$ obtenus en élevant $Q_i$ au carré modulo n, k-1 fois le rang, l'un d'entre eux est différent de $\pm g_i$, et dans le cas où $G_i Q_i^v \equiv 1$ mod n, parmi les m nombres $q_i$ obtenus en élevant l'inverse de $Q_i$ modulo n au carré modulo n, k-1 fois le rang, l'un d'entre eux est différent de $\pm g_i$, où, pour $i = 1, \ldots, m$, $q_i \equiv Q_i^{-v/2}$ mod n dans le cas $G_i \times Q_i^v \equiv 1$ mod n, et $q_i = Q_i^{v/2}$ mod n dans le cas $G_i \equiv Q_i^v$ mod n ;

   la reception d'un engagement R d'un démonstrateur :
   R étant calculé soit tel que $R \equiv r^v$ mod n, où r est un aléa tel que $0 < r < n$ choisi par le démonstrateur, ou en utilisant la méthode des restes chinois à partir d'un ensemble de composants d'engagement $R_j$, où, pour $j = 1, \ldots, f$, $R_j \equiv r_j^v$ mod $p_j$, où $r_j$ est un aléa tel que $0 < r_j < p_j$ choisi par le démonstrateur ;

   le tirage au hasard de m défis $d_1, d_2, \ldots, d_m$ ;

   l'envoi des défis $d_1, d_2, \ldots, d_m$ au démonstrateur ;

   la réception d'une réponse D du démonstrateur,
   D étant calculé soit tel que $D \equiv r \times Q_1^{d1} \times Q_2^{d2} \times \ldots \times Q_m^{dm}$ mod n, ou à partir d'un ensemble de composantes de réponse $D_j$ en utilisant la méthode des restes chinois, où, pour

$j = 1,...f$ , $D_j \equiv r_j \times Q_{1j}^{d1} \times Q_{2j}^{d2} \times ... \times Q_{mj}^{dm}$ mod $p_j$, où $Q_{ij} \equiv Q_i$ mod $p_j$ pour $i = 1,...,m$;

la détermination que le démonstrateur est authentiqué si la réponse $D$ a une valeur telle que $R \equiv$ $G_1^{d1} \cdot G_2^{d2} .... G_m^{dm} \cdot D^v$ mod $n$ dans le cas $G_i \times Q_i^v \equiv 1$ mod $n$ et $R \equiv D^v/G_1^{d1} \cdot G_2^{d2} .... G_m^{dm}$ mod $n$

dans le cas $G_i \equiv Q_i^v$ mod $n$.

2. Procédé pour permettre l'authentification d'un message, comprenant:

l'obtention d'un ensemble d'une ou de plusieurs valeurs privées $Q_1$, $Q_2$, ..., $Q_m$

et de valeurs publiques respectives $G_1, G_2,...,G_m$, chaque paire de clés $(Q_i, G_i)$ vérifiant soit équation $G_i \cdot Q_i^v \equiv 1$

mod $n$, soit équation $G_i \equiv Q_i^v$ mod $n$, où $m$ est un nombre entier supérieur ou égal à 1, $i$ est un nombre entier entre 1 et $m$ et $n$ est un nombre entier public égal au produit de f facteurs premiers privés désignés par $p_1,..., p_f$, où $f$ est supérieur ou égal à 2, et $v$ est un exposant public tel que $v = 2^k$, où k est un paramètre de sécurité ayant une valeur entière supérieure à 1, et où chaque valeur publique $G_i$, pour $i=1,..,m$, est telle que $G_i \equiv g_i^2$ mod $n$, oú $g_i$ est un nombre de base ayant une valeur entière supérieure à 1 et inférieure à chacun des facteurs premiers $p_i,...,p_f$, et où, pour au moins une valeur entière $1$ entre 1 et $m$, $g_l$ ou $(-g_l)$ est un résidu quadratique de l'anneau des entiers modulo $n$, et où, dans le cas où $G_i \equiv Q_i^v$ mod $n$, parmi les $m$ nombres $q_i$ obtenus en élevant $Q_i$ au carré modulo $n$, k-1 fois le rang, l'un d'entre eux est différent de $\pm g_i$, et dans le cas où $G_i Q_i^v \equiv 1$ mod $n$, parmi les $m$ nombres $q_i$ obtenus en élevant l'inverse de $Q_i$ modulo $n$ au carré modulo $n$, k-1 fois le rang, l'un d'entre eux est différent de $\pm g_i$, où, pour $i = 1,...,m$, $q_i \equiv Q_i^{-v/2}$ mod $n$ dans le cas $G_i \times Q_i^v \equiv 1$ mod $n$, et $q_i \equiv Q_i^{v/2}$ mod $n$ dans le cas $G_i \equiv Q_i^v$ mod $n$;

la réception d'un jeton $T$ d'un démonstrateur, où $T = h(M,R)$, $h$ est une fonction de hachage, $M$ est un message reçu du démonstrateur, et $R$ est un engagement,

$R$ étant calculé soit tel que $R \equiv r^v$ mod $n$, où est un aléa tel que $0 < r < n$ choisi par le démonstrateur, ou en utilisant la méthode des restes chinois à partir d'un ensemble de composants d'engagement $R_j$, où, pour $j = 1,...f$,

$R_j \equiv r_j^v$ mod $p_j$, où $r_j$ est un aléa tel que $0 < r_j < p_j$ choisi par le démonstrateur ;

le tirage au hasard de $m$ défis $d_1, d_2,...,d_m$ ;

l'envol des défis $d_1, d_2,...,d_m$ au démonstrateur ;

la réception d'une réponse $D$ du démonstrateur,

D étant calculé soit tel que $D \equiv r \times Q_1^{d1} \times Q_2^{d2} \times ... \times Q_m^{dm}$ mod $n$, ou à partir d'un ensemble de composantes de réponse $D_j$ en utilisant la méthode des restes chinois, où, pour $j = 1,...,f$,

$D_j \equiv r_j \times Q_{1j}^{d1} \times Q_{2j}^{d2} \times ... \times Q_{mj}^{dm}$ mod $p_j$, où $Q_{ij} \equiv Q_i$ mod $p_j$ pour $i = 1,...,m$ ;

la détermination que le message $M$ est authentique si la réponse $D$ a une valeur telle que $T = h(M, G_1^{d1} \cdot G_2^{d2}...$ $G_m^{dm} \cdot D^v$ mod n dans le cas $G_i \times Q_i^v \equiv 1$ mod $n$) et $T \equiv h(M, D^v/G_1^{d1} \cdot G_2^{d2}....G_m^{dm}$ mod $n$) dans le cas $G_i \equiv Q_i^v$ mod $n$.

3. Système destiné à prouver :

- l'authenticité d'une entité et/ou
- l'intégrité d'un message M associé à cette entité,

au moyen d'un ensemble d'une ou de plusieurs valeurs privées $Q_1, Q_2, ..., Q_m$ et de valeurs publiques respectives $G_1, G_2, ..., G_m$, chaque paire de clés $(Q_i, G_i)$ vérifiant soit l'équation $G_i \cdot Q_i^v \equiv 1$ mod $n$, soit l'équation $G_i \equiv Q_i^v$ mod $n$, où $m$ est un nombre entier supérieur ou égal à 1, i est un nombre entier entre 1 et $m$, et $n$ est un nombre entier public égal au produit de $f$ facteurs premiers privés désignés par $p_1, ... p_f$, où où $f$ est supérieur ou égal à 2, et $v$ est un exposant public tel que $v = 2^k$, où $k$ est un paramètres de sécurité ayant une valeur entière supérieure à 1, et où chaque valeur publique $G_1$, pour $i = 1, ..., m$, est telle que $G_i \equiv g_i^2$ mod $n$, où $g_i$ est un nombre de base ayant une valeur entière supérieure à 1 et inférieure à chacun des facteurs premiers $P_i, ..., P_f$, et où, pour au moins une valeur entière $1$ entre 1 et $m$, $g_l$ ou $(-g_l)$ est un résidu quadratique de l'anneau des entiers modulo $n$, et où,

dans le cas où $G_i \equiv Q_i^v$ mod $n$, parmi les m nombres $q_i$ obtenus en élevant $Q_i$ au carré modulo $n$, k-1 fois le rang, l'un d'entre eux est différent de $\pm g_i$, et dans le cas où $G_i \cdot Q_i^v \equiv 1$ mod $n$, parmi les m nombres $q_i$ obtenus en élevant l'inverse de $Q_i$ modulo $n$ au carré modulo $n$, k-1 fois le rang, l'un d'entre eux est différent de $\pm g_i$, où, pour

$i = 1, ..., m$, $q_l \equiv Q_i^{-v/2}$ mod $n$ dans

le cas $G_i \times Q_i^v \equiv 1$ mod $n$, et $q_l \equiv Q_i^{v/2}$ mod $n$ dans le cas $G_i \equiv Q_i^v$ mod $n$,

ledit système comprenant un dispositif témoin, notamment contenu dans un objet nomade se présentant par exemple sous la forme d'une carte bancaire à microprocesseur,
le dispositif témoin comportant :

- une zone mémoire contenant les $f$ facteurs premiers $p_i$ et/ou les $m$ nombres de bases $g_i$ et/ou les paramètres des restes chinois des facteurs premiers et/ou le nombre entier public n et/ou les $m$ valeurs privées $Q_i$ et/ou les $f.m$ composantes $Q_{i,j}$, telles que $Q_{i,j} \equiv Q_i$ mod $p_j$, des valeurs privées $Q_i$ et l'exposant public v ;

ledit dispositif témoin comportant aussi :

- des moyens de production d'aléas, ci-après désignés les moyens de production d'aléas du dispositif témoin,
- des moyens de calcul, ci-après désignés les moyens de calcul des engagements R du dispositif témoin, pour calculer des engagements R dans l'anneau des entiers modulo $n$,

soit en effectuant des opérations du type $R = r^v$ mod $n$ où $r$ est un aléa produit par les moyens de production d'aléas, où $0 < r < n$, soit en effectuant des opérations du type

$R_i \equiv r_i^v$ mod $n$ où $r_i$ est un aléa associé au nombre premier $p_i$ tel que $0 < r_i < p_i$, chaque $r_i$ appartenant à une collection d'aléas $\{r_1, r_2, ..., r_f\}$ produits par les moyens de production d'aléas puis en appliquant la méthode des restes chinois;
ledit dispositif témoin comportant aussi :

- des moyens de réception, ci-après désignés les moyens de réception des défis d du dispositif témoin, pour recevoir un ou plusieurs défis $d$, chaque défi d comportant m entiers $d_i$ ci-après appelés défis élémentaires ;
- des moyens de calcul, ci-après désignés les moyens de calcul des réponses $D$ du dispositif témoin, pour calculer à partir de chaque défi d une réponse $D$, soit en effectuant des opérations du type $D \equiv r \times Q_1^{d1} \times Q_2^{d2} \times ... \times Q_m^{dm}$ mod $n$, soit en effectuant des opérations du type $D_j \equiv r_j \times Q_{i,1}^{d1} \times Q_{i,2}^{d2} \times ... \times Q_{i,m}^{dm}$ mod $p_i$, puis en appliquant la méthode des restes chinois;
- des moyens de transmission pour transmettre un ou plusieurs engagements R et une ou plusieurs réponses $D$ ;

et ledit système étant tel qu'il y a autant de réponses D que de défis d que d'engagements R, chaque groupe de nombres $R$, $d$, $D$ constituant un triplet noté $\{R, d, D\}$.

4. Système selon la revendication 3 destiné à prouver l'authenticité d'une entité appelée démonstrateur à une entité appelée contrôleur,
ledit système comportant :

- un dispositif démonstrateur associé à l'entité démonstrateur, ledit dispositif démonstrateur étant interconnecté au dispositif témoin par des moyens d'interconnexion et pouvant se présenter notamment sous la forme de microcircuits logiques dans un objet nomade par exemple sous la forme d'un microprocesseur dans une carte bancaire à microprocesseur,

- un dispositif contrôleur associé à l'entité contrôleur, ledit dispositif contrôleur se présentant notamment sous la forme d'un terminal ou d'un serveur distant, ledit dispositif contrôleur comportant des moyens de connexion pour le connecter électriquement, électromagnétiquement, optiquement ou de manière acoustique, notamment via un réseau de communication informatique, au dispositif démonstrateur :

le dispositif témoin comportant des moyens de transmission, ci-après désignés les moyens de transmission du dispositif témoin, pour transmettre tout ou partie de chaque engagement $R$ au dispositif démonstrateur, via les moyens d'interconnexion,

le dispositif démonstrateur comportant aussi des moyens de transmission, ci-après désignés les moyens de transmission du démonstrateur, pour transmettre tout ou partie de chaque engagement $R$ au dispositif contrôleur, via les moyens de connexion;

le dispositif contrôleur comportant des moyens de production de défis pour produire, après avoir reçu tout ou partie de chaque engagement $R$, des défis d en nombre égal an nombre d'engagements $R$,

le dispositif contrôleur comportant aussi des moyens de transmission, ci-après désignés les moyens de transmission du contrôleur, pour transmettre les défis d au démostrateur, via les moyens de connexion ;

le dispositif contrôleur comportant aussi :

- des moyens de calcul, ci-après désignés les moyens de calcul du dispositif contrôleur,
- des moyens de comparaison, ci-après désignés les moyens de comparaison du dispositif contrôleur,

tels que dans te cas où les moyens de transmission du démonstrateur ont transmis une partie de chaque engagement $R$, les moyens de calcul du dispositif contrôleur,

disposant des $m$ valeurs publiques $G_1$, $G_2$ ,..., $G_m$, calculent à partir de chaque défi $d$ et de chaque réponse $D$ un engagement reconstruit $R'$ satisfaisant à une relation du type :

$$R' \equiv G_1^{d_1} \times G_2^{d_2} \times ... \times G_m^{d_m} \times D^v \bmod n$$

ou à une relation du type :

$$R' \equiv D^v \Big/ G_1^{d_1} \times G_2^{d_2} \times ... \times G_m^{d_m} \bmod n,$$

les moyens de comparaison du dispositif contrôleur comparent chaque engagement reconstruit $R'$ à tout ou partie de chaque engagement $R$ reçu, et

dans le cas où les moyens de transmission du démonstrateur ont transmis l'intégralité de chaque engagement $R$, les moyens de calcul et les moyens de comparaison du dispositif contrôleur, disposant des $m$ valeurs publiques $G_1$, $G_2$,...,$G_m$, vérifient que chaque engagement $R$ satisfait à une relation du type :

$$R \equiv G_1^{d_1} \times G_2^{d_2} \times ... \times G_m^{d_m} \times D^v \bmod n$$

ou à une relation du type :

$$R \equiv D^v \Big/ G_1^{d_1} \times G_2^{d_2} \times ... \times G_m^{d_m} \bmod n.$$

**5.** Système selon la revendication 3 destiné à prouver à une entité appelée contrôleur l'intégrité d'un message $M$ associé à une entité appelée démonstrateur, ledit système comportant :

- un dispositif démonstrateur associé à l'entité démonstrateur, ledit dispositif démonstrateur étant interconnecté au dispositif témoin par des moyens d'interconnexion et pouvant se présenter notamment sous la forme de microcircuits logiques dans un objet nomade par exemple sous la forme d'un microprocesseur dans une carte bancaire à microprocesseur,

- un dispositif contrôleur associé à l'entité contrôleur, ledit dispositif contrôleur se présentant notamment sous la forme d'un terminal ou d'un serveur distant, ledit dispositif contrôleur comportant des moyens de connexion pour le connecter électriquement, électromagnétiquement, optiquement ou de manière acoustique, notamment via un réseau de communication informatique, au dispositif démonstrateur;

le dispositif témoin comportant des moyens de transmission, ci-après désignés les moyens de transmission du dispositif témoin, pour transmettre tout ou partie de chaque engagement $R$ au dispositif démonstrateur, via les moyens d'interconnexion;

le dispositif démonstrateur comportant des moyens de calcul, ci-après désignés les moyens de calcul du démonstrateur, appliquant une fonction de hachage $h$ ayant comme arguments le message $M$ et tout ou partie de chaque engagement $R$, pour calculer au moins un jeton $T$,

le dispositif démonstrateur comportant aussi des moyens de transmission, ci-après désignés les moyens de transmission du dispositif démonstrateur, pour transmettre chaque jeton $T$, via les moyens de connexion, au dispositif contrôleur,

le dispositif contrôleur comportant aussi des moyens de production de défis pour produire, après avoir reçu le jeton $T$, des défis $d$ en nombre égal au nombre d'engagements $R$,

le dispositif contrôleur comportant aussi des moyens de transmission, ci-après désignés les moyens de transmission du contrôleur, pour transmettre les défis $d$ au démonstrateur, via les moyens de connexion;

le dispositif contrôleur comportant aussi des moyens de calcul, ci-après désignés les moyens de calcul du dispositif contrôleur, disposant des $m$ valeurs publiques $G_1$, $G_2$,...,$G_m$, pour d'une part, calculer à partir de chaque défi $d$ et de chaque réponse $D$ un engagement reconstruit $R'$ satisfaisant à une relation du type :

$$R' = G_1^{d_1} \times G_2^{d_2} \times ... \times G_m^{d_m} \times D^{\nu} \bmod n$$

on à une relation du type :

$$R' \equiv D^{\nu} \Big/ G_1^{d_1} \times G_2^{d_2} \times ... \times G_m^{d_m} \bmod n$$

puis d'autre part, calculer en appliquant la fonction de hachage $h$ ayant comme arguments le message $M$ et tout ou partie de chaque engagement reconstruit $R'$, un jeton $T'$,

le dispositif contrôleur comportant aussi des moyens de comparaison, ci-après désignés les moyens de comparaison du dispositif contrôleur, pour comparer le jeton calculé $T'$ au jeton $T$ reçu.

6. Système selon la revendication 3 destiné à produire la signature numérique d'un message $M$, ci-après désigné le message signé, par une entité appelée entité signataire,

le message signé comprenant :

- le message $M$,
- les défis $d$ et/ou les engagements $R$,
- les réponses $D$ ;

ledit système comportant un dispositif signataire associé à l'entité signataire, ledit dispositif signataire étant interconnecté au dispositif témoin par des moyens d'interconnexion et pouvant se présenter notamment sous la forme de microcircuits logiques dans un objet nomade par exemple sous la forme d'un microprocesseur dans une carte bancaire à microprocesseur,

le dispositif témoin comportant des moyens de transmission, ci-après désignés les moyens de transmission du dispositif témoin, pour transmettre tout ou partie de chaque engagement $R$ au dispositif signataire, via les moyens d'interconnexion; le dispositif signataire comportant des moyens de calcul, ci-après désignés les moyens de calcul du dispositif signataire, appliquant une fonction de hachage $h$ ayant comme arguments le message $M$ et tout ou partie de chaque engagement $R$, pour calculer un train binaire et extraire de ce train binaire des défis $d$ en nombre égal au nombre d'engagements $R$;

le dispositif témoin comportant des moyens de transmission, ci-après désignés les moyens de transmission du dispositif témoin, pour transmettre les réponses $D$ au dispositif signataire, via les moyens d'interconnexion.

**7.** Système selon la revendication 6 destiné à prouver l'authenticité du message $M$ en contrôlant, par une entité appelée contrôleur, le message signé, ledit système comportant un dispositif contrôleur associé à l'entité contrôleur, ledit dispositif contrôleur se présentant notamment sous la forme d'un terminal ou d'un serveur distant ledit dispositif contrôleur comportant des moyens de connexion pour le connecter électriquement, électromagnétiquement, optiquement ou de manière acoustique, notamment via un réseau de communication informatique au dispositif signataire ;

le dispositif signataire associé à l'entité signataire comportant des moyens de transmission, ci-après désignés les moyens de transmission du dispositif signataire, pour transmettre au dispositif contrôleur, le message signé, via les moyens de connexion, de telle sorte que le dispositif contrôleur dispose d'un message signé comprenant :

- le message $M$,
- les défis $d$ et/ou les engagements $R$,
- les réponses $D$ ;

le dispositif contrôleur comportant :

- des moyens de calcul, ci-après désignés les moyens de calcul du dispositif contrôleur,
- des moyens de comparaison, ci-après désignés les moyens de comparaison du dispositif contrôleur,

tels que dans le cas où le dispositif contrôleur dispose des engagements $R$, des défis $d$, des réponses $D$,

● ● les moyens de calcul et de comparaison du dispositif contrôleur vérifient que les engagements $R$, les défis $d$ et les réponses $D$ satisfont à des relations du type :

$$R \equiv G_1^{d_1} \times G_2^{d_2} \times ... \times G_m^{d_m} \times D^v \bmod n$$

ou à des relations du type :

$$R = D^v / G_1^{d_1} \times G_2^{d_2} \times ... \times G_m^{d_m} \bmod n$$

● ● les moyens de calcul et de comparaison du dispositif contrôleur vérifient que le message $M$, les défis $d$ et les engagements $R$ satisfont à la fonction de hachage

$$d = h \, (message, \, R) \, ;$$

dans le cas où le dispositif contrôleur dispose des défis $d$ et des réponses $D$,
● ● les moyens de calcul du dispositif contrôleur calculent, à partir de chaque défi $d$ et de chaque réponse $D$, des engagements $R'$ satisfaisant à des relations du tyge :

$$R' \equiv G_1^{d_1} \times G_2^{d_2} \times ... \times G_m^{d_m} \times D^v \bmod n$$

ou à des relations du type :

$$R' \equiv D^v / G_1^{d_1} \times G_2^{d_2} \times ... \times G_m^{d_m} \bmod n$$

● ● les moyens de calcul et de comparaison du dispositif contrôleur vérifient que le message $M$ et les défis $d$ satisfont à la fonction de hachage :

$$d = h\,(message,\ R')\,;$$

et
dans le cas où le dispositif contrôleur dispose des engagements $R$ et des réponses $D$,
● ● les moyens de calcul du dispositif contrôleur appliquent la fonction de hachage et calculent $d'$ tel que

$$d' = h\,(message,\ R)$$

● ● les moyens de calcul et de comparaison du dispositif contrôleur vérifient que les engagements $R$, les défis $d'$ et les réponses $D$, satisfont à des relations du type :

$$R \equiv G_1^{d'_1} \times G_2^{d'_2} \times ... \times G_m^{d'_m} \times D^v \bmod n$$

ou à des relations du type :

$$R \equiv D^v / G_1^{d'_1} \times G_2^{d'_2} \times ... \times G_m^{d'_m} \bmod n$$

## Claims

1. Process for proving the authenticity of an entity, comprising:

   obtaining a set of one or more private values $Q_1$, $Q_2$, ..., $Q_m$ and respective public values $G_1$, $G_2$, ..., $G_m$, each pair of keys $(Q_i, G_i)$ verifying either the equation $G_i \cdot Q_i^v \equiv 1 \bmod n$ or the equation $G_i \equiv Q_i^v \bmod n$, wherein $m$ is an integer greater than or equal to 1, $i$, is a integer between 1 and $m$, and $n$ is a public integer equal to the product of $f$ private prime factors designated by $p_1$, ..., $p_f$, wherein $f$ is greater than or equal to 2, and $v$ is a public exponent such that $v = 2^k$, wherein $k$ is a security parameter having an integer value greater than 1, and wherein each public value $G_i$, for $i = 1, ..., m$, is such that $G_i \equiv g_i^2 \bmod n$, wherein $g_i$ is a base number having an integer value greater than 1 and smaller than each of the prime factors $p_1$, ..., $p_f$, and wherein, for at least one integer value $l$ between 1 and $m$, $g_i$ or $(-g_i)$ is a quadratic residue of the ring of integers modulo $n$, and wherein in the case where $G_i \equiv Q_i^v \bmod n$, among the $m$ numbers $q_i$ obtained by raising $Q_i$ to the square modulo $n$, $k^{-1}$ rank times, one of them is different from $\pm g_i$, and in the case where $G_i \cdot Q_i^v \equiv 1 \bmod n$, among the $m$ numbers $q_i$ obtained by raising the inverse of $Q_i$ to the square modulo $n$, $k^{-1}$ rank times, one of them is different from $\pm g_i$, wherein, for $i = 1, ..., m$, $q_i \equiv Q_i^{-v/2} \bmod n$ in the case $G_i \cdot Q_i^v \equiv 1 \bmod n$ and $q_i \equiv Q_i^{v/2} \bmod n$ in the case $G_i \equiv Q_i^v \bmod n$;
   receiving a commitment $R$ from a demonstrator;
   $R$ being computed such that $R \equiv r^v \bmod n$, where $r$ is a random number chosen by the demonstrator such that $0 < r < n$, or by using the Chinese remainder method from a set of commitment components $R_j$, wherein, for $j = 1, ..., f$, $R_j \equiv r_j^v \bmod p_j$, wherein $r_j$ is a random number chosen by the demonstrator such that $0 < r_j < p_j$;
   randomly selecting $m$ challenges $d_1$, $d_2$, ..., $d_m$;
   sending the challenges $d_1$, $d_2$, ..., $d_m$ to the demonstrator;
   receiving a response $D$ from the demonstrator;
   $D$ being computed such that $D \equiv r \times Q_1^{d1} \times Q_2^{d2} \times ... \times Q_m^{dm} \bmod n$, or from a set of response components $D_j$ using the Chinese remainder method, wherein for $j = 1, ..., f$, $D_j \equiv r_j \times Q_{1j}^{d1} \times Q_{2j}^{d2} \times ... \times Q_{mj}^{dm} \bmod p_j$, wherein $Q_{ij} \equiv Q_i \bmod p_j$ for $i = 1, ..., m$;
   determining that the demonstrator is authentic if the response $D$ has a value such that $R \equiv G_1^{d1}, G_2^{d2}, ...,$

$G_m^{dm} \blacksquare D^v$ mod $n$ in the case $G_i \times Q_i^v \equiv 1$ mod $n$ and $R \equiv D^v/G_1^{d1}$, $G_2^{d2}$, ..., $G_m^{dm}$ mod $n$ in the case $G_i \equiv Q_i^v$ mod $n$.

2. Process for proving the authenticity of a message, comprising:

obtaining a set of one or more private values $Q_1$, $Q_2$, ..., $Q_m$ and respective public values $G_1$, $G_2$, ..., $G_m$, each pair of keys $(Q_i, G_i)$ verifying either the equation $G_i \cdot Q_i^v \equiv 1$ mod $n$ or the equation $G_i \equiv Q_i^v$ mod $n$, wherein $m$ is an integer greater than or equal to 1, $i$ is a integer between 1 and $m$, and $n$ is a public integer equal to the product of $f$ private prime factors designated by $p_1$, ..., $p_f$, wherein $f$ is greater than or equal to 2, and $v$ is a public exponent such that $v = 2^k$, wherein $k$ is a security parameter having an integer value greater than 1, and wherein each public value $G_i$, for $i = 1$, ..., $m$, is such that $G_i \equiv g_i^2$ mod $n$, wherein $g_i$ is a base number having an integer value greater than 1 and smaller than each of the prime factors $p_1$, ..., $p_f$, and wherein, for at least one integer value $l$ between 1 and $m$, $g_i$ or ($-g_i$) is a quadratic residue of the ring of integers modulo $n$, and wherein in the case where $G_i \equiv Q_i^v$ mod $n$, among the $m$ numbers $q_i$ obtained by raising $Q_i$ to the square modulo $n$, k$^{-1}$ rank times, one of them is different from $\pm g_i$, and in the case where $G_i \cdot Q_i^v \equiv 1$ mod $n$, among the $m$ numbers $q_i$ obtained by raising the inverse of $Q_i$ modulo $n$ to the square modulo $n$, k$^{-1}$ rank times, one of them is different from $\pm g_i$, wherein, for $i = 1$, ..., $m$, $q_i \equiv Q_i^{-v/2}$ mod $n$ in the case $G_i \cdot Q_i^v \equiv 1$ mod $n$, and $q_i \equiv Q_i^{v/2}$ mod $n$ in the case $G_i \equiv Q_i^v$ mod $n$;
receiving a token $T$ from a demonstrator, wherein $T = h(M,R)$, $h$ is a hashing function, $M$ is a message received from the demonstrator, and $R$ is a commitment, $R$ being computed such that $R \equiv r^v$ mod $n$, where $r$ is a random number chosen by the demonstrator such that $0 < r < n$, or by using the Chinese remainder method from a set of commitment components $R_j$, wherein, for $j = 1$, ..., $f$, $R_j \equiv r_j^v$ mod $p_j$, wherein $r_j$ is a random number chosen by the demonstrator such that $0 < r_j < p_j$;
randomly selecting $m$ challenges $d_1$, $d_2$, ..., $d_m$;
sending the challenges $d_1$, $d_2$, ..., $d_m$ to the demonstrator;
receiving a response $D$ from the demonstrator;
$D$ being computed such that $D \equiv r \times Q_1^{d1} \times Q_2^{d2} \times ... \times Q_m^{dm}$ mod $n$, or from a set of response components $D_j$ using the Chinese remainder method, wherein for $j = 1$, ..., $f$, $D_j \equiv r_j \times Q_{1j}^{d1} \times Q_{2j}^{d2} \times ... \times Q_{mj}^{dm}$ mod $p_j$, wherein $Q_{ij} \equiv Q_i$ mod $p_j$ for $i = 1$, ..., $m$;
determining that the message $M$ is authentic if the response $D$ has a value such that $T \equiv h(M, G_1^{d1}, G_2^{d2}, ..., G_m^{dm} \blacksquare D^v$ mod $n$ in the case $G_i \times Q_i^v \equiv 1$ mod $n$) and $T \equiv h(M, D^v/G_1^{d1}, G_2^{d2}, ..., G_m^{dm}$ mod $n$) in the case $G_i \equiv Q_i^v$ mod $n$.

3. System for proving

- the authenticity of an entity and/or
- the integrity of a message $M$ associated with that entity,
by means of a set of one or more private values $Q_1$, $Q_2$, ..., $Q_m$ and respective public values $G_1$, $G_2$, ..., $G_m$, each pair of keys $(Q_i, G_i)$ verifying either the equation $G_i \cdot Q_i^v \equiv 1$ mod $n$ or the equation $G_i \equiv Q_i^v$ mod $n$, wherein $m$ is an integer greater than or equal to 1, $i$, is a integer between 1 and $m$, and $n$ is a public integer equal to the product of $f$ private prime factors designated by $p_1$, ..., $p_f$, wherein $f$ is greater than or equal to 2, and $v$ is a public exponent such that $v = 2^k$, wherein $k$ is a security parameter having an integer value greater than 1, and wherein each public value $G_i$, for $i = 1$, ..., $m$, is such that $G_i \equiv g_i^2$ mod $n$, wherein $g_i$ is a base number having an integer value greater than 1 and smaller than each of the prime factors $p_1$, ..., $p_f$, and wherein, for at least one integer value $l$ between 1 and $m$, $g_i$ or ($-g_i$) is a quadratic residue of the ring of integers modulo $n$, and wherein in the case where $G_i \equiv Q_i^v$ mod $n$, among the $m$ numbers $q_i$ obtained by raising $Q_i$ to the square

modulo $n$, $k^{-1}$ rank times, one of them is different from $\pm g_i$, and in the case where $G_i \cdot Q_i^v \equiv 1 \bmod n$, among the $m$ numbers $q_i$ obtained by raising the inverse of $Q_i$ modulo $n$ to the square modulo $n$, $k^{-1}$ rank times, one of them is different from $\pm g_i$, wherein, for $i = 1, ..., m$, $q_i \equiv Q_i^{-v/2} \bmod n$ in the case $G_i \cdot Q_i^v \equiv 1 \bmod n$ and

$q_i \equiv Q_i^{v/2} \bmod n$ in the case $G_i \equiv Q_i^v \bmod n$;

the said system comprising a witness device, contained especially in a nomad object which, for example, takes the form of a microprocessor-based bank card.

the witness device comprising:

- a memory zone containing the $f$ prime factors $p_i$ and/or the base numbers $g_i$ and/or the parameters of the Chinese remainders of the prime factors and/or the public integer $n$ and/or the $m$ private values $Q_i$ and/or the $f \cdot m$ components $Q_{i,j}$, such that $Q_{i,j} \equiv Q_{i,j} \bmod p_j$, of the private values $Q_i$ and the public exponent $v$;

the said witness device also comprising:

- random value production means, hereinafter called random value production means of the witness device,

- computation means, hereinafter called means for the computation of the commitments $R$ of the witness device, to compute commitments $R$ in the ring of integers modulo $n$,

either by carrying out operations of the type $R \equiv R^v \bmod n$, wherein $r$ is a random number produced by the random value production means, wherein $0 < r < n$, or by carrying out operations of the type $R_i \equiv r_i^v \bmod n$, wherein $r_i$ is a random value associated with the prime number $p_i$ such that $0 < r_i < p_i$, each $r_i$ belonging to a collection of random values $\{r_1, r_2, ... r_f\}$, produced by the random value production means and then by applying the Chinese remainder method;

the said witness device also comprising:

- reception means, hereinafter called the means for reception of the challenges $d$ of the witness device, receiving one or more challenges $d$; each challenge $d$ comprising $m$ integers $d_i$ hereinafter called elementary challenges;

- computation means, hereinafter called means for computation of the response $D$ of the witness device, for computing, on the basis of each challenge $d$, a response $D$, either by carrying out operations of the type $D \equiv r \times Q_1^{d1} \times Q_2^{d2} \times ... \times Q_m^{dm} \bmod n$, or by carrying out operations of the type $D_j \equiv r_j \times Q_{i,1}^{d1} \times Q_{i,2}^{d2} \times ... \times Q_{i,m}^{dm} \bmod p_i$, then by applying the Chinese remainder method;

- transmission means to transmit one or more commitments $R$ and one or more responses $D$;

and the said system being such that there are as many responses $D$ as there are challenges $d$ as there are commitments $R$, each group of numbers R, d, D forming a triplet referenced {R, d, D}.

4. System according to Claim 3 for proving the authenticity of an entity known as a demonstrator to an entity known as a controller, the said system comprising:

- a demonstrator device associated with the demonstrator entity, the said demonstrator device being interconnected with the witness device by interconnection means, and taking in particular the form of logic microcircuits in a nomad object, for example the form of a microprocessor in a microprocessor-based bank card;

- a controller device associated with the controller entity, the said controller device taking in particular the form of a terminal or remote server, the said controller device comprising connection means for its electrical, electromagnetic, optical or acoustic connection, particularly through a computer communications network, to the demonstrator device;

the witness device comprising transmission means, hereinafter called the transmission means of the witness device, for transmitting all or part of each commitment $R$ to the demonstrator device, via the interconnection means;

the demonstrator device also comprising transmission means, hereinafter called the transmission means of the demonstrator, for transmitting all or part of each commitment $R$ to the controller device, via the connection means;

the controller device also comprising challenge production means for producing, after having received all or part of each commitment $R$, challenges $d$ in a number equal to the number of commitments $R$,

the controller device also comprising transmission means, hereinafter called the transmission means of the controller, to transmit the challenges $d$ to the demonstrator via the connection means;

the controller device also comprising:

- computation means, hereinafter called the computation means of the controller device,

- comparison means, hereinafter called the comparison means of the controller device,

such that in the case where the transmission means of the demonstrator have transmitted a part of each commitment $R$, the computation means of the controller device, having $m$ public values $G_1, G_2, ..., G_m$, compute from each challenge $d$ and each response $D$, a reconstructed commitment $R$' satisfying a relationship of the type:

$$R' \equiv G_1^{d1} \times G_2^{d2} \times ... \times G_m^{dm} \times D^v \bmod n$$

or a relationship of the type:

$$R' \equiv D^v/G_1^{d1} \times G_2^{d2} \times ... \times G_m^{dm} \times D^v \bmod n,$$

the comparison means of the controller device compare each reconstructed commitment $R'$ with all or part of each commitment $R$ received, and in the case where the transmission means of the demonstrator have transmitted the totality of each commitment $R$, the computation means and the comparison means of the controller device, having $m$ public values $G_1, G_2, ..., G_m$, verify that each commitment $R$ satisfies a relationship of the type:

$$R \equiv G_1^{d1} \times G_2^{d2} \times ... \times G_m^{dm} \times D^v \bmod n$$

or a relationship of the type:

$$R \equiv D^v/G_1^{d1} \times G_2^{d2} \times ... \times G_m^{dm} \times D^v \bmod n.$$

**5.** System according to Claim 3 for proving to an entity known as a controller the integrity of a message $M$ associated with an entity known as a demonstrator, the said system comprising:

- a demonstrator device associated with the demonstrator entity, the said demonstrator device being interconnected with the witness device by interconnection means, and taking in particular the form of logic microcircuits in a nomad object, for example the form of a microprocessor in a microprocessor-based bank card;
- a controller device associated with the controller entity, the said controller device taking in particular the form of a terminal or remote server, the said controller device comprising connection means for its electrical, electromagnetic, optical or acoustic connection, particularly through a computer communications network, to the demonstrator device;
the witness device comprising transmission means, hereinafter called the transmission means of the witness device, for transmitting all or part of each commitment $R$ to the demonstrator device, via the interconnection means;
the demonstrator device comprising computation means, hereinafter called the computation means of the demonstrator, applying a hashing function $h$ whose arguments are the message $M$ and all or part of each commitment $R$, for computing at least one token $T$;
the demonstrator device also comprising transmission means, hereinafter called the transmission means of the demonstrator device, for transmitting each token $T$, via the connection means, to the controller device;
the controller device also comprising challenge production means for producing, after having received the token $T$, challenges $d$ in a number equal to the number of commitments $R$,
the controller device also comprising transmission means, hereinafter called the transmission means of the controller, for transmitting the challenges $d$ to the demonstrator, via the connection means;
the controller device also comprising computation means, hereinafter called the computation means of the controller device, having $m$ public values $G_1, G_2, ..., G_m$, firstly for computing from each challenge $d$ and each response $D$, a reconstructed commitment $R'$ satisfying a relationship of the type:

$$R' \equiv G_1^{d1} \times G_2^{d2} \times ... \times G_m^{dm} \times D^v \bmod n$$

or a relationship of the type:

$$R' \equiv D^v/G_1^{d1} \times G_2^{d2} \times ... \times G_m^{dm} \times D^v \bmod n,$$

and secondly, for computing a token $T'$ by applying the hashing function $h$ having as arguments the message *M* and all or part of each reconstructed commitment *R'*,
the controller device also comprising comparison means, hereinafter called the comparison means of the controller device, to compare the computed token *T'* with the received token *T*.

**6.** System according to Claim 3 for proving the digital signature of a message *M*, hereinafter called a signed message, by an entity called a signing entity,
the signed message comprises:

- the message *M*,
- the challenges *d* and/or the commitments *R*,
- the responses *D*;

the said system comprising a signing device associated with the signing entity, the said signing device being interconnected with the witness device by interconnection means, and taking in particular the form of logic microcircuits in a nomad object, for example in the form of a microprocessor in a microprocessor-based bank card,
the witness device comprising transmission means, hereinafter called the transmission means of the witness device, for transmitting all or part of each commitment *R* to the signing device, via the interconnection means;
the signing device comprising computation means, hereinafter called the computation means of the signing device, which apply a hashing function *h* whose arguments are the message *M* and all or part of each commitment *R*, for computing a binary train and extracting, from this binary train, challenges *d* whose number is equal to the number of commitments *R*;
the witness device comprising transmission means, hereinafter called the transmission means of the witness device, for transmitting the responses *D* to the signing device, via the interconnection means.

**7.** System according to Claim 6 for proving the authenticity of the message *M* by checking, with an entity called a controller, the signed message, the said system comprising a controller device associated with the controller entity, the said controller device taking in particular the form of a terminal or remote server, the said controller device comprising connection means for its electrical, electromagnetic, optical or acoustic connection, particularly through a computer communications network, to the signing device;
the signing device associated with the signing entity comprising transmission means, hereinafter called the transmission means of the signing device, for transmitting the signed message to the controller device via the connection means, such that the controller device has a signed message comprising:

- the message *M*,
- the challenges *d* and/or the commitments *R*,
- the responses *D*;

the controller device comprising

- computation means, hereinafter called the computation means of the controller device,
- comparison means, hereinafter called the comparison means of the controller device,

such that in the case where the controller device has the commitments *R*, the challenges *d*, the responses *D*,

● the computation and comparison means of the controller device verify that the commitments *R*, the challenges *d*, and the responses *D* satisfy relationships of the type:

$$R \equiv G_1^{d1} \times G_2^{d2} \times ... \times G_m^{dm} \times D^v \bmod n$$

or relationships of the type:

$$R \equiv D^v/G_1^{d1} \times G_2^{d2} \times ... \times G_m^{dm} \times D^v \bmod n,$$

● the computation and comparison means of the controller device verify that the message *M*, the challenges *d*, and the commitments *R* satisfy the hashing function

$$d = h(message, R);$$

in the case where the controller device has the challenges *d,* and the responses *D,*
● the computation means of the controller device calculate, from each challenge *d,* and each response *D,* commitments *R'* satisfying relationships of the type

$$R' \equiv G_1{}^{d1} \times G_2{}^{d2} \times ...\times G_m{}^{dm} \times D^v \bmod n$$

or relationships of the type:

$$R' \equiv D^v/G_1{}^{d1} \times G_2{}^{d2} \times ...\times G_m{}^{dm} \times D^v \bmod n,$$

● the computation and comparison means of the controller device verify that the message *M* and the challenges *d* satisfy the hashing function

$$d = h(message, R');$$

and
in the case where the controller device has the commitments *R* and the responses *D,*
● the computation means of the controller device apply the hashing function and compute *d'* such that

$$d' = h(message, R)$$

● the computation and comparison means of the controller device verify that the commitments *R*, the challenges *d'* and the responses *D,* satisfy relationships of the type

$$R \equiv G_1{}^{d'1} \times G_2{}^{d'2} \times ...\times G_m{}^{d'm} \times D^v \bmod n$$

or relationships of the type:

$$R \equiv D^v/G_1{}^{d'1} \times G_2{}^{d'2} \times ...\times G_m{}^{d'm} \times D^v \bmod n \ .$$

**Patentansprüche**

1. Verfahren zum Ermöglichen der Authentifizierung einer Entität, das umfasst:

Erlangen einer Menge aus einem oder mehreren privaten Werten $Q_1$, $Q_2$, ..., $Q_m$ und entsprechenden öffentlichen Werten $G_1$, $G_2$, ..., $G_m$, wobei jedes Schlüsselpaar ($Q_i$, $G_i$) entweder die Gleichung $G_i \cdot Q_i^v \equiv 1 \bmod n$ oder die Gleichung $G_i \equiv Q_i^v \bmod n$ erfüllt, wobei *m* eine ganze Zahl größer oder gleich 1 ist, *i* eine ganze Zahl zwischen 1 und *m* ist und *n* eine öffentliche ganze Zahl gleich dem Produkt aus *f* privaten Primfaktoren, die mit $p_1$, ..., $p_f$ bezeichnet sind, wobei *f* größer oder gleich 2 ist, und *v* ein öffentlicher Exponent wie etwa *v* = $2^k$ ist, wobei *k* ein Sicherheitsparameter mit einem ganzzahligen Wert größer 1 ist, und wobei jeder öffentliche Wert $G_i$, für *i* = 1, ..., *m,* derart ist, dass $G_i \equiv g_i{}^2 \bmod n$, wobei $g_i$ eine Basiszahl mit einem ganzzahligen Wert größer 1 und kleiner als jeder der Primfaktoren $p_1$, ..., $p_f$ ist und wobei, für wenigstens einen ganzzahligen Wert *l* zwischen 1 und *m*, $g_l$ oder ($-g_l$) ein quadratisches Residuum des Rings der ganzen Zahlen modulo *n* ist und wobei im Fall dass $G_i \equiv Q_i^v \; mod \; n$ unter den $m$ erlangten Zahlen $q_i$ unter Erhebung von $Q_i$ ins Quadrat modulo $n$, $k$-1 mal dem Rang, eine von ihnen von $\pm \, g_i$ verschieden ist und im Fall dass $G_i \cdot Q_i^v \equiv 1 \; \text{mod} \; n$ unter den $m$ erlangten Zahlen $q_i$ unter Erhebung des Kehrwertes von $Q_i$ modulo $n$ ins Quadrat modulo $n$, $k$-1 mal dem Rang, eine von ihnen von $\pm \, g_i$ verschieden ist, wobei, für $i = 1, ..., m$, $q_i \equiv Q_i^{-v/2} \; \text{mod} \; n$ im Fall

$G_i \times \; Q_i^v \equiv 1 \, \text{mod} \; n$ und $q_i \equiv Q_i^{v/2} \text{mod} \; n$ im Fall $G_i \equiv Q_i^v$ mod $n$;

Empfangen einer Verpflichtung $R$ eines Demonstrators,
wobei $R$ entweder derart, dass $R \equiv r^v$ mod $n$, wobei $r$ eine von dem Demonstrator gewählte Zufallszahl ist, derart, dass $0 < r < n$, oder unter Anwendung des Verfahrens nach dem chinesischen Restsatz, ausgehend von einer Menge von Verpflichtungskomponenten $R_j$, wobei, für $j = 1, ..., f$, $R_j \equiv r_j^v$ mod $p_j$, wobei $r_j$ eine von dem Demonstrator gewählte Zufallszahl ist, derart, dass $0 < r_j < p_j$, berechnet wird;
willkürliches Auslosen von $m$ Anforderungen $d_1$, $d_2$, ..., $d_m$;
Senden der Anforderungen $d_1$, $d_2$, ..., $d_m$ zum Demonstrator;
Empfangen einer Antwort $D$ vom Demonstrator,
wobei $D$ entweder derart, dass $D \equiv r \times Q_1^{d1} \times Q_2^{d2} \times ... \times Q_m^{dm}$ mod $n$, oder, ausgehend von einer Menge von Antwortkomponenten $D_j$ unter Anwendung des Verfahrens nach dem chinesischen Restsatz, wobei, für $j = 1, ..., f$, $D_j \equiv r_j \times Q_{1,j}^{d1} \times Q_{2,j}^{d2} \times ... \times Q_{m,j}^{dm}$ mod $p_j$, wobei $Q_{i,j} \equiv Q_i$ mod $p_j$ für $i = 1, ..., m$, berechnet wird;
Bestimmen, dass der Demonstrator authentisch ist, wenn die Antwort $D$ einen solchen Wert hat, dass $R \equiv G_1^{d1}$ $\cdot G2^{d2} \cdot ... \cdot G_m^{dm} \cdot D^v$ mod $n$ im Fall $G_i \times Q_i^v \equiv 1 \;\; \text{mod} \; n$ und $R \equiv D^v/G_1^{d1} \cdot G_2^{d2} \cdot ... \cdot G_m^{dm}$ mod $n$ im Fall $G_i \equiv Q_i^v \;\; \text{mod} \; n.$

**2.** Verfahren zum Ermöglichen der Authentifizierung einer Nachricht, das umfasst:

Erlangen einer Menge aus einem oder mehreren privaten Werten $Q_1$, $Q_2$, ..., $Q_m$ und entsprechenden öffentlichen Werten $G_1$, $G_2$, ..., $G_m$, wobei jedes Schlüsselpaar ($Q_i$, $G_i$) entweder die Gleichung $G_i \cdot Q_i^v \equiv 1 \, \text{mod}$ $n$ oder die Gleichung $G_i \equiv Q_i^v$ mod $n$ erfüllt, wobei $m$ eine ganze Zahl größer oder gleich 1 ist, $i$ eine ganze Zahl zwischen 1 und $m$ ist und $n$ eine öffentliche ganze Zahl gleich dem Produkt aus $f$ privaten Primfaktoren, die mit $p_1$, ..., $p_f$ bezeichnet sind, wobei $f$ größer oder gleich 2 ist, und $v$ ein öffentlicher Exponent wie etwa $v = 2^k$ ist, wobei $k$ ein Sicherheitsparameter mit einem ganzzahligen Wert größer 1 ist, und wobei jeder öffentliche Wert $G_i$, für $i = 1, ..., m$, derart ist, dass $G_i \equiv g_i^2$ mod $n$, wobei $g_i$ eine Basiszahl mit einem ganzzahligen Wert größer 1 und kleiner als jeder der Primfaktoren $p_1$, ..., $p_f$ ist und wobei, für wenigstens einen ganzzahligen Wert $l$ zwischen 1 und $m$, $g_l$ oder ($-g_l$) ein quadratisches Residuum des Rings der ganzen Zahlen modulo $n$ ist und wobei im Fall dass $G_i \equiv Q_i^v \; mod \; n$ unter den $m$ erlangten Zahlen $q_i$ unter Erhebung von $Q_i$ ins Quadrat modulo $n$, $k$-1 mal dem Rang, eine von ihnen von $\pm \, g_i$ verschieden ist und im Fall dass $G_i \cdot Q_i^v \equiv 1 \; \text{mod} \; n$ unter den $m$ erlangten Zahlen $q_i$ unter Erhebung des Kehrwertes von $Q_i$ modulo $n$ ins Quadrat modulo $n$, $k$-1 mal dem Rang, eine von ihnen von $\pm \, g_i$ verschieden ist, wobei, für $i = 1, ..., m$, $q_i \equiv Q_i^{-v/2} \; mod \; n$ im Fall $G_i$ $\times Q_i^v \equiv 1 \; 1 \; \text{mod} \; n$ und $q_i \equiv Q_i^{v/2}$ mod $n$ im Fall $G_i \equiv Q_i^v$ mod $n$;

Empfangen eines Jetons $T$ eines Demonstrators, wobei $T = h(M, R)$, $h$ eine Hash-Funktion ist, $M$ eine von dem Demonstrator empfangene Nachricht ist und $R$ eine Verpflichtung ist,
wobei $R$ entweder derart, dass $R \equiv r^v$ mod $n$, wobei $r$ eine von dem Demonstrator gewählte Zufallszahl ist, derart, dass $0 < r < n$, oder unter Anwendung des Verfahrens nach dem chinesischen Restsatz, ausgehend von einer Menge von Verpflichtungskomponenten $R_j$, wobei, für $j = 1, ..., f$, $R_j \equiv r_j^v$ mod $p_j$, wobei $r_j$ eine von dem Demonstrator gewählte Zufallszahl ist, derart, dass $0 < r_j < p_j$, berechnet wird;
willkürliches Auslosen von $m$ Anforderungen $d_1$, $d_2$, ..., $d_m$;

Senden der Anforderungen $d_1$, $d_2$, ..., $d_m$ zum Demonstrator; Empfangen einer Antwort $D$ vom Demonstrator, wobei $D$ entweder derart, dass $D \equiv r \times Q_1^{d1} \times Q_2^{d2} \times ... \times Q_m^{dm}$ mod $n$, oder, ausgehend von einer Menge von Antwortkomponenten $D_j$ unter Anwendung des Verfahrens nach dem chinesischen Restsatz, wobei, für $j$ = 1, ..., $f$, $D_j \equiv r_j \times Q_{1,j}^{d1} \times Q_{2,j}^{d2} \times ... \times Q_{m,j}^{dm}$ mod $p_j$, wobei $Q_{i,j} \equiv Q_i$ mod $p_j$ für $i$ = 1, ..., $m$, berechnet wird; Bestimmen, dass die Nachricht $M$ authentisch ist, wenn die Antwort $D$ einen solchen Wert hat, dass $T \equiv h(M,$ $G_1^{d1} \cdot G_2^{d2} \cdot ... \cdot G_m^{dm} \cdot D^v$ mod $n$ im Fall $G_i \times Q_i^{v} \equiv 1$ mod $n$) und $T \equiv h(M, D^v/G_1^{d1} \cdot G2^{d2} \cdot ... \cdot G_m^{dm}$ mod $n$) im Fall $G_i \equiv Q_i^{v}$ mod $n$.

**3.** System, das dazu vorgesehen ist, nachzuweisen:

- die Authentizität einer Entität und/oder
- die Unverfälschtheit einer Nachricht $M$, die dieser Entität zugeordnet ist, mittels einer Menge aus einem oder mehreren privaten Werten $Q_1$, $Q_2$, ..., $Q_m$ und entsprechenden öffentlichen Werten $G_1$, $G_2$, ..., $G_m$, wobei jedes Schlüsselpaar ($Q_i$, $G_i$) entweder die Gleichung $G_i \cdot Q_i^v \equiv 1$ mod $n$ oder die Gleichung $G_i \equiv Q_i^v$ mod $n$ erfüllt, wobei $m$ eine ganze Zahl größer oder gleich 1 ist, $i$ eine ganze Zahl zwischen 1 und $m$ ist und $n$ eine öffentliche ganze Zahl gleich dem Produkt aus $f$ privaten Primfaktoren, die mit $p_1$, ..., $p_f$ bezeichnet sind, wobei $f$ größer oder gleich 2 ist, und $v$ ein öffentlicher Exponent wie etwa $v = 2^k$ ist, wobei $k$ ein Sicherheitsparameter mit einem ganzzahligen Wert größer 1 ist, und wobei jeder öffentliche Wert $G_i$, für $i$ = 1, ..., $m$, derart ist, dass $G_i \equiv g_i^2$ mod $n$, wobei $g_i$ eine Basiszahl mit einem ganzzahligen Wert größer 1 und kleiner als jeder der Primfaktoren $p_1$, ..., $p_f$ ist und wobei, für wenigstens einen ganzzahligen Wert $l$ zwischen 1 und $m$, $g_l$ oder ($-g_l$) ein quadratisches Residuum des Rings der ganzen Zahlen modulo $n$ ist und wobei im Fall dass $G_i \equiv Q_i^v$ mod $n$ unter den $m$ erlangten Zahlen $q_i$ unter Erhebung von $Q_i$ ins Quadrat modulo $n$, $k$-1 mal dem Rang, eine von ihnen von $\pm\ g_i$ verschieden ist und im Fall dass $G_i \cdot Q_i^v \equiv 1$ mod $n$ unter den $m$ erlangten Zahlen $q_i$ unter Erhebung des Kehrwertes von $Q_i$ modulo $n$ ins Quadrat modulo $n$, $k$-1 mal dem Rang, eine von ihnen von $\pm\ g_i$ verschieden ist, wobei, für $i$ = 1, ..., $m$, $q_i \equiv Q_i^{-v/2}$ mod $n$ im Fall $G_i \times\ Q_i^{v} \equiv 1$ mod $n$ und $q_i \equiv Q_i^{v/2}$ mod $n$ im Fall $G_i \equiv Q_i^{v}$ mod $n$,

wobei das System eine Bezeugeeinrichtung umfasst, die insbesondere in einem nomadischen bzw. beweglichen Objekt enthalten ist, das beispielsweise in Form einer Scheckkarte mit Mikroprozessor auftritt,
wobei die Bezeugeeinrichtung Folgendes umfasst:
- eine Speicherzone, die die $f$ Primfaktoren $p_i$ und/oder die $m$ Basiszahlen $g_i$ und/oder die Parameter des chinesischen Restsatzes der Primfaktoren und/oder die öffentliche ganze Zahl $n$ und/oder die m privaten Werte $Q_i$ und/oder die $f \cdot m$ Komponenten $Q_j$, derart, dass $Q_{i,j} \equiv Q_i$ mod $p_j$, private Werte $Q_i$ und den öffentlichen Exponenten $v$ enthält;
wobei die Bezeugeeinrichtung außerdem Folgendes umfasst:
- Mittel zur Erzeugung von Zufallszahlen, nachstehend bezeichnet als Mittel zur Erzeugung von Zufallszahlen der Bezeugeeinrichtung,
- Rechenmittel, nachstehend bezeichnet als Mittel zur Berechnung der Verpflichtungen $R$ der Bezeugeeinrichtung, um die Verpflichtungen $R$ in dem Ring der ganzen Zahlen modulo $n$ zu berechnen, indem entweder Operationen des Typs $R \equiv r^v$ mod $n$ ausgeführt werden, wobei $r$ eine von den Mitteln zur Erzeugung von Zufallszahlen erzeugte Zufallszahl ist, wobei $0 < r < n$, oder Operationen des Typs $R_i \equiv r_i^v$ mod $n$ ausgeführt werden, wobei $r_i$ eine der Primzahl $p_i$ zugeordnete Zufallszahl ist, derart, dass $0 < r_i < p_i$, wobei jedes $r_i$ zu einer Sammlung von Zufallszahlen $\{r_1, r_2, ..., r_f\}$ gehört, die von den Mitteln zur Erzeugung von Zufallszahlen unter anschließender Anwendung des Verfahrens nach dem chinesischen Restsatz erzeugt wird;
wobei die Bezeugeeinrichtung außerdem Folgendes umfasst:
- Empfangsmittel, nachstehend bezeichnet als Mittel zum Empfangen der Anforderungen $d$ der Bezeugeeinrichtung, um eine oder mehrere Anforderungen $d$ zu empfangen, wobei jede Anforderung $d$ $m$ Ganzzahlen $d_i$ umfasst, die nachstehend als Elementaranforderungen bezeichnet werden;
- Rechenmittel, nachstehend bezeichnet als Mittel zur Berechnung der Antworten $D$ der Bezeugeeinrichtung, um, ausgehend von jeder Anforderung $d$, eine Antwort $D$ zu berechnen, indem entweder Operationen des Typs $D \equiv r \times Q_1^{d1} \times Q_2^{d2} \times ... \times Q_m^{dm}$ *mod* $n$ ausgeführt werden oder Operationen des Typs $D_j \equiv r_j \times Q_{i,1}^{d1} \times$

$Q_{i,2}^{d2} \times \ldots \times Q_{i,m}^{dm}$ mod $p_i$ unter anschließender Anwendung des Verfahrens nach dem chinesischen Restsatz ausgeführt werden;

- Übertragungsmittel zum Übertragen einer oder mehrerer Verpflichtungen $R$ und einer oder mehrerer Antworten $D$;

und wobei das System derart ist, dass es ebenso viele Antworten $D$ wie Anforderungen $d$ oder Verpflichtungen $R$ hat, wobei jede Zahlengruppe $R$, $d$, $D$ ein mit $\{R, d, D\}$ verzeichnetes Tripel bildet.

4. System nach Anspruch 3, das dazu vorgesehen ist, die Authentizität einer Entität nachzuweisen, die Demonstrator genannt wird, mit einer Entität, die Kontrolleur genannt wird,

wobei das System Folgendes umfasst:

- eine Demonstriereinrichtung, die der Entität "Demonstrator" zugeordnet ist, wobei die Demonstriereinrichtung durch Zusammenschaltmittel bzw. Zwischenverbindungsmittel mit der Bezeugeeinrichtung zusammengeschaltet ist und insbesondere in Form von logischen Mikroschaltungen in einem beweglichen Objekt, beispielsweise in Form eines Mikroprozessors in einer Scheckkarte mit Mikroprozessor, auftreten kann,
- eine Kontrolleinrichtung, die der Entität "Kontrolleur" zugeordnet ist, wobei die Kontrolleinrichtung insbesondere in Form eines Endgerätes oder eines fernen Servers auftritt, wobei die Kontrolleinrichtung Verbindungsmittel zum elektrischen, elektromagnetischen oder optischen Verbinden oder Verbinden auf akustische Weise, insbesondere über ein computergestütztes Kommunikationsnetz, mit der Demonstriereinrichtung umfasst;

wobei die Bezeugeeinrichtung Übertragungsmittel, nachstehend bezeichnet als Übertragungsmittel der Bezeugeeinrichtung, umfasst, um die Gesamtheit oder einen Teil jeder Verpflichtung $R$ über die Zusammenschaltmittel zur Demonstriereinrichtung zu übertragen;

wobei die Demonstriereinrichtung ebenfalls Übertragungsmittel, nachstehend bezeichnet als Übertragungsmittel des Demonstrators, umfasst, um die Gesamtheit oder einen Teil jeder Verpflichtung $R$ über die Verbindungsmittel zur Kontrolleinrichtung zu übertragen,

wobei die Kontrolleinrichtung außerdem Mittel zur Erzeugung von Anforderungen umfasst, um, nachdem sie die Gesamtheit oder einen Teil jeder Verpflichtung $R$ empfangen hat, Anforderungen $d$ in einer Anzahl, die gleich der Anzahl von Verpflichtungen $R$ ist, zu erzeugen,

wobei die Kontrolleinrichtung ebenfalls Übertragungsmittel, nachstehend bezeichnet als Übertragungsmittel des Kontrolleurs, umfasst, um die Anforderungen $d$ über die Verbindungsmittel zum Demonstrator zu übertragen;

wobei die Kontrolleinrichtung außerdem Folgendes umfasst:

- Rechenmittel, nachstehend bezeichnet als Rechenmittel der Kontrolleinrichtung,
- Vergleichsmittel, nachstehend bezeichnet als Vergleichsmittel der Kontrolleinrichtung.

derart, dass dann, wenn die Übertragungsmittel des Demonstrators einen Teil jeder Verpflichtung $R$ übertragen haben, die Rechenmittel der Kontrolleinrichtung, die über die $m$ öffentlichen Werte $G_1$, $G_2$, ..., $G_m$ verfügen, ausgehend von jeder Anforderung $d$ und jeder Antwort $D$, eine rekonstruierte Verpflichtung $R'$ berechnen, die einer Beziehung des Typs

$$R' \equiv G_1^{d_1} \times G_2^{d_2} \times \ldots \times G_m^{d_m} \times D^v \bmod n$$

oder einer Beziehung des Typs

$$R' \equiv D^v / G_1^{d_1} \times G_2^{d_2} \times \ldots \times G_m^{d_m} \bmod n$$

genügt,

wobei die Vergleichsmittel der Kontrolleinrichtung jede rekonstruierte Verpflichtung $R'$ mit der Gesamtheit oder einem Teil jeder empfangenen Verpflichtung $R$ vergleichen und im Fall, dass die Übertragungsmittel des Demonstrators jede Verpflichtung $R$ zur Gänze übertragen haben, die Rechenmittel und die Vergleichsmittel der Kontrolleinrichtung, die über die $m$ öffentlichen Werte $G_1$, $G_2$, ..., $G_m$ verfügen, prüfen, ob jede Verpflichtung $R$ einer Beziehung des Typs

$$R \equiv G_1{}^{d_1} \times G_2{}^{d_2} \times \ldots \times G_m{}^{d_m} \times D^{v} \bmod n$$

oder einer Beziehung des Typs

$$R \equiv D^{v} \big/ G_1{}^{d_1} \times G_2{}^{d_2} \times \ldots \times G_m{}^{d_m} \bmod n$$

genügt.

5. System nach Anspruch 3, das dazu vorgesehen ist, einer Entität, die Kontrolleur genannt wird, die Unverfälschtheit einer Nachricht $M$, die einer Entität zugeordnet ist, die Demonstrator genannt wird, zu beweisen, wobei das System Folgendes umfasst:

- eine Demonstriereinrichtung, die der Entität "Demonstrator" zugeordnet ist, wobei die Demonstriereinrichtung durch Zusammenschaltmittel mit der Bezeugeeinrichtung zusammengeschaltet ist und insbesondere in Form von logischen Mikroschaltungen in einem beweglichen Objekt, beispielsweise in Form eines Mikroprozessors in einer Scheckkarte mit Mikroprozessor, auftreten kann,
- eine Kontrolleinrichtung, die der Entität "Kontrolleur" zugeordnet ist, wobei die Kontrolleinrichtung insbesondere in Form eines Endgerätes oder eines fernen Servers auftritt, wobei die Kontrolleinrichtung Verbindungsmittel zum elektrischen, elektromagnetischen oder optischen Verbinden oder Verbinden auf akustische Weise, insbesondere über ein computergestütztes Kommunikationsnetz, mit der Demonstriereinrichtung umfasst;
wobei die Bezeugeeinrichtung Übertragungsmittel, nachstehend bezeichnet als Übertragungsmittel der Bezeugeeinrichtung, umfasst, um die Gesamtheit oder einen Teil jeder Verpflichtung $R$ über die Zusammenschaltmittel zur Demonstriereinrichtung zu übertragen;
wobei die Demonstriereinrichtung Rechenmittel, nachstehend bezeichnet als Rechenmittel des Demonstrators, umfasst, die eine Hash-Funktion $h$ anwenden, die als Argumente die Nachricht $M$ und die Gesamtheit oder einen Teil jeder Verpflichtung $R$ hat, um wenigstens einen Jeton $T$ zu berechnen,
wobei die Demonstriereinrichtung ebenfalls Übertragungsmittel, nachstehend bezeichnet als Übertragungsmittel der Demonstriereinrichtung, umfasst, um jeden Jeton $T$ über die Verbindungsmittel zur Kontrolleinrichtung zu übertragen;
wobei die Kontrolleinrichtung Mittel zur Erzeugung von Anforderungen umfasst, um, nachdem sie den Jeton $T$ empfangen hat, Anforderungen $d$ in einer Anzahl, die gleich der Anzahl von Verpflichtungen $R$ ist, zu erzeugen, wobei die Kontrolleinrichtung ebenfalls Übertragungsmittel, nachstehend bezeichnet als Übertragungsmittel des Kontrolleurs, umfasst, um die Anforderungen $d$ über die Verbindungsmittel zum Demonstrator zu übertragen;
wobei die Kontrolleinrichtung ebenfalls Rechenmittel, nachstehend bezeichnet als Rechenmittel der Kontrolleinrichtung, umfasst, die über die $m$ öffentlichen Werte $G_1$, $G_2$, ..., $G_m$ verfügen, um zum einen, ausgehend von jeder Anforderung $d$ und jeder Antwort $D$, eine rekonstruierte Verpflichtung $R'$ zu berechnen, die einer Beziehung des Typs

$$R' \equiv G_1{}^{d_1} \times G_2{}^{d_2} \times \ldots \times G_m{}^{d_m} \times D^{v} \bmod n$$

oder einer Beziehung des Typs

$$R' \equiv D^{v} \big/ G_1{}^{d_1} \times G_2{}^{d_2} \times \ldots \times G_m{}^{d_m} \bmod n$$

genügt, und zum anderen unter Anwendung der Hash-Funktion $h$, die als Argumente die Nachricht $M$ und die Gesamtheit oder einen Teil jeder rekonstruierten Verpflichtung $R'$ hat, einen Jeton $T'$ zu berechnen,
wobei die Kontrolleinrichtung außerdem Vergleichsmittel, nachstehend bezeichnet als Vergleichsmittel der Kontrolleinrichtung, umfasst, um den berechneten Jeton $T'$ mit dem empfangenen Jeton $T$ zu vergleichen.

6. System nach Anspruch 3, das dazu vorgesehen ist, die digitale Signatur bzw.

Unterschrift einer Nachricht *M*, nachstehend bezeichnet als signierte Nachricht, durch eine Entität, die Entität "Unterzeichner" genannt wird, zu erzeugen,
wobei die signierte Nachricht Folgendes umfasst:

- die Nachricht *M*,
- die Anforderungen *d* und/oder die Verpflichtungen *R,*
- die Antworten *D*;

wobei das System eine Signiereinrichtung, die der Entität "Unterzeichner" zugeordnet ist, umfasst, wobei die Signiereinrichtung durch Zusammenschaltmittel mit der Bezeugeeinrichtung zusammengeschaltet ist und insbesondere in Form von logischen Mikroschaltungen in einem beweglichen Objekt, beispielsweise in Form eines Mikroprozessors in einer Scheckkarte mit Mikroprozessor auftreten kann,
wobei die Bezeugeeinrichtung Übertragungsmittel, nachstehend bezeichnet als Übertragungsmittel der Bezeugeeinrichtung, umfasst, um die Gesamtheit oder einen Teil jeder Verpflichtung *R* über die Zusammenschaltmittel zur Signiereinrichtung zu übertragen;
wobei die Signiereinrichtung Rechenmittel, nachstehend bezeichnet als Rechenmittel der Signiereinrichtung, umfasst, die eine Hash-Funktion *h* anwenden, die als Argumente die Nachricht *M* und die Gesamtheit oder einen Teil jeder Verpflichtung *R* hat, um eine Binärfolge zu berechnen und aus dieser Binärfolge Anforderungen *d* in einer Anzahl, die gleich der Anzahl von Verpflichtungen *R* ist, zu extrahieren;
wobei die Bezeugeeinrichtung Übertragungsmittel, nachstehend bezeichnet als Übertragungsmittel der Bezeugeeinrichtung, umfasst, um die Antworten *D* über die Zusammenschaltmittel zur Signiereinrichtung zu übertragen.

**7.** System nach Anspruch 6, das dazu vorgesehen ist, die Authentizität der Nachricht M nachzuweisen, indem durch einen Entität, die Kontrolleur genannt wird, die signierte Nachricht kontrolliert wird,
wobei das System eine Kontrolleinrichtung, die der Entität "Kontrolleur" zugeordnet ist, umfasst, wobei die Kontrolleinrichtung insbesondere in Form eines Endgerätes oder eines fernen Servers auftritt, wobei die Kontrolleinrichtung Verbindungsmittel zum elektrischen, elektromagnetischen oder optischen Verbinden oder Verbinden auf akustische Weise, insbesondere über ein computergestütztes Kommunikationsnetz, mit der Signiereinrichtung umfasst;
wobei die Signiereinrichtung, die der Entität "Unterzeichner" zugeordnet ist, Übertragungsmittel, nachstehend bezeichnet als Übertragungsmittel der Signiereinrichtung, umfasst, um die signierte Nachricht über die Verbindungsmittel zur Kontrolleinrichtung zu übertragen, so dass die Kontrolleinrichtung über eine signierte Nachricht verfügt, die Folgendes umfasst:

- die Nachricht *M*,
- die Anforderungen *d* und/oder die Verpflichtungen *R,*
- die Antworten *D*;

wobei die Kontrolleinrichtung Folgendes umfasst:

- Rechenmittel, nachstehend bezeichnet als Rechenmittel der Kontrolleinrichtung,
- Vergleichsmittel, nachstehend bezeichnet als Rechenmittel der Kontrolleinrichtung,

so dass im Fall, dass die Kontrolleinrichtung über die Verpflichtungen *R,* die Anforderungen *d*, die Antworten *D* verfügt,

• • die Rechen- und Vergleichsmittel der Kontrolleinrichtung überprüfen, ob die Verpflichtungen *R,* die Anforderungen *d* und die Antworten *D* Beziehungen des Typs

$$R \equiv G_1{}^{d_1} \times G_2{}^{d_2} \times \ldots \times G_m{}^{d_m} \times D^v \bmod n$$

oder Beziehungen des Typs

$$R \equiv D^v \Big/ G_1{}^{d_1} \times G_2{}^{d_2} \times \ldots \times G_m{}^{d_m} \bmod n$$

genügen,

• • die Rechen- und Vergleichsmittel der Kontrolleinrichtung überprüfen, ob die Nachricht *M*, die Anforderungen *d*, die Verpflichtungen *R* der Hash-Funktion

$$d = h(Nachricht, R)$$

genügen;

im Fall, dass die Kontrolleinrichtung über die Anforderungen *d* und die Antworten *D* verfügt,

• • die Rechenmittel der Kontrolleinrichtung, ausgehend von jeder Anforderungen *d* und jeder Antwort *D*, Verpflichtungen *R'* berechnen, die Beziehungen des Typs

$$R' \equiv G_1{}^{d_1} \times G_2{}^{d_2} \times \ldots \times G_m{}^{d_m} \times D^v \bmod n$$

oder Beziehungen des Typs

$$R' \equiv D^v \big/ G_1{}^{d_1} \times G_2{}^{d_2} \times \ldots \times G_m{}^{d_m} \bmod n$$

genügen,

• • die Rechen- und Vergleichsmittel der Kontrolleinrichtung überprüfen, ob die Nachricht *M* und die Anforderungen *d* der Hash-Funktion

$$d = h(Nachricht, R')$$

genügen; und

im Fall, dass die Kontrolleinrichtung über die Verpflichtungen *R* und die Antworten *D* verfügt,

• • die Rechenmittel der Kontrolleinrichtung die Hash-Funktion anwenden und *d'* berechnen, derart, dass

$$d' = h(Nachricht, R),$$

• • die Rechen- und Vergleichsmittel der Kontrolleinrichtung überprüfen, ob die Verpflichtungen *R,* die Anforderungen *d'*und die Antworten *D* Beziehungen des Typs

$$R \equiv G_1{}^{d'_1} \times G_2{}^{d'_2} \times \ldots \times G_m{}^{d'_m} \times D^v \bmod n$$

oder Beziehungen des Typs

$$R \equiv D^v \big/ G_1{}^{d'_1} \times G_2{}^{d'_2} \times \ldots \times G_m{}^{d'_m} \bmod n$$

genügen.

Fig.1A

Fig.1B

Fig.1C

Fig.1D

Fig.2A

Fig.2B

Fig.3A

$g$ $ou$ $-g$

$G$

$\Delta_{i,j} = 1$

$\Delta_{i,j} = -1$

$G$

$g$

$-g$

Fig.3B

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 0311470 B1

**Littérature non-brevet citée dans la description**

• Graduate Texts in Mathematics. **Henri Cohen.** a Course in Computational Algebraic Number Theosy. Springer, 1993, vol. 138, 31-36